# EUROPEAN PATENT SPECIFICATION

(11) **EP 3 856 820 B1**
(45) Date of publication and mention of the grant of the patent: **18.11.2026**
(21) Application number: 19783848.5
(22) Date of filing: 24.09.2019
(51) Int. Cl.: C08G 64/18, C08G 64/34, C08G 64/42, C08G 65/26

(54) **POLYCARBONATE BLOCK COPOLYMERS AND METHODS THEREOF**
POLYCARBONATBLOCKCOPOLYMERE UND VERFAHREN DAFÜR
COPOLYMÈRES SÉQUENCÉS DE POLYCARBONATE ET PROCÉDÉS ASSOCIÉS

(30) Priority: 24.09.2018 US 201862735371 P; 17.07.2019 US 201962875232 P
(43) Date of publication of application: 04.08.2021
(73) Proprietor: SAUDI ARAMCO TECHNOLOGIES COMPANY, Dhahran 31311 (SA)
(72) Inventor: ALLEN, Scott D., Houston, Texas 77002 (US); DEBNATH, Dibyendu, Houston, Texas 77002 (US)
(74) Representative: Tostmann, Holger Carl
(86) International application number: PCT/US2019/052656
(87) International publication number: WO 2020/068796

(56) References cited:
- WO-A1-2008/136591
- WO-A1-2010/062703
- WO-A1-2016/064698
- COHEN C T ET AL: "Cobalt catalysts for the alternating copolymerization of propylene oxide and carbon dioxide: Combining high activity and selectivity", JOURNAL OF THE AMERICAN CHEMICAL SOCIETY,, vol. 127, 1 August 2005 (2005-08-01), pages 10869 - 10878, XP002535751, ISSN: 0002-7863, DOI: 10.1021/JA051744L

## Description

### BACKGROUND

Certain types of polycarbonate polyols have inherently high viscosity. One method for reducing viscosity is to initiate polymerization of such polyols with low viscosity polyether polyols. The resultant block copolymer polyols have a polyether core off of which polycarbonate is built. While this is an effective method for decreasing polycarbonate viscosity, it typically relies on the use of commercially available polyether polyol which becomes a large weight percentage of the final product. Furthermore, commercial polyether polyols typically contain anti-oxidants which can poison polycarbonate catalysts, therefore requiring the production of custom batches of polyether starters.

WO 2010/062703 A1 discloses amphiphilic block copolymers comprising an aliphatic polycarbonate chain coupled to a hydrophilic polymer. Such amphiphilic polymers may have the formula A-L-B, where A-is a polycarbonate or polyethercarbonate chain having from about 3 to about 500 repeating units, L is a linker moiety and -B is a hydrophilic oligomer having from about 4 to about 200 repeating units.

WO 2008/136591 A1 discloses a complex containing an onium salt and a central Lewis acidic metal having a high catalytic activity at a high temperature for the copolymerization of an epoxide and carbon dioxide to produce a high molecular weight polycarbonate.

WO 2016/064698 A1 discloses a method of producing a high primary hydroxyl group content and a high number average molecular weight polyol.

### SUMMARY OF THE INVENTION

The present disclosure encompasses the recognition that a useful approach to the preparation of polycarbonate-polyether triblock copolymers is one which avoids the use of commercial polyether starters. The present disclosure solves the problems associated with traditional preparation of polycarbonate-polyether block copolymers that can result in polymer compositions having a high proportion of secondary hydroxyl end groups. The present disclosure provides, among other things, polycarbonate-polyether triblock copolymers using a low molecular weight starter (e.g. dipropylene glycol) in the copolymerization of epoxide and carbon dioxide, followed by addition of a second catalyst to facilitate polyether synthesis. In this case, a triblock copolymer is still formed, but with a polycarbonate core (block A) and polyether built off the ends (block B) (i.e., B-A-B). In some embodiments, i) copolymerization of epoxide and carbon dioxide, and ii) polyether synthesis are carried out in discrete reaction pots (i.e. the polycarbonate product of the copolymerization of epoxide and carbon dioxide is first isolated). In some embodiments, the copolymerization of epoxide and carbon dioxide and polyether synthesis are carried out in a single reactor. In some embodiments, the polycarbonate core (i.e., block A) of said triblock copolymers is polypropylene carbonate (PPC). In some embodiments, the PPC core is end-blocked (i.e., block B) with polypropylene glycol (PPG).

A one-pot approach has the advantage of consuming residual, unreacted epoxides that would typically be sent to waste or recycled. Furthermore, methods provided herein result in a block copolymer with protection of the chain-ends of a polycarbonate polyol core, increasing its thermal stability by preventing the polycarbonate polyol from unzipping and generating cyclic carbonate by-products (by virtue of the polyether end-blocking for polycarbonate back-biting reactions). Even further, with careful consideration of which catalysts are used to facilitate polymerization, methods provided herein can yield polycarbonate end-blocked with polyether having increased primary hydroxyl end-group content relative to either a i) polycarbonate homopolymer or a ii) polyether end-blocked with polycarbonate. Such increased primary hydroxyl end-group content is useful for the production of, for example polyurethane materials. Even further, polycarbonate end-blocked with polyether triblock copolymer products resulting from methods disclosed herein may exhibit reduced viscosity, especially relative to polyether end-blocked with polycarbonate.

In some embodiments, the present disclosure relates to a method of making a triblock copolymer of the formula **B-A-B**. In some embodiments, **A** is a polycarbonate chain. In some embodiments, **B** is a polyether chain.

The present invention relates to a method of making block copolymer compositions of the formula **B-A-B**, comprising the steps of:
i) copolymerizing epoxide and carbon dioxide in the presence of a chain transfer agent and a first catalyst to provide a first polymer **A;** and
ii) homopolymerizing epoxide on the chain ends of the first polymer **A** by addition of a second catalyst to provide a second polymer, **B-A-B**,
wherein the second catalyst is a boron compound, an anionic reagent, a cationic reagent, an activated monomer reagent, an imidazole or a phosphazene reagent, a metal alkoxide, or a metallosalenate that catalyzes homopolymerization of epoxides.

The invention further relates to a block copolymer composition prepared by the method according to the invention comprising a structure of formula **P1:** 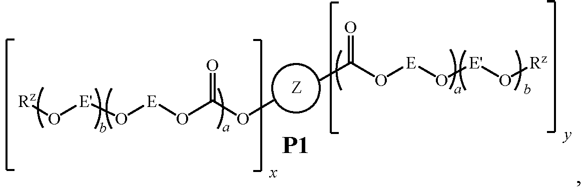 wherein: 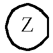
is a multivalent moiety selected from the group consisting of trivalent and tetravalent moieties;
-E- is, independently at each position in the polymer chain, 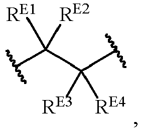
-E'- is, independently at each position in the polymer chain, 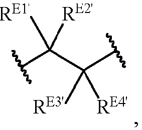
R^{E1}, R^{E2}, R^{E3}, and R^{E4} are at each occurrence in the polymer chain independently selected from the group consisting of hydrogen, fluorine, an optionally substituted C₁₋₄₀ aliphatic group, an optionally substituted C₁₋₂₀ heteroaliphatic group, and an optionally substituted aryl group, where any two or more of R^{E1}, R^{E2}, R^{E3}, and R^{E4} may optionally be taken together with intervening atoms to form one or more optionally substituted rings optionally containing one or more heteroatoms;
R^{E1'}, R^{E2'}, R^{E3'} and R^{E4'} are at each occurrence in the polymer chain independently selected from the group consisting of hydrogen, fluorine, an optionally substituted C₁₋₄₀ aliphatic group, an optionally substituted C₁₋₂₀ heteroaliphatic group, and an optionally substituted aryl group, where any two or more of R^{E1'}, R^{E2'}, R^{E3'} and R^{E4'} may optionally be taken together with intervening atoms to form one or more optionally substituted rings optionally containing one or more heteroatoms;
each R^{z} is independently selected from the group consisting of -H, -R^{z10}, -C(O)R^{z10}, - SO₂R^{z10}, -Si(R^{z10})₃, -Si(OR^{z10})₃, -SiR^{z10}(OR^{z10})₂, and -C(O)NH(R^{z10});
each R^{z10} is independently an optionally substituted moiety selected from the group consisting of C₁₋₂₀ aliphatic, C₁₋₁₂ heteroaliphatic, 6- to 14-membered aryl, and 5- to 14-membered heteroaryl;
*a* is, on average in the composition, about 2 to about 50;
*b* is, on average in the composition, about 2 to about 50; and
*x* and *y* are each independently an integer from 0 to 6 inclusive, where the sum of *x* and *y* is between 2 and 6.

### BRIEF DESCRIPTION OF THE DRAWINGS

Figures 1A and 1B. Exemplary ¹H NMR spectrum of a PPG end-blocked PPC triblock co-polymer. The efficiency of PPG end-blocking of PPC can be determined by ¹H-NMR. In such spectra, terminal methyl protons of PPC appear as a doublet peak; upon end-blocking with PPG the area under that peak reduces proportionately. Therefore, end-blocking efficiency can be calculated from the peak area reduction. Methyl protons from the neopentyl glycol starter do not change during the process of end-blocking and can be used as an internal standard.
Figure 2. PPG end-blocking efficiency of PPC using different catalysts. Highly Lewis acidic catalysts such as BF₃·OEt₂ and B(C₆F₅)₃ demonstrated effective PPG end-blocking of PPC.
Figures 3A and 3B. Exemplary ¹⁹F NMR spectrum of a PPG end-capped PPC triblock co-polymer further derivitized with (CF₃CO)₂O. Primary versus secondary hydroxyl end-group content (1°- vs. 2°-OH) can be calculated by derivitizing PPG end-blocked PPCs with (CF₃CO)₂O. (CF₃CO)₂O derivatized 1°-OH exhibits downfield ¹⁹F-NMR peaks relative to (CF₃CO)₂O derivatized 2° -OH. Further, because of the electron withdrawing carbonate linkage, PPC 1°-OH exhibits downfield ¹⁹F-NMR peaks relative to PPG 1°-OH.
Figure 4. End-blocking efficiency and primary hydroxyl end-group content selectivity for different catalysts.
Figure 5. End-blocking efficiency, primary hydroxyl end-group content, and OH# for different batches of PPG end-blocked PPC ((B-A-B) polymers A-F) synthesized using B(C₆F₅)₃ as a catalyst in the PPG homopolymerization step.
Figure 6. Comparative primary hydroxyl end-group content for PPG end-blocked PPC (B-A-B, corresponds to (B-A-B) A-F in Figure 5) versus a PPC end-blocked PPG (A-B-A).
Figures 7A and 7B. Gel permeation chromatograms of PPG end-blocked PPC samples (B-A-B) versus various reference samples including PPC homopolymer and PPC end-blocked PPG (A-B-A). Earlier retention time indicates higher molecular weight.
Figure 8A, 8B, and 8C. Viscosity of PPG end-blocked PPC samples (B-A-B) versus PPC end-blocked PPG reference samples (A-B-A) at different temperatures (25 °C and 75 °C).
Figure 9A and 9B. Thermal stability of PPG end-blocked PPC samples (B-A-B) versus a PPC end-blocked PPG reference sample (A-B-A) after being exposed to heat for different durations of time (1 day and 7 days at 120 °C). The Y-axis represents the amount of cyclic polycarbonate (cPC) after exposure to elevated temperatures and resultant from polymer degradation.
Figure 10. Isocyanate gel time of PPG end-blocked PPC samples (B-A-B) versus a PPC end-blocked PPG reference sample (A-B-A) using MDI.

### DETAILED DESCRIPTION OF CERTAIN EMBODIMENTS

The present invention relates to a method and to a block copolymer composition prepared by said method as set out in the appended set of claims.

### Definitions

Definitions of specific functional groups and chemical terms are described in more detail below. For purposes of this invention, the chemical elements are identified in accordance with the Periodic Table of the Elements, CAS version, Handbook of Chemistry and Physics, 75th Ed., inside cover, and specific functional groups are generally defined as described therein. Additionally, general principles of organic chemistry, as well as specific functional moieties and reactivity, are described in Organic Chemistry, Thomas Sorrell, University Science Books, Sausalito, 1999; Smith and March March's Advanced Organic Chemistry, 5th Edition, John Wiley & Sons, Inc., New York, 2001; Larock, Comprehensive Organic Transformations, VCH Publishers, Inc., New York, 1989; Carruthers, Some Modern Methods of Organic Synthesis, 3rd Edition, Cambridge University Press, Cambridge, 1987.

Certain polymers of the present invention can comprise one or more asymmetric centers, and thus can exist in various stereoisomeric forms, e.g., enantiomers and/or diastereomers. Thus, inventive polymers and compositions thereof may be in the form of an individual enantiomer, diastereomer or geometric isomer, or may be in the form of a mixture of stereoisomers. In certain embodiments, the polymers of the invention are enantiopure compounds. In certain embodiments, mixtures of enantiomers or diastereomers are provided.

Furthermore, certain polymers, as described herein may have one or more double bonds that can exist as either the Z or E isomer, unless otherwise indicated. The invention additionally encompasses the polymers as individual isomers substantially free of other isomers and alternatively, as mixtures of various isomers, e.g., racemic mixtures of enantiomers. In addition to the above-mentioned polymers *per se,* disclosed herein are also compositions comprising one or more polymers.

As used herein, the term "isomers" includes any and all geometric isomers and stereoisomers. For example, "isomers" include *cis-* and *trans-isomers, E-* and Z- isomers, Rand S-enantiomers, diastereomers, (D)-isomers, (L)-isomers, racemic mixtures thereof, and other mixtures thereof, as falling within the scope of the invention. For instance, a stereoisomer may, in some embodiments, be provided substantially free of one or more corresponding stereoisomers, and may also be referred to as "stereochemically enriched."

The term "epoxide", as used herein, refers to a substituted or unsubstituted oxirane. Such substituted oxiranes include monosubstituted oxiranes, disubstituted oxiranes, trisubstituted oxiranes, and tetrasubstituted oxiranes. Such epoxides may be further optionally substituted as defined herein. In certain embodiments, epoxides comprise a single oxirane moiety. In certain embodiments, epoxides comprise two or more oxirane moieties.

The term "polymer", as used herein, refers to a molecule of high relative molecular mass, the structure of which comprises the multiple repetition of units derived, actually or conceptually, from molecules of low relative molecular mass. In certain embodiments, a polymer is comprised of substantially alternating units derived from CO₂ and an epoxide (*e.g.*, poly(ethylene carbonate). In certain embodiments, a polymer is a copolymer, terpolymer, heteropolymer, block copolymer, or tapered heteropolymer incorporating two or more different epoxide monomers. With respect to the structural depiction of such higher polymers, the convention of showing enchainment of different monomer units or polymer blocks separated by a slash may be used herein: 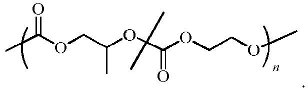 These structures are to be interpreted to encompass copolymers incorporating any ratio of the different monomer units depicted unless otherwise specified. This depiction is also meant to represent random, tapered, block copolymers, and combinations of any two or more of these and all of these are implied unless otherwise specified.

The term "multivalent", as used herein, refers to a moiety that is bound to two or more polymer blocks (e.g., a bivalent, trivalent, or tetravalent moiety. For example, a multivalent moiety can be bivalent, e.g.: 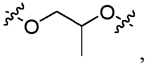 trivalent, e.g.: 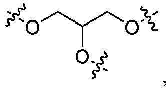 or tetravalent, e.g.:

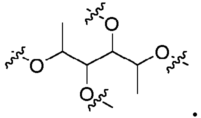

The terms "halo" and "halogen" as used herein refer to an atom selected from fluorine (fluoro, -F), chlorine (chloro, -Cl), bromine (bromo, -Br), and iodine (iodo, -I).

The term "aliphatic" or "aliphatic group", as used herein, denotes a hydrocarbon moiety that may be straight-chain (i.e., unbranched), branched, or cyclic (including fused, bridging, and spiro-fused polycyclic) and may be completely saturated or may contain one or more units of unsaturation, but which is not aromatic. Unless otherwise specified, aliphatic groups contain 1-40 carbon atoms. In certain embodiments, aliphatic groups contain 1-20 carbon atoms. In certain embodiments, aliphatic groups contain 2-20 carbon atoms. In certain embodiments, aliphatic groups contain 1-12 carbon atoms. In certain embodiments, aliphatic groups contain 1-8 carbon atoms. In certain embodiments, aliphatic groups contain 1-6 carbon atoms. In some embodiments, aliphatic groups contain 1-5 carbon atoms, in some embodiments, aliphatic groups contain 1-4 carbon atoms, in some embodiments aliphatic groups contain 1-3 carbon atoms, and in some embodiments aliphatic groups contain 1 or 2 carbon atoms. Suitable aliphatic groups include, but are not limited to, linear or branched, alkyl, alkenyl, and alkynyl groups, and hybrids thereof such as (cycloalkyl)alkyl, (cycloalkenyl)alkyl or (cycloalkyl)alkenyl.

The term "heteroaliphatic," as used herein, refers to aliphatic groups wherein one or more carbon atoms are independently replaced by one or more atoms selected from the group consisting of oxygen, sulfur, nitrogen, or phosphorus. In certain embodiments, one to six carbon atoms are independently replaced by one or more of oxygen, sulfur, nitrogen, or phosphorus. Heteroaliphatic groups may be substituted or unsubstituted, branched or unbranched, cyclic or acyclic, and include saturated, unsaturated, or partially unsaturated groups.

The term "unsaturated", as used herein, means that a moiety has one or more double or triple bonds.

The terms "cycloaliphatic", "carbocycle", or "carbocyclic", used alone or as part of a larger moiety, refer to a saturated or partially unsaturated cyclic aliphatic monocyclic or polycyclic ring system, as described herein, having from 3 to 12 members, wherein the aliphatic ring system is optionally substituted as defined below and described herein. Cycloaliphatic groups include, without limitation, cyclopropyl, cyclobutyl, cyclopentyl, cyclopentenyl, cyclohexyl, cyclohexenyl, cycloheptyl, cycloheptenyl, cyclooctyl, cyclooctenyl, norbornyl, adamantyl, and cyclooctadienyl. In some embodiments, a cycloaliphatic group has 3-6 carbons. The terms "cycloaliphatic", "carbocycle" or "carbocyclic" also include aliphatic rings that are fused to one or more aromatic or nonaromatic rings, such as decahydronaphthyl or tetrahydronaphthyl, where the radical or point of attachment is on the aliphatic ring.

The term "alkyl," as used herein, refers to saturated, straight- or branched-chain hydrocarbon radicals derived from an aliphatic moiety containing between one and six carbon atoms by removal of a single hydrogen atom. Unless otherwise specified, alkyl groups contain 1-12 carbon atoms. In certain embodiments, alkyl groups contain 1-8 carbon atoms. In certain embodiments, alkyl groups contain 1-6 carbon atoms. In some embodiments, alkyl groups contain 1-5 carbon atoms, in some embodiments, alkyl groups contain 1-4 carbon atoms, in some embodiments alkyl groups contain 1-3 carbon atoms, and in some embodiments alkyl groups contain 1-2 carbon atoms. Examples of alkyl radicals include, but are not limited to, methyl, ethyl, n-propyl, isopropyl, n-butyl, iso-butyl, sec-butyl, sec-pentyl, iso-pentyl, tert-butyl, n-pentyl, neopentyl, n-hexyl, sec-hexyl, n-heptyl, n-octyl, n-decyl, n-undecyl, dodecyl, and the like.

The term "alkenyl," as used herein, denotes a monovalent group derived from a straight- or branched-chain aliphatic moiety having at least one carbon-carbon double bond by the removal of a single hydrogen atom. Unless otherwise specified, alkenyl groups contain 2-12 carbon atoms. In certain embodiments, alkenyl groups contain 2-8 carbon atoms. In certain embodiments, alkenyl groups contain 2-6 carbon atoms. In some embodiments, alkenyl groups contain 2-5 carbon atoms, in some embodiments, alkenyl groups contain 2-4 carbon atoms, in some embodiments alkenyl groups contain 2-3 carbon atoms, and in some embodiments alkenyl groups contain 2 carbon atoms. Alkenyl groups include, for example, ethenyl, propenyl, butenyl, 1-methyl-2-buten-1-yl, and the like.

The term "alkynyl," as used herein, refers to a monovalent group derived from a straight- or branched-chain aliphatic moiety having at least one carbon-carbon triple bond by the removal of a single hydrogen atom. Unless otherwise specified, alkynyl groups contain 2-12 carbon atoms. In certain embodiments, alkynyl groups contain 2-8 carbon atoms. In certain embodiments, alkynyl groups contain 2-6 carbon atoms. In some embodiments, alkynyl groups contain 2-5 carbon atoms, in some embodiments, alkynyl groups contain 2-4 carbon atoms, in some embodiments alkynyl groups contain 2-3 carbon atoms, and in some embodiments alkynyl groups contain 2 carbon atoms. Representative alkynyl groups include, but are not limited to, ethynyl, 2-propynyl (propargyl), 1-propynyl, and the like.

The term "alkoxy", as used herein refers to an alkyl group, as previously defined, attached to the parent molecule through an oxygen atom. Examples of alkoxy, include but are not limited to, methoxy, ethoxy, propoxy, isopropoxy, n-butoxy, tert-butoxy, neopentoxy, and n-hexoxy.

The term "acyl", as used herein, refers to a carbonyl-containing functionality, e.g., *-* C(=O)R', wherein R' is hydrogen or an optionally substituted aliphatic, heteroaliphatic, heterocyclic, aryl, heteroaryl group, or is a substituted (e.g., with hydrogen or aliphatic, heteroaliphatic, aryl, or heteroaryl moieties) oxygen or nitrogen containing functionality (e.g., forming a carboxylic acid, ester, or amide functionality). The term "acyloxy", as used here, refers to an acyl group attached to the parent molecule through an oxygen atom.

The term "aryl" used alone or as part of a larger moiety as in "aralkyl", "aralkoxy", or "aryloxyalkyl", refers to monocyclic and polycyclic ring systems having a total of five to 20 ring members, wherein at least one ring in the system is aromatic and wherein each ring in the system contains three to twelve ring members. The term "aryl" may be used interchangeably with the term "aryl ring". In certain embodiments of the present invention, "aryl" refers to an aromatic ring system which includes, but is not limited to, phenyl, biphenyl, naphthyl, anthracyl and the like, which may bear one or more substituents. Also included within the scope of the term "aryl", as it is used herein, is a group in which an aromatic ring is fused to one or more additional rings, such as benzofuranyl, indanyl, phthalimidyl, naphthimidyl, phenantriidinyl, or tetrahydronaphthyl, and the like, where the radical or point of attachment is on the aryl ring. In certain embodiments, the terms "6- to 10-membered aryl" and "C₆₋₁₀ aryl" refer to a phenyl or an 8- to 10-membered polycyclic aryl ring.

The terms "heteroaryl" and "heteroar-", used alone or as part of a larger moiety, e.g., "heteroaralkyl", or "heteroaralkoxy", refer to groups having 5 to 14 ring atoms, preferably 5, 6, or 9 ring atoms; having 6, 10, or 14 π electrons shared in a cyclic array; and having, in addition to carbon atoms, from one to five heteroatoms. The term "heteroaryl" may be used interchangeably with the terms "heteroaryl ring" and "heteroaryl group", any of which terms include rings that are optionally substituted. The term "heteroatom" refers to nitrogen, oxygen, or sulfur, and includes any oxidized form of nitrogen or sulfur, and any quaternized form of a basic nitrogen. Heteroaryl groups include, without limitation, thienyl, furanyl, pyrrolyl, imidazolyl, pyrazolyl, triazolyl, tetrazolyl, oxazolyl, isoxazolyl, oxadiazolyl, thiazolyl, isothiazolyl, thiadiazolyl, pyridyl, pyridazinyl, pyrimidinyl, pyrazinyl, indolizinyl, purinyl, naphthyridinyl, benzofuranyl and pteridinyl. The terms "heteroaryl" and "heteroar-", as used herein, also include groups in which a heteroaryl ring is fused to one or more aryl, cycloaliphatic, or heterocyclyl rings, where the radical or point of attachment is on the heteroaryl ring. Nonlimiting examples include indolyl, isoindolyl, benzothienyl, benzofuranyl, dibenzofuranyl, indazolyl, benzimidazolyl, benzthiazolyl, quinolyl, isoquinolyl, cinnolinyl, phthalazinyl, quinazolinyl, quinoxalinyl, 4*H-*quinolizinyl, carbazolyl, acridinyl, phenazinyl, phenothiazinyl, phenoxazinyl, tetrahydroquinolinyl, tetrahydroisoquinolinyl, and pyrido[2,3-b]-1,4-oxazin-3(4H)-one. A heteroaryl group may be mono- or bicyclic. The term "heteroaralkyl" refers to an alkyl group substituted by a heteroaryl, wherein the alkyl and heteroaryl portions independently are optionally substituted. In certain embodiments, the term "5- to 10-membered heteroaryl" refers to a 5- to 6-membered heteroaryl ring having 1 to 3 heteroatoms independently selected from nitrogen, oxygen, or sulfur, or an 8-to 10-membered bicyclic heteroaryl ring having 1 to 4 heteroatoms independently selected from nitrogen, oxygen, or sulfur.

As used herein, the terms "heterocycle", "heterocyclyl", "heterocyclic radical", "heterocyclyl", "heterocyclyl ring", " "heterocyclic moiety" and "heterocyclic ring" are used interchangeably and refer to a stable 5- to 7-membered monocyclic or 7-14-membered polycyclic heterocyclic moiety that is either saturated or partially unsaturated, and having, in addition to carbon atoms, one or more, preferably one to four, heteroatoms, as defined above. When used in reference to a ring atom of a heterocycle, the term "nitrogen" includes a substituted nitrogen. As an example, in a saturated or partially unsaturated ring having 0-3 heteroatoms selected from oxygen, sulfur or nitrogen, the nitrogen may be N (as in 3,4-dihydro-2*H*-pyrrolyl), NH (as in pyrrolidinyl), or ⁺NR (as in *N*-substituted pyrrolidinyl). In some embodiments, the term "3- to 7-membered heterocyclic" refers to a 3- to 7-membered saturated or partially unsaturated monocyclic heterocyclic ring having 1 to 2 heteroatoms independently selected from nitrogen, oxygen, or sulfur. In some embodiments, the term "3- to 12-membered heterocyclic" refers to a 3- to 8-membered saturated or partially unsaturated monocyclic heterocyclic ring having 1 to 2 heteroatoms independently selected from nitrogen, oxygen, or sulfur, or a 7- to 12-membered saturated or partially unsaturated polycyclic heterocyclic ring having 1-3 heteroatoms independently selected from nitrogen, oxygen, or sulfur.

A heterocyclic ring can be attached to its pendant group at any heteroatom or carbon atom that results in a stable structure and any of the ring atoms can be optionally substituted. Examples of such saturated or partially unsaturated heterocyclic radicals include, without limitation, tetrahydrofuranyl, tetrahydrothienyl, pyrrolidinyl, pyrrolidonyl, piperidinyl, pyrrolinyl, tetrahydroquinolinyl, tetrahydroisoquinolinyl, decahydroquinolinyl, oxazolidinyl, piperazinyl, dioxanyl, dioxolanyl, diazepinyl, oxazepinyl, thiazepinyl, morpholinyl, and quinuclidinyl. Heterocyclic rings also include groups in which a heterocyclyl ring is fused to one or more aryl, heteroaryl, or cycloaliphatic rings, such as indolinyl, 3*H*-indolyl, chromanyl, phenanthridinyl, or tetrahydroquinolinyl, where the radical or point of attachment is on the heterocyclyl ring. A heterocyclyl group may be mono- or bicyclic. The term "heterocyclylalkyl" refers to an alkyl group substituted by a heterocyclyl, wherein the alkyl and heterocyclyl portions independently are optionally substituted.

As used herein, the term "partially unsaturated" refers to a ring moiety that includes at least one double or triple bond. The term "partially unsaturated" is intended to encompass rings having multiple sites of unsaturation, but is not intended to include aryl or heteroaryl moieties, as herein defined.

As described herein, compounds of the invention may contain "optionally substituted" moieties. In general, the term "substituted", whether preceded by the term "optionally" or not, means that one or more hydrogens of the designated moiety are replaced with a suitable substituent. Unless otherwise indicated, an "optionally substituted" group may have a suitable substituent at each substitutable position of the group, and when more than one position in any given structure may be substituted with more than one substituent selected from a specified group, the substituent may be either the same or different at every position. Combinations of substituents envisioned by this invention are preferably those that result in the formation of stable or chemically feasible compounds. The term "stable", as used herein, refers to compounds that are not substantially altered when subjected to conditions to allow for their production, detection, and, in certain embodiments, their recovery, purification, and use for one or more of the purposes disclosed herein.

Suitable monovalent substituents on a substitutable carbon atom of an "optionally substituted" group are independently halogen; -(CH₂)₀₋₄R°; -(CH₂)₀₋ₐOR°; -O-(CH₂)₀₋₄C(O)OR°; -(CH₂)₀₋₄CH(OR°)₂; -(CH₂)₀₋₄SR°; -(CH₂)₀₋₄Ph, which may be substituted with R°; -(CH₂)₀₋₄O(CH₂)₀₋₁Ph which may be substituted with R°; -CH=CHPh, which may be substituted with R°; -NO₂; -CN; -N₃; -(CH₂)₀₋₄N(R°)₂; -(CH₂)₀₋₄N(R°)C(O)R°; -N(R°)C(S)R°; -(CH₂)₀₋₄N(R°)C(O)NR°₂, -N(R°)C(S)NR°₂; -(CH₂)₀₋₄N(R°)C(O)OR°; -N(R°)N(R°)C(O)R°; - N(R°)N(R°)C(O)NR°₂; -N(R°)N(R°)C(O)OR°; -(CH₂)₀₋₄C(O)R°; -C(S)R°; -(CH₂)₀₋₄C(O)OR°; -(CH₂)₀-4C(O)N(R°)₂; -(CH₂)₀₋₄C(O)SR°; -(CH₂)₀₋₄C(O)OSiR°₃; -(CH₂)₀₋₄OC(O)R°; - OC(O)(CH₂)₀₋₄SR°; -SC(S)SR°; -(CH₂)₀₋₄SC(O)R°; -(CH₂)₀₋₄C(O)NR°₂; -C(S)NR°₂; - C(S)SR°;-(CH₂)₀₋₄OC(O)NR°₂; -C(O)N(OR°)R°; -C(O)C(O)R°; -C(O)CH₂C(O)R°; - C(NOR°)R°; -(CH₂)₀₋₄SSR°; -(CH₂)₀₋₄S(O)₂R°; -(CH₂)₀₋₄S(O)₂OR°; -(CH₂)₀₋₄OS(O)₂R°; - S(O)₂NR°₂; -(CH₂)₀₋₄S(O)R°; -N(R°)S(O)₂NR°₂; -N(R°)S(O)₂R°; -N(OR°)R°; -C(NH)NR°₂; - P(O)₂R°; -P(O)R°₂; -OP(O)R°₂; -OP(O)(OR°)₂; SiR°₃; -(C₁₋₄ straight or branched alkylene)ON(R°)₂; or -(C₁₋₄ straight or branched alkylene)C(O)O-N(R°)₂, wherein each R° may be substituted as defined below and is independently hydrogen, C₁₋₈ aliphatic, -CH₂Ph, -O(CH₂)₀₋₁Ph, or a 5-6-membered saturated, partially unsaturated, or aryl ring having 0-4 heteroatoms independently selected from nitrogen, oxygen, or sulfur, or, notwithstanding the definition above, two independent occurrences of R°, taken together with their intervening atom(s), form a 3-12-membered saturated, partially unsaturated, or aryl mono- or polycyclic ring having 0-4 heteroatoms independently selected from nitrogen, oxygen, or sulfur, which may be substituted as defined below.

Suitable monovalent substituents on R° (or the ring formed by taking two independent occurrences of R° together with their intervening atoms), are independently halogen, (CH₂)₀₋₂R^{•}, -(haloR^{•}), -(CH₂)₀₋₂OH, -(CH₂)₀₋₂OR^{•}, -(CH₂)₀₋₂CH(OR^{•})₂; -O(haloR^{•}), -CN, -N₃, -(CH₂)₀₋₂C(O)R^{•}, -(CH₂)₀₋₂C(O)OH, -(CH₂)₀₋₂C(O)OR^{•}, -(CH₂)₀₋₄C(O)N(R°)₂; -(CH₂)₀₋₂SR^{•}, -(CH₂)₀₋₂SH, -(CH₂)₀₋₂NH₂, -(CH₂)₀₋₂NHR^{•}, -(CH₂)₀₋₂NR^{•}₂, -NO₂, -SiR^{•}₃, -OSiR^{•}₃, -C(O)SR^{•}, -(C₁₋₄ straight or branched alkylene)C(O)OR^{•}, or -SSR^{•} wherein each R^{•} is unsubstituted or where preceded by "halo" is substituted only with one or more halogens, and is independently selected from C₁₋₄ aliphatic, -CH₂Ph, -O(CH₂)₀₋₁Ph, or a 5-6-membered saturated, partially unsaturated, or aryl ring having 0-4 heteroatoms independently selected from nitrogen, oxygen, or sulfur. Suitable divalent substituents on a saturated carbon atom of R° include =O and =S.

Suitable divalent substituents on a saturated carbon atom of an "optionally substituted" group include the following: =O, =S, =NNR*₂, =NNHC(O)R*, =NNHC(O)OR*, =NNHS(O)₂R*, =NR*, =NOR*, -O(C(R*₂))₂₋₃O-, or -S(C(R*₂))₂₋₃S-, wherein each independent occurrence of R* is selected from hydrogen, C₁₋₆ aliphatic which may be substituted as defined below, or an unsubstituted 5-6-membered saturated, partially unsaturated, or aryl ring having 0-4 heteroatoms independently selected from nitrogen, oxygen, or sulfur. Suitable divalent substituents that are bound to vicinal substitutable carbons of an "optionally substituted" group include: -O(CR*₂)₂₋₃O-, wherein each independent occurrence of R* is selected from hydrogen, C₁₋₆ aliphatic which may be substituted as defined below, or an unsubstituted 5-6-membered saturated, partially unsaturated, or aryl ring having 0-4 heteroatoms independently selected from nitrogen, oxygen, or sulfur.

Suitable substituents on the aliphatic group of R* include halogen, -R^{•}, -(haloR^{•}), -OH, - OR^{•}, -O(haloR^{•}), -CN, -C(O)OH, -C(O)OR^{•}, -NH₂, -NHR^{•}, -NR^{•}₂, or -NO₂, wherein each R^{•} is unsubstituted or where preceded by "halo" is substituted only with one or more halogens, and is independently C₁₋₄ aliphatic, -CH₂Ph, -O(CH₂)₀₋₁Ph, or a 5-6-membered saturated, partially unsaturated, or aryl ring having 0-4 heteroatoms independently selected from nitrogen, oxygen, or sulfur.

Suitable substituents on a substitutable nitrogen of an "optionally substituted" group include -R^{†}, -NR^{†}₂, -C(O)R^{†}, -C(O)OR^{†}, -C(O)C(O)R^{†}, -C(O)CH₂C(O)R^{†}, -S(O)₂R^{†}, - S(O)₂NR^{†}₂, -C(S)NR^{†}₂, -C(NH)NR^{†}₂, or -N(R^{†})S(O)₂R^{†}; wherein each R^{†} is independently hydrogen, C₁₋₆ aliphatic which may be substituted as defined below, unsubstituted -OPh, or an unsubstituted 5-6-membered saturated, partially unsaturated, or aryl ring having 0-4 heteroatoms independently selected from nitrogen, oxygen, or sulfur, or, notwithstanding the definition above, two independent occurrences of R^{†}, taken together with their intervening atom(s) form an unsubstituted 3-12-membered saturated, partially unsaturated, or aryl mono- or bicyclic ring having 0-4 heteroatoms independently selected from nitrogen, oxygen, or sulfur.

Suitable substituents on the aliphatic group of R^{†} are independently halogen, -R^{•}, - (haloR^{•}), -OH, -OR^{•}, -O(haloR^{•}), -CN, -C(O)OH, -C(O)OR^{•}, -NH₂, -NHR^{•}, -NR^{•}₂, or - NO₂, wherein each R^{•} is unsubstituted or where preceded by "halo" is substituted only with one or more halogens, and is independently C₁₋₄ aliphatic, -CH₂Ph, -O(CH₂)₀₋₁Ph, or a 5-6-membered saturated, partially unsaturated, or aryl ring having 0-4 heteroatoms independently selected from nitrogen, oxygen, or sulfur.

When substituents are described herein, the term "radical" or "optionally substituted radical" is sometimes used. In this context, "radical" means a moiety or functional group having an available position for attachment to the structure on which the substituent is bound. In general the point of attachment would bear a hydrogen atom if the substituent were an independent neutral molecule rather than a substituent. The terms "radical" or "optionally-substituted radical" in this context are thus interchangeable with "group" or "optionally-substituted group".

As used herein, the "term head-to-tail" or "HT", refers to the regiochemistry of adjacent repeating units in a polymer chain, wherein a repeating unit is an enchained diad of an epoxide and a carbon dioxide. For example, in the context of poly(propylene carbonate) (PPC), the term head-to-tail is based on the three regiochemical possibilities depicted below:

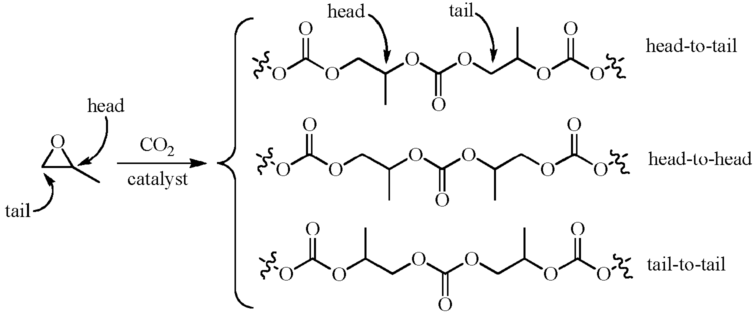

The term head-to-tail ratio (H:T) refers to the proportion of head-to-tail linkages to the sum of all other regiochemical possibilities. With respect to the depiction of polymer structures, while a specific regiochemical orientation of monomer units may be shown in the representations of polymer structures herein, this is not intended to limit the polymer structures to the regiochemical arrangement shown but is to be interpreted to encompass all regiochemical arrangements including that depicted, the opposite regiochemistry, random mixtures, isotactic materials, syndiotactic materials, racemic materials, and/or enantioenriched materials and combinations of any of these unless otherwise specified.

As used herein the term "alkoxylated" means that one or more functional groups on a molecule (usually the functional group is an alcohol, amine, or carboxylic acid, but is not strictly limited to these) has appended to it a hydroxy-terminated alkyl chain. Alkoxylated compounds may comprise a single alkyl group or they may be oligomeric moieties such as hydroxyl-terminated polyethers. Alkoxylated materials can be derived from the parent compounds by treatment of the functional groups with epoxides.

Unless otherwise specified, "a," "an," "the," and "at least one" are used interchangeably and mean one or more than one.

### Methods

### Triblock Copolymers

In some embodiments, the present disclosure relates to a method of making a triblock copolymer of the formula **B-A-B**. In some embodiments, **A** is an oligomer selected from a polycarbonate or polyethercarbonate chain. In some embodiments, **A** is a polycarbonate chain. In some embodiments, **A** is a polyethercarbonate chain. In some embodiments, **B** is a hydrophilic oligomer. In some embodiments, **B** is a polyether chain.

It is understood that, while "triblock copolymers" are referred to generally herein, such "triblock" and other embodiments of the present disclosure are intended to encompass block copolymers generally, which are not limited to B-A-B (i.e., a copolymer having three "blocks"), but instead, depending upon the valency of an A "block", are intended to encompass tri-, tetra-, penta-, hexa-, and hepta-block copolymers, for example:

| | | | | |
|---|---|---|---|---|
| B-A-B | 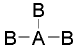 | 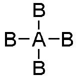 | 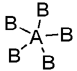 | 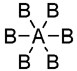 |
| **Triblock** | **Tetrablock** | **Pentablock** | **Hexablock** | **Heptablock** |

Moreover, the "triblock copolymers" referred to herein can also refer to block copolymers such as repeating block copolymers (e.g., a B-A-B-A) or block copolymers having multiple types of blocks (e.g., A-B-C, or A-B-A-B-C).

The present invention relates to a method of making triblock copolymer compositions of the formula **B-A-B**, comprising the steps of:
i) copolymerizing epoxide and carbon dioxide in the presence of a chain transfer agent and a first catalyst to provide a first polymer **A;** and
ii) homopolymerizing epoxide on the chain ends of the first polymer **A** by addition of a second catalyst to provide a second polymer, **B-A-B**, wherein the second catalyst is a boron compound, an anionic reagent, a cationic reagent, an activated monomer reagent, an imidazole or a phosphazene reagent, a metal alkoxide, or a metallosalenate that catalyzes homopolymerization of epoxides.

It is understood that the terms "copolymerizing epoxide" and "homopolymerizing epoxide" are intended to refer to "copolymerizing a first epoxide" and "homopolymerizing a second epoxide" in each instance referred to herein. In some embodiments, a first epoxide and a second epoxide are the same. In some embodiments, a first epoxide and a second epoxide are different. In some embodiments, a first epoxide is a composition comprising one or more epoxides. In some embodiments, a second epoxide is a composition comprising one or more epoxides.

In some embodiments, the step of copolymerizing epoxide and carbon dioxide in the presence of a chain transfer agent and a first catalyst to create a first polymer **A,** incorporates at least one type of epoxide into the first polymer. In some embodiments, the step of copolymerizing epoxide and carbon dioxide in the presence of a chain transfer agent and a first catalyst to create a first polymer **A,** incorporates at least two types of epoxide into the first polymer. In some embodiments, the step of copolymerizing epoxide and carbon dioxide in the presence of a chain transfer agent and a first catalyst to create a first polymer **A,** incorporates at least three types of epoxide into the first polymer.

In some embodiments, the step of copolymerizing epoxide and carbon dioxide in the presence of a chain transfer agent and a first catalyst to create a first polymer **A,** incorporates one type of epoxide into the first polymer. In some embodiments, the step of copolymerizing epoxide and carbon dioxide in the presence of a chain transfer agent and a first catalyst to create a first polymer **A,** incorporates two types of epoxide into the first polymer. In some embodiments, the step of copolymerizing epoxide and carbon dioxide in the presence of a chain transfer agent and a first catalyst to create a first polymer **A,** incorporates three types of epoxide into the first polymer.

In some embodiments, the step of copolymerizing epoxide and carbon dioxide in the presence of a chain transfer agent and a first catalyst to create a first polymer **A,** incorporates epoxide selected from the group consisting of: ethylene oxide, propylene oxide, 1,2-butylene oxide, 1,2-hexylene oxide, oxides of higher alpha olefins (e.g. C₆₋₄₀ alpha olefins), butadiene monoepoxide, styrene oxide, epichlorohydrin, ethers or esters of glycidol, cyclopentene oxide, cyclohexene oxide, 3-vinyl cyclohexene oxide, 3-ethyl cyclohexene oxide, and combinations of any two or more of these.

In some embodiments, **A** is a polycarbonate chain. In some embodiments, a polycarbonate chain, **A,** is characterized in that **A** comprises greater than about 80%, greater than about 90%, greater than about 95%, greater than about 98%, or greater than about 99% carbonate linkages, relative to the total number of monomer linkages formed during copolymerization of **A** (i.e., exclusive of a chain transfer agent), as determined by an appropriate analytical technique, for example, ¹H or ¹³C NMR spectroscopy. In some embodiments, **A** comprises essentially no ether linkages.

In some embodiments, **A** is an aliphatic polycarbonate chain. In some embodiments, an aliphatic polycarbonate is a copolymer of an optionally substituted epoxide and carbon dioxide. In some embodiments, the polycarbonate is selected from the group consisting of: poly(ethylene carbonate), poly(propylene carbonate), poly(butylene carbonate), poly(glycidylether carbonate), poly(chloromethylethylene carbonate), poly(cyclopentene carbonate), poly(cyclohexene carbonate), poly(3-vinyl cyclohexene carbonate), and random-, block-, or tapered-copolymers of any two or more of the above.

In some embodiments, polymer **A** is poly(propylene carbonate). In some embodiments, polymer **A** is poly(ethylene carbonate). In some embodiments, polymer **A** is poly(chloromethylethylene carbonate). In some embodiments, polymer **A** is poly(butylene carbonate). In some embodiments, polymer **A** is a poly(glycidyl ether carbonate). In some embodiments, polymer **A** is a poly(glycidyl ester carbonate). In some embodiments, polymer **A** is a random copolymer comprising poly(propylene carbonate) and poly(ethylene carbonate). In some embodiments, polymer **A** is a random copolymer comprising poly(propylene carbonate) and poly(n-butylene carbonate). In some embodiments, polymer **A** is a random copolymer comprising poly(propylene carbonate) and a polycarbonate derived from the epoxide of a C₆₋₃₀ alpha olefin.

In some embodiments, a polymer chain **A** comprises about 2 to about 500 repeating units, wherein a repeating unit is an enchained diad of an epoxide and a carbon dioxide. In some embodiments, a polymer chain comprises about 2 to about 50 repeating units. In some embodiments, a polymer chain comprises about 2 to about 20 repeating units. In some embodiments, a polymer chain comprises about 5 to about 15 repeating units. In some embodiments, a polymer chain comprises about 10 to about 15 repeating units. In some embodiments, a polymer chain comprises about 20 to about 50 repeating units.

In some embodiments, a polymer chain **A** is a polyether polycarbonate copolymer. In some embodiments, a polymer chain **A** is characterized in that the proportion of ether linkages in a polyether polycarbonate chain **A** ranges from about 0.1% to about 50%, as is determined by an appropriate analytical technique, for example, ¹H or ¹³C NMR spectroscopy. In some embodiments, the proportion of ether linkages in a polyether polycarbonate chain **A** ranges from about 0.1% to about 45%. In some embodiments, the proportion of ether linkages in a polyether polycarbonate chain **A** ranges from about 0.1% to about 40%. In some embodiments, the proportion of ether linkages in a polyether polycarbonate chain **A** ranges from about 0.1% to about 35%. In some embodiments, the proportion of ether linkages in a polyether polycarbonate chain **A** ranges from about 0.1% to about 30%. In some embodiments, the proportion of ether linkages in a polyether polycarbonate chain **A** ranges from about 0.1% to about 25%. In some embodiments, the proportion of ether linkages in a polyether polycarbonate chain **A** ranges from about 0.1% to about 20%. In some embodiments, the proportion of ether linkages in a polyether polycarbonate chain **A** ranges from about 0.1% to about 15%. In some embodiments, the proportion of ether linkages in a polyether polycarbonate chain **A** ranges from about 0.1% to about 10%. In some embodiments, the proportion of ether linkages in a polyether polycarbonate chain **A** ranges from about 0.1% to about 5%. In some embodiments, the proportion of ether linkages in a polyether polycarbonate chain **A** ranges from about 0.1% to about 2%. In some embodiments, a polymer chain **A** comprises essentially no ether linkages.

In some embodiments, the step of homopolymerizing epoxide on the chain ends of the first polymer **A** by addition of a second catalyst to provide a second polymer, **B-A-B**, incorporates epoxide selected from the group consisting of: ethylene oxide, propylene oxide, 1,2-butylene oxide, 1,2-hexylene oxide, oxides of higher alpha olefins (e.g. C₆₋₄₀ alpha olefins), butadiene monoepoxide, styrene oxide, epichlorohydrin, ethers or esters of glycidol, cyclopentene oxide, cyclohexene oxide, 3-vinyl cyclohexene oxide, 3-ethyl cyclohexene oxide, and combinations of any two or more of these.

In some embodiments, **B** is a polyether chain. In some embodiments, **B** is selected from the group consisting of polyoxymethylene, poly(ethylene oxide), poly(propylene oxide), poly(butylene oxide), poly(glycidylether oxide), poly(chloromethylethylene oxide), poly(cyclopentene oxide), poly(cyclohexene oxide), poly(3-vinyl cyclohexene oxide), and block, tapered, or random copolymers of any two or more of the above. In some embodiments, **B** is polyoxymethylene. In some embodiments, **B** is poly(ethylene oxide). In some embodiments, **B** is poly(propylene oxide).

In some embodiments, **B** comprises about 2 to about 500 repeating units, wherein a repeating unit is an enchained diad of an epoxide. In some embodiments, **B** comprises about 2 to about 50 repeating units. In some embodiments, **B** comprises about 2 to about 20 repeating units. In some embodiments, **B** comprises about 5 to about 15 repeating units. In some embodiments, **B** comprises about 10 to about 15 repeating units. In some embodiments, **B** comprises about 10 to about 20 repeating units. In some embodiments, **B** comprises about 10 to about 50 repeating units. In some embodiments, **B** comprises about 20 to about 50 repeating units. In some embodiments, **B** comprises less than 100 repeating units.

In some embodiments, a second polymer, **B-A-B**, comprises chain ends bearing hydroxyl groups. In some embodiments, a second polymer, **B-A-B**, can be modified at a chain end to yield different functional groups using methods, techniques, and/or reagents known to a person skilled in the art. In some embodiments, a second polymer, **B-A-B**, can be modified at a chain end to yield an ether functional group at a chain end. In some embodiments, a second polymer, **B-A-B**, can be modified at a chain end to yield an ester functional group at a chain end (e.g., via esterification). In some embodiments, a second polymer, **B-A-B**, can be modified at a chain end to yield a sulfonate functional group at a chain end. In some embodiments, a second polymer, **B-A-B,** can be modified at a chain end to yield a silyl ether functional group at a chain end (e.g., via protection of a hydroxyl group with a silyl-based group). In some embodiments, a second polymer, **B-A-B**, can be modified at a chain end to yield a carbamate functional group at a chain end (e.g., via reaction with an isocyanate).

In some embodiments, a triblock copolymer composition provided by such methods comprises a structure of formula **P1:** 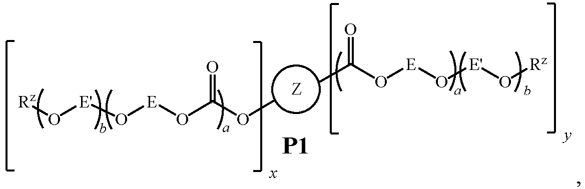 wherein each of 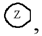 *x, y,* -E-, -E'-, *a, b,* and R^{z} is as defined above and described in classes and subclasses herein, both singly and in combination. In further embodiments, a triblock copolymer composition provided by such methods comprises a structure of formula **P2** to **P8,** which are described herein.

In some embodiments, the step of copolymerizing epoxide and carbon dioxide in the presence of a chain transfer agent and a first catalyst to create a first polymer **A,** is not quenched until addition of the second catalyst.

In some embodiments, the step of copolymerizing epoxide and carbon dioxide in the presence of a chain transfer agent and a first catalyst provide a first polymer **A** in a first reaction. In some embodiments, a first reaction is quenched prior to the step of homopolymerizing epoxide on the chain ends of the first polymer **A** with a second catalyst to provide a second polymer, **B-A-B** (i.e., the first reaction is quenched prior to homopolymerization step ii).

In some embodiments, an epoxide used in the step of homopolymerizing on the chain ends of the first polymer **A** is or comprises residual epoxide from the step of copolymerizing epoxide and carbon dioxide. That is, in some embodiments, a first epoxide used in the step of homopolymerizing a first epoxide, and a second epoxide in the step of copolymerizing a second epoxide is the same epoxide (i.e., the first epoxide and the second epoxide are the same), with no additional first or second epoxide added.

In some embodiments, the step of copolymerizing epoxide and carbon dioxide in the presence of a chain transfer agent and a first catalyst to create a first polymer **A,** and the step of homopolymerizing epoxide on the chain ends of the first polymer **A** by addition of a second catalyst are accomplished in the same reactor.

In some embodiments, the step of copolymerizing epoxide and carbon dioxide is performed at a temperature of between about 0 °C to about 80 °C. In some embodiments, the step of copolymerizing epoxide and carbon dioxide is performed at a temperature of between about 10 °C to about 80 °C. In some embodiments, the step of copolymerizing epoxide and carbon dioxide is performed at a temperature of between about 20 °C to about 80 °C. In some embodiments, the step of copolymerizing epoxide and carbon dioxide is performed at a temperature of between about 20 °C to about 60 °C. In some embodiments, the step of copolymerizing epoxide and carbon dioxide is performed at a temperature of between about 20 °C to about 50 °C. In some embodiments, the step of copolymerizing epoxide and carbon dioxide is performed at a temperature of between about 20 °C to about 40 °C. In some embodiments, the step of copolymerizing epoxide and carbon dioxide is performed at a temperature of between about 20 °C to about 30 °C. In some embodiments, the step of copolymerizing epoxide and carbon dioxide is performed at a temperature of between about 25 °C to about 35 °C. In some embodiments, the step of copolymerizing epoxide and carbon dioxide is performed at a temperature of between about 30 °C to about 40 °C.

In some embodiments, the step of homopolymerizing epoxide is performed at a temperature of between about 0 °C to about 180 °C. In some embodiments, the step of homopolymerizing epoxide is performed at a temperature of between about 10 °C to about 160 °C. In some embodiments, the step of homopolymerizing epoxide is performed at a temperature of between about 20 °C to about 80 °C. In some embodiments, the step of homopolymerizing epoxide is performed at a temperature of between about 20 °C to about 60 °C. In some embodiments, the step of homopolymerizing epoxide is performed at a temperature of between about 20 °C to about 50 °C. In some embodiments, the step of homopolymerizing epoxide is performed at a temperature of between about 20 °C to about 40 °C. In some embodiments, the step of homopolymerizing epoxide is performed at a temperature of between about 20 °C to about 30°C. In some embodiments, the step of homopolymerizing epoxide is performed at a temperature of between about 25 °C to about 35 °C. In some embodiments, the step of homopolymerizing epoxide is performed at a temperature of between about 30 °C to about 40 °C.

In some embodiments, carbon dioxide (CO₂) in the copolymerizing step is present at a pressure of between about 30 pounds-force per square inch (psi) and about 800 psi. In some embodiments, CO₂ is present at a pressure of between about 30 psi and about 500 psi. In some embodiments, CO₂ is present at a pressure of between about 30 psi and about 400 psi. In some embodiments, CO₂ is present at a pressure of between about 30 psi and about 300 psi. In some embodiments, CO₂ is present at a pressure of between about 30 psi and about 200 psi. In some embodiments, CO₂ is present at a pressure of between about 30 psi and about 100 psi. In some embodiments, CO₂ is present at a pressure of between about 30 psi and about 80 psi. In some embodiments, CO₂ is present at a pressure of between about 30 psi and about 50 psi. In some embodiments, the CO₂ is supercritical.

In some embodiments, a triblock copolymer, **B-A-B**, is characterized in that it has a number average molecular weight (M*ₙ*) in the range of about 500 g/mol to about 250,000 g/mol, as is determined by an appropriate analytical technique, for example, gel permeation chromatography (GPC). In some embodiments, a triblock copolymer composition has a M*ₙ* in the range of about 500 g/mol to about 200,000 g/mol. In some embodiments, a triblock copolymer composition has a M*ₙ* in the range of about 500 g/mol to about 150,000 g/mol. In some embodiments, a triblock copolymer composition has a M*ₙ* in the range of about 500 g/mol to about 100,000 g/mol. In some embodiments, a triblock copolymer composition has a M*ₙ* in the range of about 500 g/mol to about 75,000 g/mol. In some embodiments, a triblock copolymer composition has a M*ₙ* in the range of about 500 g/mol to about 50,000 g/mol. In some embodiments, a triblock copolymer composition has a M*ₙ* in the range of about 500 g/mol to about 25,000 g/mol. In some embodiments, a triblock copolymer composition has a M*ₙ* in the range of about 500 g/mol to about 10,000 g/mol. In some embodiments, a triblock copolymer composition has a M*ₙ* in the range of about 500 g/mol to about 5,000 g/mol. In some embodiments, a triblock copolymer composition has a M*ₙ* in the range of about 500 g/mol to about 4,000 g/mol. In some embodiments, a triblock copolymer composition has a M*ₙ* in the range of about 500 g/mol to about 3,000 g/mol. In some embodiments, a triblock copolymer composition has a M*ₙ* in the range of about 500 g/mol to about 2,000 g/mol.

In some embodiments, a triblock copolymer, **B-A-B**, is characterized in that it has a M*ₙ* less than about 250,000 g/mol , as is determined by an appropriate analytical technique, for example, gel permeation chromatography (GPC). In some embodiments, a triblock copolymer composition has a M*ₙ* less than about 200,000 g/mol. In some embodiments, a triblock copolymer composition has a M*ₙ* less than about 150,000 g/mol. In some embodiments, a triblock copolymer composition has a M*ₙ* less than about 100,000 g/mol. In some embodiments, a triblock copolymer composition has a M*ₙ* less than about 75,000 g/mol. In some embodiments, a triblock copolymer composition has a M*ₙ* less than about 50,000 g/mol. In some embodiments, a triblock copolymer composition has a M*ₙ* less than about 25,000 g/mol. In some embodiments, a triblock copolymer composition has a M*ₙ* less than about 10,000 g/mol. In some embodiments, a triblock copolymer composition has a M*ₙ* less than about 5,000 g/mol. In some embodiments, a triblock copolymer composition has a M*ₙ* less than about 4,000 g/mol. In some embodiments, a triblock copolymer composition has a M*ₙ* less than about 3,000 g/mol. In some embodiments, a triblock copolymer composition has a M*ₙ* less than about 2,000 g/mol.

In some embodiments, a triblock copolymer, **B-A-B**, is characterized in that it has a narrow molecular weight distribution. Molecular weight distribution can be indicated by the polydispersity indices (PDI) of the triblock copolymer composition. In some embodiments, a triblock copolymer composition has a PDI less than 2. In some embodiments, a triblock copolymer composition has a PDI less than 1.8. In some embodiments, a triblock copolymer composition has a PDI less than 1.5. In some embodiments, a triblock copolymer composition has a PDI less than 1.4. In some embodiments, a triblock copolymer composition has a PDI between about 1.0 and 1.2. In some embodiments, a triblock copolymer composition has a PDI between about 1.0 and 1.1.

In some embodiments, a triblock copolymer, **B-A-B**, is characterized in that it has a viscosity less than 600 centipoise at 75 °C. In some embodiments, a triblock copolymer composition has a viscosity less than 550 centipoise at 75 °C. In some embodiments, a triblock copolymer composition has a viscosity less than 500 centipoise at 75 °C. In some embodiments, a triblock copolymer composition has a viscosity less than 450 centipoise at 75 °C. In some embodiments, a triblock copolymer composition has a viscosity less than 400 centipoise at 75 °C. In some embodiments, a triblock copolymer composition has a viscosity less than 350 centipoise at 75 °C. In some embodiments, a triblock copolymer composition has a viscosity between 15,000-25,000 centipoise at 75 °C. In some embodiments, a triblock copolymer composition has a viscosity between 17,500-27,500 centipoise at 75 °C. In some embodiments, a triblock copolymer composition has a viscosity between 20,000-30,000 centipoise at 75 °C.

In some embodiments, a triblock copolymer, **B-A-B**, is characterized in that it has a viscosity less than 20,000 centipoise at 50 °C. In some embodiments, a triblock copolymer composition has a viscosity less than 10,000 centipoise at 50 °C. In some embodiments, a triblock copolymer composition has a viscosity less than 7,500 centipoise at 50 °C. In some embodiments, a triblock copolymer composition has a viscosity less than 5,000 centipoise at 50 °C. In some embodiments, a triblock copolymer composition has a viscosity less than 4,000 centipoise at 50 °C. In some embodiments, a triblock copolymer composition has a viscosity less than 3,000 centipoise at 50 °C.

In some embodiments, a triblock copolymer, **B-A-B**, is characterized in that it has a viscosity less than 40,000 centipoise at 25 °C. In some embodiments, a triblock copolymer composition has a viscosity less than 30,000 centipoise at 25 °C. In some embodiments, a triblock copolymer composition has a viscosity less than 25,000 centipoise at 25 °C. In some embodiments, a triblock copolymer composition has a viscosity less than 22,500 centipoise at 25 °C. In some embodiments, a triblock copolymer composition has a viscosity less than 20,000 centipoise at 25 °C. In some embodiments, a triblock copolymer composition has a viscosity less than 17,500 centipoise at 25 °C.

In some embodiments, a provided triblock copolymer, **B-A-B**, is characterized in that it has an increased ratio of primary hydroxyl end-groups relative to secondary hydroxyl end-groups as compared to a starting or intermediate copolymer.

For example, in some embodiments, the molar percent of primary OH end groups in a triblock copolymer, **B-A-B**, (e.g. PPG-PPC-PPG triblock copolymer), relative to a starting polymer, **A,** (e.g. PPC homopolymer) is increased to at least 15% greater than the molar percent of primary OH end groups in the starting polymer. For example, a starting PPC homopolymer composition having 10% primary OH end groups that is modified to become a modified PPG-PPC-PPG triblock copolymer having 25% end groups; it is understood that the modified polymer composition is increased to 15% (i.e., 25% - 10% = 15%) greater than the molar percent of primary OH end groups in the starting polymer. Accordingly, in some embodiments, a molar percent of primary OH end groups in a triblock **B-A-B** polymer is at least 15%, at least 20%, at least 25%, at least 30%, at least 35%, at least 40%, at least 45%, at least 50%, at least 55%, at least 60%, at least 65%, at least 70%, or at least 71% greater than the molar percent of primary OH end groups in the starting polymer. In certain embodiments, the molar percent of primary OH end groups in a triblock **B-A-B** polymer composition is increased to 15-25%, 20-30%, 25-35%, 30-40%, 35-45%, 40-50%, 45-55%, 50-60%, 55-65%, 60-70%, 65-75%, 70-80%, 75-85%, 80-90%, 85-95%, 90-99%, or greater than 99%.

In some embodiments, the molar percent of primary OH end groups in a triblock **B-A-B** polymer is greater than about 5%, greater than about 7%, greater than about 10%, or greater than about 15%. In some embodiments, the molar percent of primary OH end groups is greater than about 10%, greater than about 15%, greater than about 20%, greater than about 25%, greater than about 30%, greater than about 35%, greater than about 40%, greater than about 45%, or greater than about 50%, greater than about 55%, greater than about 60%, greater than about 65%, greater than about 70%, greater than about 75%, greater than about 80%, greater than about 85%, greater than about 90%, or greater than about 95%. In certain embodiments, the molar percent of primary OH end groups in a triblock **B-A-B** polymer is 15-25%, 20-30%, 25-35%, 30-40%, 35-45%, 40-50%, 45-55%, 50-60%, 55-65%, 60-70%, 65-75%, 70-80%, 75-85%, 80-90%, 85-95%, 90-99%, or greater than 99%.

In some embodiments, the molar percent of primary OH end groups in a triblock **B-A-B** polymer composition is about 35% greater than a molar percent of primary OH end groups in a starting polymer **A,** (e.g. PPC homopolymer). In some embodiments, the molar percent of primary OH end groups in a triblock **B-A-B** polymer composition is at least 45% greater than the molar percent of primary OH end groups in a starting polymer. In some embodiments, the molar percent of primary OH end groups in a triblock **B-A-B** polymer composition is at least 50%, at least 55%, at least 60%, at least 65%, at least 70%, at least 75%, at least 80%, at least 85%, at least 90%, or at least 95% greater than the molar percent of primary OH end groups in a starting polymer. In some embodiments, the molar percent of primary OH end groups in a starting polymer composition is less than 15%, less than 10%, less than 8%, less than 5%, or less than 3%, or less than 2%.

In some embodiments, the ratio of primary OH end groups to secondary OH end groups in a triblock **B-A-B** polymer composition is at least 50% greater than the ratio in a starting polymer **A,** (e.g. PPC homopolymer) composition. In some embodiments, the ratio of primary OH end groups to secondary OH end groups in a triblock **B-A-B** polymer composition is at least 75%, at least 100%, at least 150%, at least 200%, at least 300%, at least 400%, or at least 500% greater than the ratio in a starting polymer composition. In some embodiments, the ratio of primary OH end groups to secondary OH end groups in a triblock **B-A-B** polymer composition is 75-200%, 150-250%, 200-300%, 250-350%, 300-400%, 350-450%, 400-500%, or 500-1000% greater than the ratio in a starting polymer composition.

### First Catalysts

Suitable first catalysts for the preparation of a first polymer **A** (e.g., poly(alkylene carbonate)), are known in the art and may be used in provided methods. By way of non-limiting example, in some embodiments, a first catalyst is selected from the group consisting of:
i) (salcy)MX (salcy = N,N'-bis(3,5-di-tertbutylsalicylidene)-1,2-diaminocyclohexane; M= Al, Co, Cr, Mn; X =halide or carboxylate);
ii) zinc glutarate;
iii) TPPM-X (TPP = tetraphenylphorphyrin; M = Al, Co, Cr; X = halide or alkoxide), (betadiiminate); and
iv) zinc acetate.

In some embodiments, a first catalyst is a metallosalenate catalyst. In some embodiments, a first catalyst is a cobalt salen catalyst. In some embodiments, a first catalyst is a metal complex described in WO 2008/136591, WO 2010/013948, WO 2010/022388, WO 2010/147421, WO 2011/126195, WO 2012/037282, WO 2013/096602, WO 2013/012895, WO 2013/022932, or WO 2014/031811.

In some embodiments, a first catalyst is a porphyrin catalyst. In some embodiments, a first catalyst comprises a porphyrin ligand coordinated with cobalt. In some embodiments, a first catalyst comprises a porphyrin ligand coordinated with nickel. In some embodiments, a first catalyst is a metal complex described in JP 2008081518.

In some embodiments, a first catalyst is a bimetallic catalyst. In some embodiments, a first catalyst is a bimetallic catalyst comprising nickel. In some embodiments, a first catalyst is a bimetallic catalyst described in WO 2009/130470, WO 2016/012785, WO 2016/012786, or WO 2017/037441.

In some embodiments, a metallosalenate catalyst has a structure: 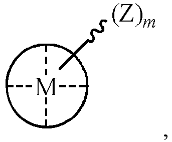 wherein: 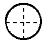
comprises a multidentate ligand;
M is a metal atom; and 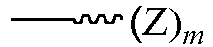
represents one or more activating moieties covalently tethered to the multidentate ligand, where 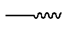 represents a linker moiety, each Z is an activating functional group, and *m* represents the number of Z groups present on a linker moiety and is an integer between 1 and 4 inclusive.

In some embodiments, at least one activating moiety is tethered to one or more carbon atoms of only one phenyl ring of a salicylaldehyde-derived portions of a salen ligand, as shown in formula **I**: 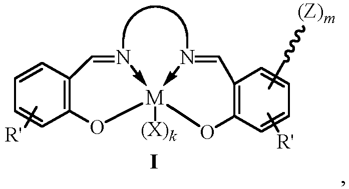 wherein M and 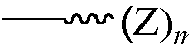 are as defined above and described in classes and subclasses herein, both singly and in combination, and:
X is a nucleophile capable of ring opening an epoxide;
*k* is an integer from 0-2 inclusive;
R' represents one or more substituents optionally present on the phenyl rings and each R' is independently selected from the group consisting of: halogen, -NO₂, -CN, -SR^{y}, -S(O)R^{y}, -S(O)₂R^{y}, -NR^{y}C(O)R^{y}, -OC(O)R^{y}, -CO₂R^{y}, -NCO, -N₃, -OR^{y}, -OC(O)N(R^{y})₂, -N(R^{y})₂, -NR^{y}C(O)R^{y}, -NR^{y}C(O)OR^{y}, or an optionally substituted radical selected from the group consisting of C₁₋₂₀ aliphatic, C₁₋₂₀ heteroaliphatic, phenyl, a 3- to 8-membered saturated or partially unsaturated monocyclic carbocycle, a 7-14 carbon saturated, partially unsaturated or aromatic polycyclic carbocycle, a 5- to 6-membered monocyclic heteroaryl ring having 1-4 heteroatoms independently selected from nitrogen, oxygen, or sulfur, a 3- to 8-membered saturated or partially unsaturated heterocyclic ring having 1-3 heteroatoms independently selected from nitrogen, oxygen, or sulfur, a 6- to 12-membered polycyclic saturated or partially unsaturated heterocycle having 1-5 heteroatoms independently selected from nitrogen, oxygen, or sulfur, or an 8- to 10-membered bicyclic heteroaryl ring having 1-5 heteroatoms independently selected from nitrogen, oxygen, or sulfur, where two or more adjacent R' groups can be taken together to form an optionally substituted saturated, partially unsaturated, or aromatic 5- to 12-membered ring containing 0 to 4 heteroatoms;
R^{y} is -H, or an optionally substituted radical selected from the group consisting of C₁₋₆ aliphatic, 3- to 7-membered heterocyclic, phenyl, and 8- to 10- membered aryl; and 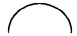 represents is an optionally substituted moiety linking the two nitrogen atoms of the diamine portion of the salen ligand, where 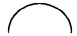 is selected from the group consisting of phenyl, a 3- to 8-membered saturated or partially unsaturated monocyclic carbocycle, a 7-14 carbon saturated, partially unsaturated or aromatic polycyclic carbocycle, a 5- to 6-membered monocyclic heteroaryl ring having 1-4 heteroatoms independently selected from nitrogen, oxygen, or sulfur, a 3- to 8-membered saturated or partially unsaturated heterocyclic ring having 1-3 heteroatoms independently selected from nitrogen, oxygen, or sulfur, a 6- to 12-membered polycyclic saturated or partially unsaturated heterocycle having 1-5 heteroatoms independently selected from nitrogen, oxygen, or sulfur, or an 8- to 10-membered bicyclic heteroaryl ring having 1-5 heteroatoms independently selected from nitrogen, oxygen, or sulfur, or an optionally substituted C₂₋₂₀ aliphatic group, wherein one or more methylene units are optionally and independently replaced by -NR^{y}-, -N(R^{y})C(O)-, -C(O)N(R^{y})-, -OC(O)N(R^{y})-, -N(R^{y})C(O)O-, -OC(O)O-, -O-, -C(O)-, -OC(O)-, -C(O)O-, -S-, -SO-, -SO₂-, -C(=S)-, -C(=NR^{y})-, -C(=NOR^{y})-or -N= N-.

In some embodiments, both salicylaldehyde-derived portions of a salen ligand bear one or more activating moieties: 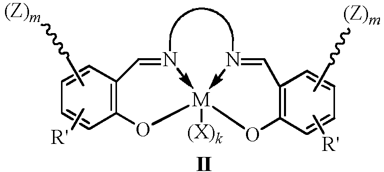 wherein M, X, k, R', 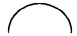 , and 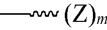 are as defined above and described in classes and subclasses herein, both singly and in combination.

In some embodiments a metallosalenate catalyst has a structure: 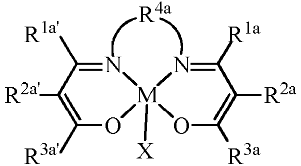 wherein:
M is a transition metal;
R^{1a}, R^{1a'}, R^{2a}, R^{2a'}, R^{3a}, and R^{3a'} are independently a 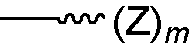 group, hydrogen, halogen, -OR, -NR₂, -SR, -CN, -NO₂, -SO₂R, -SOR, -SO₂NR₂, -CNO, -NRSO₂R, -N CO, -N₃, -SiR₃, or an optionally substituted radical selected from the group consisting of C₁₋₂₀ aliphatic, C₁₋₂₀ heteroaliphatic, phenyl, a 3- to 8-membered saturated or partially unsaturated monocyclic carbocycle, a 7-14 carbon saturated, partially unsaturated or aromatic polycyclic carbocycle, a 5- to 6-membered monocyclic heteroaryl ring having 1-4 heteroatoms independently selected from nitrogen, oxygen, or sulfur, a 3- to 8-membered saturated or partially unsaturated heterocyclic ring having 1-3 heteroatoms independently selected from nitrogen, oxygen, or sulfur, a 6- to 12-membered polycyclic saturated or partially unsaturated heterocycle having 1-5 heteroatoms independently selected from nitrogen, oxygen, or sulfur, or an 8- to 10-membered bicyclic heteroaryl ring having 1-5 heteroatoms independently selected from nitrogen, oxygen, or sulfur;
each R is independently hydrogen, an optionally substituted radical selected the group consisting of acyl, carbamoyl, arylalkyl, phenyl, 8- to 10-membered aryl, C₁₋₁₂ aliphatic, C₁₋₁₂ heteroaliphatic, 5- to 10-membered heteroaryl, 4- to 7-membered heterocyclyl, an oxygen protecting group, and a nitrogen protecting group, or:
   two R on the same nitrogen atom are taken with the nitrogen to form a 3- to 7-membered heterocyclic ring;
   where any of [R^{2a'} and R^{3a'}], [R^{2a} and R^{3a}], [R^{1a} and R^{2a}], and [R^{1a'} and R^{2a'}] may optionally be taken together with the carbon atoms to which they are attached to form one or more rings which may in turn be substituted with one or more R^{c} groups; and
   R^{4a} is selected from the group consisting of: 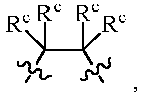 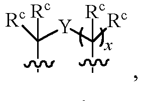 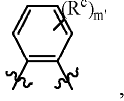 and 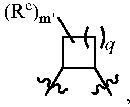 where
   R^{c} at each occurrence is independently a 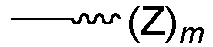 group, hydrogen, halogen, -OR, -NR₂, -SR, -CN, -NO₂, -SO₂R, -SOR, -SO₂NR₂, -CNO, -NRSO₂R, -N CO, -N₃, -SiR₃, or an optionally substituted radical selected from the group consisting of C₁₋₂₀ aliphatic, C₁₋₂₀ heteroaliphatic, phenyl, a 3- to 8-membered saturated or partially unsaturated monocyclic carbocycle, a 7-14 carbon saturated, partially unsaturated or aromatic polycyclic carbocycle, a 5- to 6-membered monocyclic heteroaryl ring having 1-4 heteroatoms independently selected from nitrogen, oxygen, or sulfur, a 3- to 8-membered saturated or partially unsaturated heterocyclic ring having 1-3 heteroatoms independently selected from nitrogen, oxygen, or sulfur, a 6- to 12-membered polycyclic saturated or partially unsaturated heterocycle having 1-5 heteroatoms independently selected from nitrogen, oxygen, or sulfur, or an 8- to 10-membered bicyclic heteroaryl ring having 1-5 heteroatoms independently selected from nitrogen, oxygen, or sulfur, where:
   two or more R^{c} groups may be taken together with the carbon atoms to which they are attached and any intervening atoms to form one or more rings, or where:
   when two R^{c} groups are attached to the same carbon atom, they may be taken together along with the carbon atom to which they are attached to form a moiety selected from the group consisting of: a 3- to 8-membered spirocyclic ring, a carbonyl, an oxime, a hydrazone, and an imine;
   X is a nucleophile capable of ring opening an epoxide;
   Y is a divalent linker selected from the group consisting of: -NR-, -N(R)C(O)-, -C(O)NR-, -O-, -C(O)-, -OC(O)-, -C(O)O-, -S-, -SO-, -SO₂-, - C(=S)-, -C(=NR)-, or -N=N-, a polyether, a C₃ to C₈ substituted or unsubstituted carbocycle; and a C₁ to C₈ substituted or unsubstituted heterocycle;
   *m'* is 0 or an integer from 1 to 4, inclusive;
   *q* is 0 or an integer from 1 to 4, inclusive; and
   *x* is 0, 1, or 2.

In some embodiments, at least one of [R^{2a} and R^{3a}] and [R^{2a'} and R^{3a'}] are taken together to form a ring. In some embodiments, both [R^{2a} and R^{3a}] and [R^{2a'} and R^{3a'}] are taken together to form rings. In some embodiments, the rings formed by [R^{2a} and R^{3a}] and [R^{2a'} and R^{3a'}] are substituted phenyl rings.

In some embodiments, one or more of R^{1a}, R^{1a'}, R^{2a}, R^{2a'}, R^{3a}, and R^{3a'} are independently a 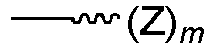 group.

In some embodiments of a metallosalenate metal complex, a 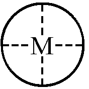 moiety has a structure selected from the group consisting of: 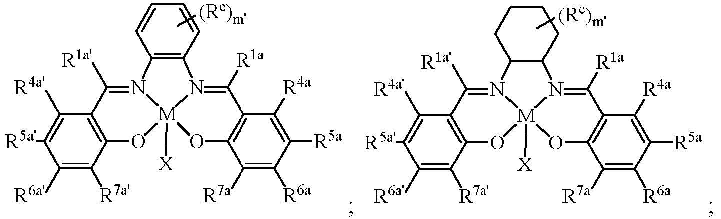 and 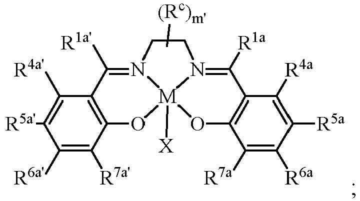 wherein:
M is a transition metal;
R^{4a}, R^{4a'}, R^{5a}, R^{5a'}, R^{6a}, R6^{a'}, R^{7a}, and R^{7a'} are each independently a 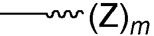 group, hydrogen, halogen, -OR, -NR₂, -SR, -CN, -NO₂, -SO₂R, -SOR, -SO₂NR₂, -CNO, -NRSO₂R, -NCO, -N₃, -SiR₃, or an optionally substituted radical selected from the group consisting of C₁₋₂₀ aliphatic, C₁₋₂₀ heteroaliphatic, phenyl, a 3- to 8-membered saturated or partially unsaturated monocyclic carbocycle, a 7-14 carbon saturated, partially unsaturated or aromatic polycyclic carbocycle, a 5- to 6-membered monocyclic heteroaryl ring having 1-4 heteroatoms independently selected from nitrogen, oxygen, or sulfur, a 3- to 8-membered saturated or partially unsaturated heterocyclic ring having 1-3 heteroatoms independently selected from nitrogen, oxygen, or sulfur, a 6- to 12-membered polycyclic saturated or partially unsaturated heterocycle having 1-5 heteroatoms independently selected from nitrogen, oxygen, or sulfur, or an 8- to 10-membered bicyclic heteroaryl ring having 1-5 heteroatoms independently selected from nitrogen, oxygen, or sulfur;
wherein [R^{1a} and R^{4a}], [R^{1a} and R^{4a'}] and any two adjacent R^{4a}, R^{4a'}, R^{5a}, R^{5a'}, R^{6a}, R6^{a'}, R^{7a}, and R^{7a'} groups can be taken together with intervening atoms to form one or more optionally substituted rings; and
*m'* is 0 or an integer from 1 to 4, inclusive.

In some embodiments, R^{1a}, R^{1a'}, R^{4a}, R^{4a'}, R^{6a}, and R^{6a'} are each -H. In some embodiments, R^{5a}, R^{5a'} R^{7a} and R^{7a'} are each optionally substituted C₁-C₁₂ aliphatic. In some embodiments, R^{4a}, R^{4a'}, R^{5a}, R^{5a'}, R^{6a}, R6^{a'}, R^{7a}, and R^{7a'} are each independently selected from the group consisting of: -H, -SiR₃, methyl, ethyl, n-propyl, i-propyl, n-butyl, sec-butyl, *t*-butyl, isoamyl, t-amyl, thexyl, and trityl. In some embodiments, R^{1a}, R^{1a'}, R^{4a}, R^{4a'}, R^{6a}, and R^{6a'} are each -H. In some embodiments, R^{7a} is selected from the group consisting of -H, methyl, ethyl, n-propyl, i-propyl, n-butyl, sec-butyl, t-butyl, isoamyl, t-amyl, thexyl, and trityl. In some embodiments, R^{5a} and R^{7a} are independently selected from the group consisting of -H, methyl, ethyl, n-propyl, i-propyl, n-butyl, sec-butyl, t-butyl, isoamyl, t-amyl, thexyl, and trityl. In some embodiments, one or more of R^{5a}, R^{5a'}, R^{7a} and R^{7a'} is a 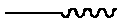 Z group. In some embodiments, R^{5a} and R^{5a'} are a 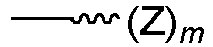 group.

In some embodiments of a metallosalenate metal complex, a 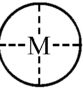 moiety has a structure selected from the group consisting of: 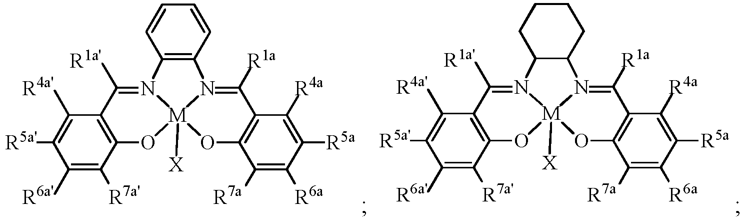 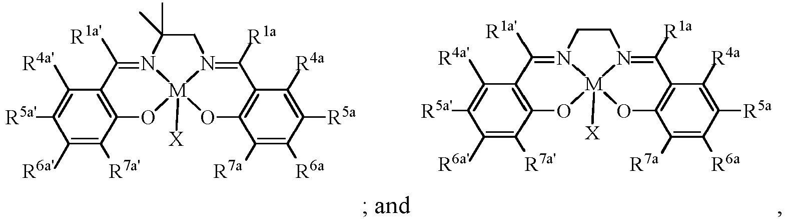 wherein M, X, R^{1a}, R^{4a}, R^{5a}, R^{6a}, R^{7a}, R^{1a'}, R^{4a'}, R^{5a'}, R6^{a'}, R^{7a'} are as defined above and described in classes and subclasses herein, both singly and in combination.

### Metal Atoms in a First Catalyst

In some embodiments, a first catalyst is a metal complex comprising a zinc, cobalt, chromium, aluminum, titanium, ruthenium, or manganese atom. In some embodiments, a first catalyst is an aluminum complex. In some embodiments, a first catalyst is a chromium complex. In some embodiments, a first catalyst is a zinc complex. In certain some embodiments, a first catalyst is a titanium complex. In some embodiments, a first catalyst is a ruthenium complex. In some embodiments, a first catalyst is a manganese complex. In some embodiments, a first catalyst is cobalt complex. In some embodiments where a first catalyst is a cobalt complex, the cobalt metal has an oxidation state of 3+ (i.e., Co(III)). In some embodiments, the cobalt metal has an oxidation state of 2+.

In some embodiments, a first catalyst is a metallosalenate described above where M is a metal atom selected from periodic table groups 3-13, inclusive. In some embodiments, M is a transition metal selected from periodic table groups 5-12, inclusive. In some embodiments, M is a transition metal selected from periodic table groups 4-11, inclusive. In some embodiments, M is a transition metal selected from periodic table groups 5-10, inclusive. In some embodiments, M is a transition metal selected from periodic table groups 7-9, inclusive. In some embodiments, M is selected from the group consisting of Cr, Mn, V, Fe, Co, Mo, W, Ru, Al, and Ni. In some embodiments, M is a metal atom selected from the group consisting of: cobalt, chromium, aluminum, titanium, ruthenium, and manganese. In some embodiments, M is cobalt. In some embodiments, M is chromium. In some embodiments, M is aluminum.

### Linkers

In certain embodiments, each linker moiety 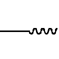 comprises 1-30 atoms including at least one carbon atom, and optionally one or more atoms selected from the group consisting of N, O, S, Si, B, and P.

In certain embodiments, a linker moiety 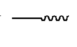 is an **optionally** substituted C₂₋₃₀ aliphatic group wherein one or more methylene units are optionally and independently replaced by -NR^{y}-, -N(R^{y})C(O)-, -C(O)N(R^{y})-, -O-, -C(O)-, -OC(O)-, -C(O)O-, -S-, -SO-, -SO₂-, -C(=S)-, -C(=NR^{y})-, or -N=N-, where each occurrence of R^{y} is independently -H, or an optionally substituted radical selected from the group consisting of C₁₋₆ aliphatic, 3- to 7-membered heterocyclic, phenyl, and 8- to 10- membered aryl. In certain embodiments, a linker moiety is a C₄₋C₁₂ aliphatic group substituted with one or more moieties selected from halogen, -NO₂, -CN, -SR^{y}, -S(O)R^{y}, -S(O)₂R^{y}, -NR^{y}C(O)R^{y}, -OC(O)R^{y}, -CO₂R^{y}, -NCO, -CNO, - SiR₃, -N₃, -OR^{y}, -OC(O)N(R^{y})₂, -N(R^{y})₂, -NR^{y}C(O)R^{y}, -NR^{y}C(O)OR^{y}, -C(O)R^{y}, C(O)N(R^{y})₂, -SO₂N(R^{y})₂, -N(R^{y})C(O)N(R^{y})₂, or -N(R)SO₂R, where R^{y} is -H, or an optionally substituted radical selected from the group consisting of C₁₋₆ aliphatic 3- to 7-membered heterocyclic, phenyl, and 8- to 10- membered aryl.

In certain embodiments, 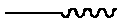 is an optionally substituted C₃₋C₃₀ aliphatic group. In certain embodiments, 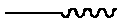 is an optionally substituted C₄₋₂₄ aliphatic group. In certain embodiments, 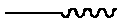 is an optionally substituted C₄₋C₂₀ aliphatic group. In certain embodiments, 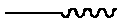 is an optionally substituted C₄₋C₁₂ aliphatic group. In certain embodiments, 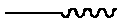 is an optionally substituted C₄₋₁₀ aliphatic group. In certain embodiments, 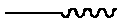 is an optionally substituted C₄₋₈ aliphatic group. In certain embodiments, 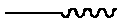 is an optionally substituted C₄₋C₆ aliphatic group. In certain embodiments, 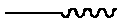 is an optionally substituted C₆-C₁₂ aliphatic group. In certain embodiments, 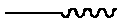 is an optionally substituted Cs aliphatic group. In certain embodiments, 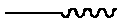 is an optionally substituted C₇ aliphatic group. In certain embodiments, 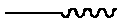 is an optionally substituted C₆ aliphatic group. In certain embodiments, 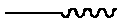 is an optionally substituted C₅ aliphatic group. In certain embodiments, 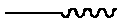 is an optionally substituted C₄ aliphatic group. In certain embodiments, 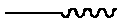 is an optionally substituted C₃ aliphatic group. In certain embodiments, a aliphatic group in the linker moiety is an optionally substituted straight alkyl chain. In certain embodiments, the aliphatic group is an optionally substituted branched alkyl chain. In some embodiments, a 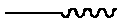 is a C₄ to C₂₀ alkyl group having one or more methylene groups replaced by -C(R^{a}R^{b})- where R^{a} and R^{b} are each independently C₁-C₄ alkyl groups. In certain embodiments, a 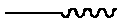 consists of an aliphatic group having 4 to 30 carbons including one or more gem-dimethyl substituted carbon atoms.

In certain embodiments, 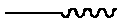 includes one or more optionally substituted cyclic elements selected from the group consisting of saturated or partially unsaturated carbocyclic, aryl, heterocyclic, or heteroaryl. In certain embodiments, 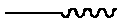 consists of the substituted cyclic element. In some embodiments the cyclic element is part of a linker with one or more non-ring heteroatoms or optionally substituted aliphatic groups comprising other parts of the linker moiety.

In some embodiments, 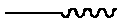 is of sufficient length to allow one or more activating functional groups to be positioned near a metal atom of a metal complex. In certain embodiments, structural constraints are built into 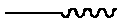 to control the disposition and orientation of one or more activating functional groups near a metal center of a metal complex. In certain embodiments such structural constraints are selected from the group consisting of cyclic moieties, bicyclic moieties, bridged cyclic moieties and tricyclic moieties. In some embodiments, such structural constraints are the result of acyclic steric interactions. In certain embodiments such structural constraints are selected from the group consisting of *cis* double bonds, *trans* double bonds, *cis* allenes, *trans* allenes, and triple bonds. In some embodiments, such structural constraints are selected from the group consisting of substituted carbons including geminally disubstituted groups such as sprirocyclic rings, gem dimethyl groups, gem diethyl groups and gem diphenyl groups. In certain embodiments such structural constraints are selected from the group consisting of heteratom-containing functional groups such as sulfoxides, amides, and oximes.

In certain embodiments, 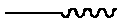 is selected from the group consisting of: 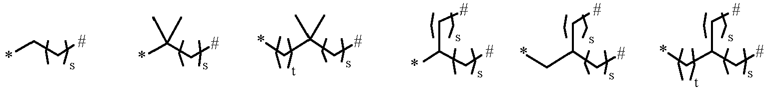 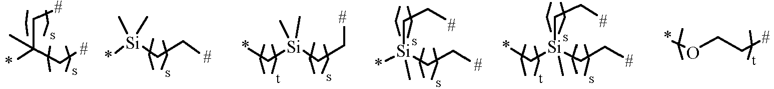 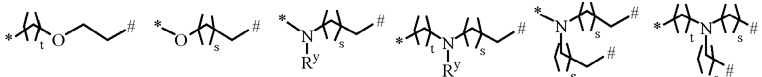 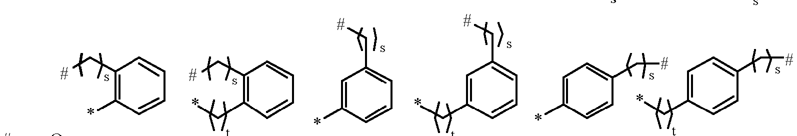 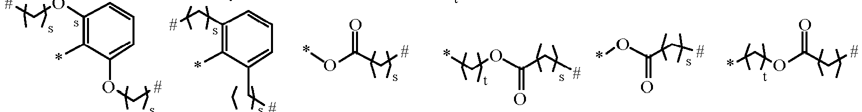 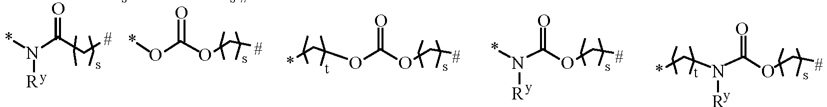 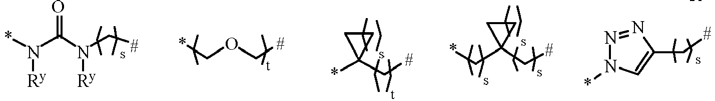 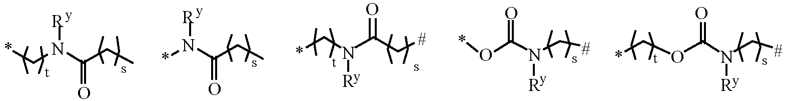 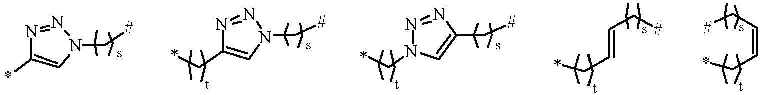 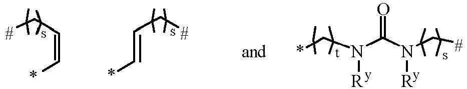 where s = 0-6 and t = 1-4 ,
* represents the site of attachment to a ligand, and each # represents a site of attachment of an activating functional group.

In some embodiments, s is 0. In some embodiments, s is 1. In some embodiments, *s* is 2. In some embodiments, s is 3. In some embodiments, s is 4. In some embodiments, s is 5. In some embodiments, s is 6.

In some embodiments, t is 1. In some embodiments, t is 2. In some embodiments, t is 3. In some embodiments, t is 4.

In some embodiments of provided metal complexes, each R^{y} of a 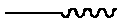 group is -H, or an optionally substituted radical selected from the group consisting of C₁₋₆ aliphatic, 3-to 7-membered heterocyclic, phenyl, and 8- to 10- membered aryl. In some embodiments, an R^{y} group of a 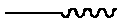 group attached to a nitrogen, oxygen, or sulfur atom on a provided metal complex is other than hydrogen.

In some embodiments of provided metal complexes, each R of a 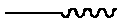 group is -H, or an optionally substituted radical selected from the group consisting of C₁₋₆ aliphatic, 3- to 7-membered heterocyclic, phenyl, and 8- to 10- membered aryl. In some embodiments, an R group of a 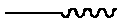 group attached to a nitrogen, oxygen, or sulfur atom on a provided metal complex is other than hydrogen.

In some embodiments, an activating moiety 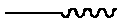 (Z)ₘ has a formula, 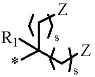 where R¹, *, *s,* and Z are as defined above and described in classes and subclasses herein. In certain embodiments, an activating moiety 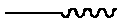 (Z)ₘ has a formula 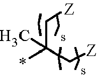 where *, *s,* and Z are as defined above and described in classes and subclasses herein. In certain embodiments, an activating moiety (Z)ₘ has a formula 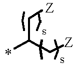 where *, *s,* and Z are as defined above and described in classes and subclasses herein. In certain embodiments, an activating moiety 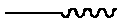 (Z)ₘ has a formula selected from the group consisting of: 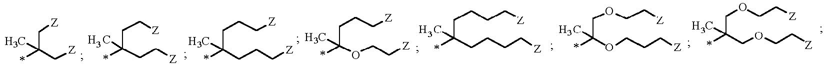 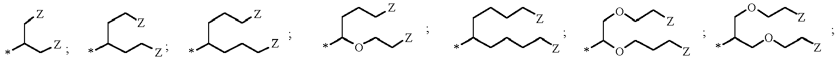 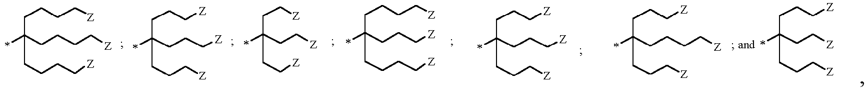 where Z and * are as defined above and described in classes and subclasses herein.

In certain embodiments, an activating moiety (Z)ₘ has a formula selected from the group consisting of: 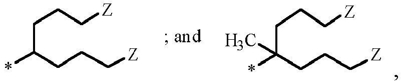 where Z, and * are as defined above and described in classes and subclasses herein.

### Activating Groups

In some embodiments, each activating functional group is independently selected from the group consisting of neutral nitrogen-containing moieties, cationic moieties, phosphorous-containing moieties, and combinations of two or more of these. In some embodiments, an activating group has no free amines. The term "no free amines", as used herein, refers to a nitrogen-containing group having no nitrogen atoms bearing a hydrogen in any tautomeric or resonance form.

In some embodiments of (Z)*ₘ, m* is 1. In some embodiments *m* is 2.

### Neutral Nitrogen-Containing Activating Groups

In some embodiments, one or more Z groups on provided metal complexes are neutral nitrogen-containing moieties.

In some embodiments, an activating functional group is an *N*-linked amino group. In some embodiments, an activating functional group is an *N*-linked hydroxyl amine.

In some embodiments, an activating functional group is an amidine. In some embodiments, an activating functional group is an N-linked amidine. In some embodiments, an activating functional group is an amidine moiety linked through the imine nitrogen. In some embodiments, an activating functional group is an amidine moiety linked through a carbon atom.

In some embodiments, an activating functional group is a carbamate. In some embodiments, an activating functional group is a N-linked carbamate. In some embodiments, an activating functional group is a O-linked carbamate.

In some embodiments, an activating functional group is a guanidine or bis-guanidine group. In some embodiments, an activating functional group is a urea.

In some embodiments, an activating functional group is an oxime or hydrazone group.

In some embodiments, an activating functional group is a N-oxide derivative.

### Cationic Activating Groups

In some embodiments, one or more tethered activating functional groups on provided metal complexes comprise a cationic moiety.

In some embodiments, an activating functional group is a protonated amine.

In some embodiments, an activating functional group is a quaternary amine.

In some embodiments, an activating functional group is a guanidinium group.

In some embodiments, an activating functional group is a cationic bicyclic guanidinium group, wherein the cationic bicyclic guanidinium group has no free amines. In some embodiments, a guanidinium group having no free amines has two nitrogen atoms each bearing three nonhydrogen substituents and a third nitrogen atom with bonds to four nonhydrogen substituents. In some embodiments, such nonhydrogen substituents are aliphatic substituents. In some embodiments, a guanidinium group having no free amines is cationic, as compared to a neutral guanidinium group having a free amine.

In some embodiments, an activating function group is an amidinium group.

In some embodiments, an activating functional group is a cationic bicyclic amidinium group, wherein the cationic bicyclic amidinium group has no free amines. In some embodiments, an amidinium group having no free amines has one nitrogen atom bearing three nonhydrogen substituents and a second nitrogen atom with bonds to four nonhydrogen substituents. In some embodiments, such nonhydrogen substituents are aliphatic substituents. In some embodiments, such nonhydrogen substituents comprise the rings of the bicyclic amidinium group. In some embodiments, an amidinium group having no free amines is cationic, as compared to a neutral amidinium group having a free amine.

In some embodiments, an activating functional group is or comprises an optionally substituted nitrogen-containing heterocycle or heteroaryl.

In some embodiments, an activating functional group is a sulfonium group or an arsonium group.

### Phosphorous-Containing Activating Groups

In some embodiments, activating functional groups Z are phosphorous containing groups.

In some embodiments, phosphorous-containing functional groups include those disclosed in The Chemistry of Organophosphorus Compounds. Volume 4. Ter- and Quinquevalent Phosphorus Acids and their Derivatives. The Chemistry of Functional Group Series Edited by Frank R. Hartley (Cranfield University, Cranfield, U.K.). Wiley: New York. 1996. ISBN 0-471-95706-2.

In certain embodiments, an activating functional group is a phosphonate group.

In some embodiments, an activating functional group is a phosphonic diamide group.

In some embodiments, an activating functional group is a phosphine group.

### Second Catalysts

### Boron-based catalysts

In some embodiments, a second catalyst is a boron compound. In some embodiments, a second catalyst is selected from the group consisting of: 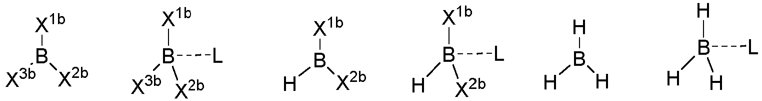 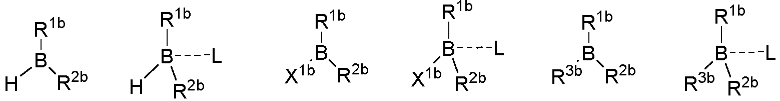 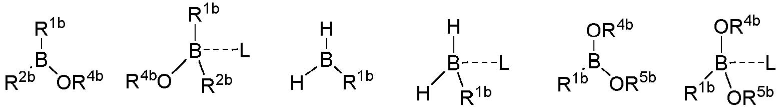 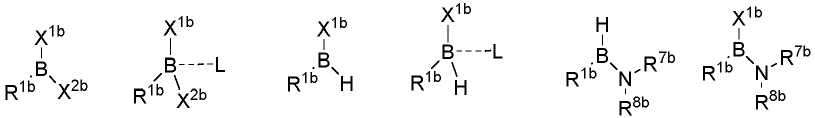 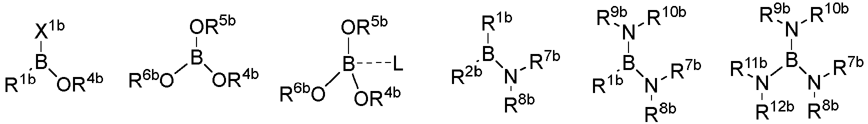 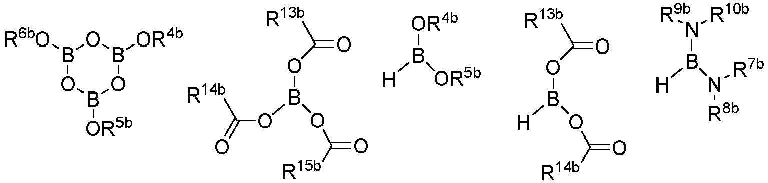 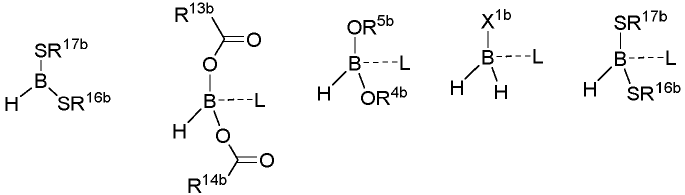 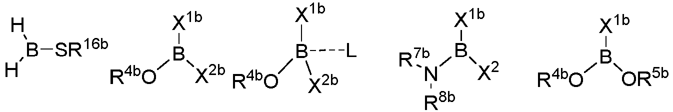 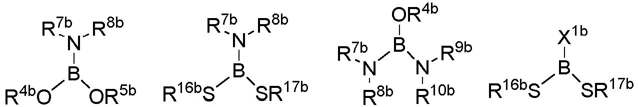 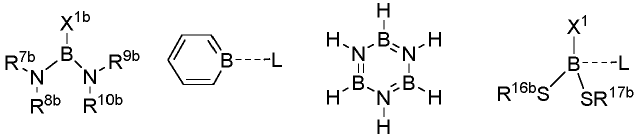 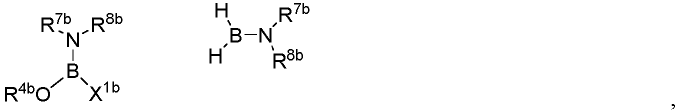 wherein:
each occurrence of X^{1b}, X^{2b}, and X^{3b} is independently Cl, Br, I, or F;
each occurrence of R^{1b}, R^{2b}, and R^{3b} is independently an optionally substituted group selected from the group consisting of C₁₋₂₀ aliphatic; C₁₋₂₀ heteroaliphatic having 1-4 heteroatoms independently selected from the group consisting of nitrogen, oxygen, and sulfur; 6-10-membered aryl; 5-10-membered heteroaryl having 1-4 heteroatoms independently selected from nitrogen, oxygen, or sulfur; and 4-7-membered heterocyclic having 1-2 heteroatoms independently selected from the group consisting of nitrogen, oxygen, and sulfur; wherein any of R^{1b} and R^{2b} can be taken together with their intervening atoms to form one or more rings selected from the group consisting of: optionally substituted C₃-C₁₄ carbocycle, optionally substituted C₃-C₁₄ heterocycle, optionally substituted C₆-C₁₀ aryl, and optionally substituted C₅-C₁₀ heteroaryl;
each occurrence of R^{4b}, R^{5b}, R^{6b}, R^{7b}, R^{8b}, R^{9b}, R^{10b}, R^{11b}, R^{12b}, R^{13b}, R^{14b}, R^{15b}, R^{16b}, and R^{17b} is independently hydrogen or an optionally substituted group selected from the group consisting of C₁₋₂₀ aliphatic; C₁₋₂₀ heteroaliphatic having 1-4 heteroatoms independently selected from the group consisting of nitrogen, oxygen, and sulfur; 6-10-membered aryl; 5-10-membered heteroaryl having 1-4 heteroatoms independently selected from nitrogen, oxygen, or sulfur; and 4-7-membered heterocyclic having 1-2 heteroatoms independently selected from the group consisting of nitrogen, oxygen, and sulfur; wherein (R^{4b} and R^{5b}), (R^{7b} and R^{8b}), (R^{9b} and R^{10b}), (R^{11b} and R^{12b}), (R^{7b} and R^{9b}), and (R^{16b} and R^{17b}) can independently be taken together with their intervening atoms to form one or more rings selected from the group consisting of: optionally substituted C₃-C₁₄ carbocycle, optionally substituted C₃-C₁₄ heterocycle, optionally substituted C₆-C₁₀ aryl, and optionally substituted C₅-C₁₀ heteroaryl;
and L is a ligand.

In certain embodiments, the boron compound is 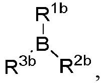 and each occurrence of R^{1b}, R^{2b}, and R^{3b} is independently an optionally substituted group selected from the group consisting of C₁₋₂₀ aliphatic; C₁₋₂₀ heteroaliphatic having 1-4 heteroatoms independently selected from the group consisting of nitrogen, oxygen, and sulfur; 6-10-membered aryl; 5-10-membered heteroaryl having 1-4 heteroatoms independently selected from nitrogen, oxygen, or sulfur; and 4-7-membered heterocyclic having 1-2 heteroatoms independently selected from the group consisting of nitrogen, oxygen, and sulfur; wherein any of R^{1b} and R^{2b} can be taken together with their intervening atoms to form one or more rings selected from the group consisting of: optionally substituted C₃-C₁₄ carbocycle, optionally substituted C₃-C₁₄ heterocycle, optionally substituted C₆-C₁₀ aryl, and optionally substituted C₅-C₁₀ heteroaryl.

In certain embodiments, the boron compound is 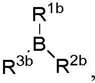 and each occurrence of R^{1b}, R^{2b}, and R^{3b} is independently optionally substituted 6-membered aryl.

### Anionic Catalysts

In some embodiments, a second catalyst is an anionic reagent. In some embodiments, a second catalyst is an anionic reagent selected of the formula:

Mⁿ⁺-(OH)ₙ,

wherein:
*n* is an integer between 1 and 2 inclusive;
when n is 1, M is selected from the group consisting of: Li, Na, K, and Rb, Cs; and
when n is 2, M is selected from: Ba and Sr.

### Cationic Catalysts

In some embodiments, a second catalyst is a cationic reagent. In some embodiments, a second catalyst is a cationic reagent selected from the group consisting of BF₃, PF₅, HPF₆, HSbF₆, CF₃SO₃H, Al(CF₃SO₃)₃, Cu(CF₃SO₃)₂, (R^{cat})₃O⁺·⁻BF₄, Zn(OTf)₂, Ga(OTf)₃, La(OTf)₃, Yb(OTf)₃, Ce(OTf)₃, Sc(OTf)₃, Lu(OTf)₃, Fe(OTf)₃, Zr(OTf)₄, Hf(OTf)₄, and Y(OTf)₃, or a combination thereof wherein:
R^{cat} is independently hydrogen, an optionally substituted radical selected the group consisting of acyl; carbamoyl; arylalkyl; phenyl, 8- to 10-membered aryl; C₁₋₁₂ aliphatic; C₁₋₁₂ heteroaliphatic; 5- to 10-membered heteroaryl; or 4- to 7-membered heterocyclyl.

In some embodiments, the second catalyst is BF₃. In some embodiments, the second catalyst is PF₅. In some embodiments, the second catalyst is HPF₆, In some embodiments, the second catalyst is HSbF₆. In some embodiments, the second catalyst is CF₃SO₃H. In some embodiments, the second catalyst is Al(CF₃SO₃)₃. In some embodiments, the second catalyst is Cu(CF₃SO₃)₂. In some embodiments, the second catalyst is (R^{cat})₃O⁺ · ⁻BF₄. In some embodiments, the second catalyst is Zn(OTf)₂. In some embodiments, the second catalyst is Ga(OTf)₃. In some embodiments, the second catalyst is La(OTf)₃. In some embodiments, the second catalyst is Yb(OTf)₃. In some embodiments, the second catalyst is Ce(OTf)₃. In some embodiments, the second catalyst is Sc(OTf)₃. In some embodiments, the second catalyst is Lu(OTf)₃. In some embodiments, the second catalyst is Fe(OTf)₃. In some embodiments, the second catalyst is Zr(OTf)₄. In some embodiments, the second catalyst is Hf(OTf)₄. In some embodiments, the second catalyst is Y(OTf)₃.

In some embodiments, the second catalyst is a combination of any two or more catalysts selected from BF₃, PF₅, HPF₆, HSbF₆, CF₃SO₃H, Al(CF₃SO₃)₃, Cu(CF₃SO₃)₂, (R^{cat})₃O⁺ · ⁻BF₄, Zn(OTf)₂, Ga(OTf)₃, La(OTf)₃, Yb(OTf)₃, Ce(OTf)₃, Sc(OTf)₃, Lu(OTf)₃, Fe(OTf)₃, Zr(OTf)₄, Hf(OTf)₄, and Y(OTf)₃.

### Activated Monomer Catalysts

In some embodiments, a second catalyst is an activated monomer reagent. In some embodiments, a second catalyst is an activated monomer reagent having the formula:

*A*( *Q*(R^{act})₃ ) · *B*( X⁺ · Y⁻ ),

wherein:
Q is an atom selected from aluminum and boron;
*A* is less than *B,* and *A* and *B* are integers between 1 and 10 inclusive;
R^{act} is selected from C₁₋₆ alkyl and optionally substituted aryl;
X is selected from the group consisting of: Na, N(R^{act})₄, N((CH₂)₃CH₃)₄, N((CH₂)₇CH₃)₄, P((CH₂)₃CH₃)₄; and
Y is selected from the group consisting of: OCH₂(CH₃)₂, Cl, Br, and N₃.

### Organic Catalysts

In some embodiments, a second catalyst is an imidazole or a phosphazene reagent. In some embodiments, an imidazole or phosphazene reagent is selected from the group consisting of: 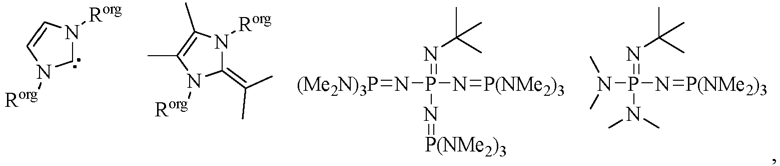 wherein:
R^{org} is independently hydrogen, an optionally substituted radical selected the group consisting of acyl; carbamoyl; arylalkyl; phenyl, 8- to 10-membered aryl; C₁₋₁₂ aliphatic; C₁₋₁₂ heteroaliphatic; 5- to 10-membered heteroaryl; or 4- to 7-membered heterocyclyl.

### Coordinative Catalyst

A second catalyst described herein is a double metal cyanide, such as a double metal cyanide of the formula:

M¹[M²(CN)₆]L_{α} ,

wherein:
M¹ is Zn;
M² is selected from Fe and Co;
L is an alcohol;
α is an integer between 1 and 10 inclusive; and
R^{coo} is independently hydrogen, an optionally substituted radical selected the group consisting of acyl, carbamoyl, arylalkyl, phenyl, 8- to 10-membered aryl, C₁₋₁₂ aliphatic, C₁₋₁₂ heteroaliphatic, 5- to 10-membered heteroaryl, or 4- to 7-membered heterocyclyl.

In some embodiments, a second catalyst is a metal alkoxide. In some embodiments, a second catalyst is a metal alkoxide of the formula:

M³(OR^{coo})_{β}

wherein:
M³ is Zn, Al, or Ti;
β is 2 when M¹ is Zn;
β is 3 when M¹ is Al;
β is 4 when M¹ is Ti; and
R^{coo} is independently hydrogen, an optionally substituted radical selected the group consisting of acyl, carbamoyl, arylalkyl, phenyl, 8- to 10-membered aryl, C₁₋₁₂ aliphatic, C₁₋₁₂ heteroaliphatic, 5- to 10-membered heteroaryl, or 4- to 7-membered heterocyclyl.

In some embodiments, a second catalyst is a metallosalenate that catalyzes homopolymerization of epoxides. In some embodiments, a second catalyst is a metallosalenate of the structure: 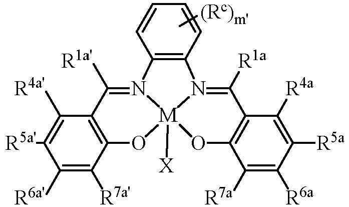 wherein
M is a transition metal;
R^{1a}, R^{1a'}, R^{4a}, R^{4a'}, R^{5a}, R^{5a'}, R^{6a}, R6^{a'}, R^{7a}, and R^{7a'} are each independently a 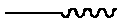 (Z)*ₘ* group, hydrogen, halogen, -OR, -NR₂, -SR, -CN, -NO₂, -SO₂R, -SOR, -SO₂NR₂, -CNO, -NRSO₂R, -NCO, -N₃, -SiR₃, or an optionally substituted radical selected from the group consisting of C₁₋₂₀ aliphatic, C₁₋₂₀ heteroaliphatic, phenyl, a 3- to 8-membered saturated or partially unsaturated monocyclic carbocycle, a 7-14 carbon saturated, partially unsaturated or aromatic polycyclic carbocycle, a 5- to 6-membered monocyclic heteroaryl ring having 1-4 heteroatoms independently selected from nitrogen, oxygen, or sulfur, a 3- to 8-membered saturated or partially unsaturated heterocyclic ring having 1-3 heteroatoms independently selected from nitrogen, oxygen, or sulfur, a 6- to 12-membered polycyclic saturated or partially unsaturated heterocycle having 1-5 heteroatoms independently selected from nitrogen, oxygen, or sulfur, or an 8- to 10-membered bicyclic heteroaryl ring having 1-5 heteroatoms independently selected from nitrogen, oxygen, or sulfur;
wherein [R^{1a} and R^{4a}], [R^{1a} and R^{4a'}] and any two adjacent R^{4a}, R^{4a'}, R^{5a}, R^{5a'}, R^{6a}, R6^{a'}, R^{7a}, and R^{7a'} groups can be taken together with intervening atoms to form one or more optionally substituted rings;
R^{c} at each occurrence is independently a 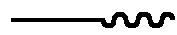 (Z)*ₘ* group, hydrogen, halogen, -OR, -NR₂, -SR, -CN, -NO₂, -SO₂R, -SOR, -SO₂NR₂, -CNO, -NRSO₂R, -N CO, -N₃, -SiR₃, or an optionally substituted radical selected from the group consisting of C₁₋₂₀ aliphatic, C₁₋₂₀ heteroaliphatic, phenyl, a 3- to 8-membered saturated or partially unsaturated monocyclic carbocycle, a 7-14 carbon saturated, partially unsaturated or aromatic polycyclic carbocycle, a 5- to 6-membered monocyclic heteroaryl ring having 1-4 heteroatoms independently selected from nitrogen, oxygen, or sulfur, a 3- to 8-membered saturated or partially unsaturated heterocyclic ring having 1-3 heteroatoms independently selected from nitrogen, oxygen, or sulfur, a 6- to 12-membered polycyclic saturated or partially unsaturated heterocycle having 1-5 heteroatoms independently selected from nitrogen, oxygen, or sulfur, or an 8- to 10-membered bicyclic heteroaryl ring having 1-5 heteroatoms independently selected from nitrogen, oxygen, or sulfurand
*m'* is 0 or an integer from 1 to 4, inclusive.

In some embodiments, M is cobalt.

In some embodiments, R^{1a}, R^{1a'}, R^{4a}, R^{4a'}, R^{5a}, R^{5a'}, R^{6a}, R6^{a'}, R^{7a}, and R^{7a'} are each independently selected from hydrogen and optionally substituted C₁₋₂₀ aliphatic.

In some embodiments, R^{1a}, R^{1a'}, R^{4a}, R^{4a'}, R^{6a}, and R^{6a'} are each hydrogen.

In some embodiments, R^{5a}, R^{5a'}, R^{7a}, and R^{7a'} are each optionally substituted C₁₋₂₀ aliphatic. In some embodiments, R^{5a}, R^{5a'}, R^{7a}, and R^{7a'} are each methyl, ethyl, propyl, or butyl. In some embodiments, R^{5a}, R^{5a'}, R^{7a}, and R^{7a'} are each t-butyl.

In some embodiments, a second catalyst is:

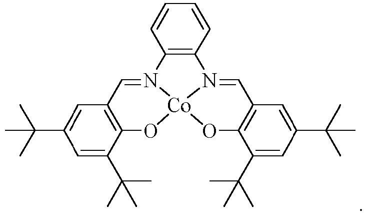

### Compositions

The present invention also provides, among other things, polymer compositions comprising triblock copolymers having a central polycarbonate core block (e.g., an epoxide-CO₂ copolymer made with a polyfunctional chain transfer agent) flanked by polyether blocks (e.g., homopolymerized epoxides), wherein the triblock copolymers of formula P1 are prepared according to the method of the invention as defined in the appended claim set. In some embodiments, provided triblock copolymer compositions described herein are derived from a process comprising at least two steps, wherein:
i) at least one epoxide and carbon dioxide are copolymerized in the presence of a chain transfer agent and a first catalyst to create a first polymer of formula P0a as shown in Scheme 1: 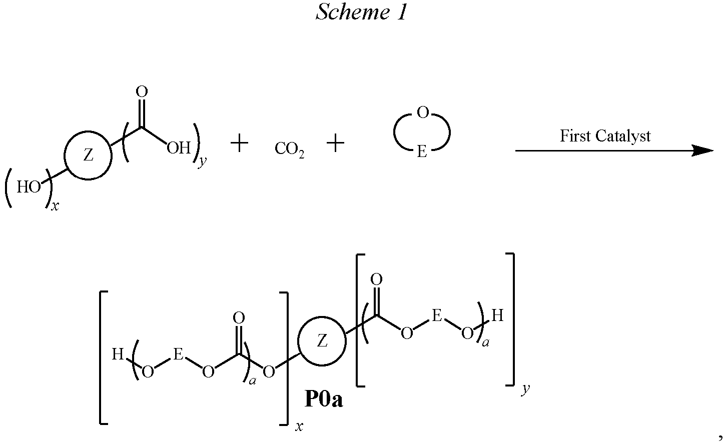 wherein each of 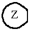 , *x, y,* and, -E-, and *a* are as defined and described in classes and subclasses herein, both singly and in combination; and
ii) an epoxide is homopolymerized on the chain ends of a first polymer by addition of a second catalyst to create a second polymer of formula **P0b** as shown in scheme 2: 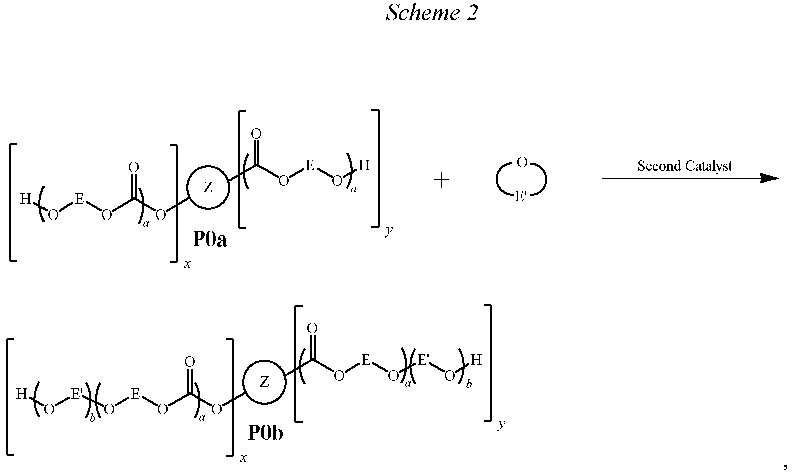 wherein 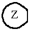 , *x, y,* -E-, -E'-, *a,* and *b* are as defined and described in classes and subclasses herein, both singly and in combination.

It will be appreciated that a first polymer of formula **P0a** corresponds to a first polymer A described above, while a second polymer of formula **P0b** corresponds to a second polymer **B-A-B** described above.

The block copolymer composition of the present invention prepared according to the method of the invention comprises a structure of formula **P1:** 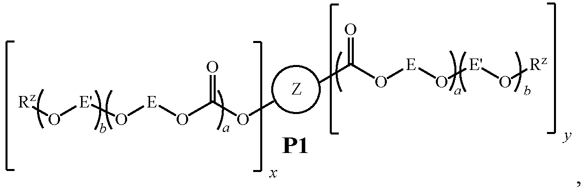 wherein: 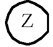
is a multivalent moiety selected from the group consisting of trivalent and tetravalent moieties;
-E- is, independently at each position in the polymer chain, 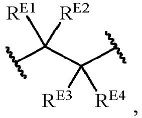
-E'- is, independently at each position in the polymer chain, 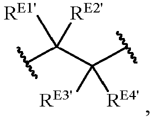
R^{E1}, R^{E2}, R^{E3}, and R^{E4} are at each occurrence in the polymer chain independently selected from the group consisting of hydrogen, fluorine, an optionally substituted C₁₋₄₀ aliphatic group, an optionally substituted C₁₋₂₀ heteroaliphatic group, and an optionally substituted aryl group, where any two or more of R^{E1}, R^{E2}, R^{E3}, and R^{E4} may optionally be taken together with intervening atoms to form one or more optionally substituted rings optionally containing one or more heteroatoms;
R^{E1'}, R^{E2'}, R^{E3'} and R^{E4'} are at each occurrence in the polymer chain independently selected from the group consisting of hydrogen, fluorine, an optionally substituted C₁₋₄₀ aliphatic group, an optionally substituted C₁₋₂₀ heteroaliphatic group, and an optionally substituted aryl group, where any two or more of R^{E1'}, R^{E2'}, R^{E3'} and R^{E4'} may optionally be taken together with intervening atoms to form one or more optionally substituted rings optionally containing one or more heteroatoms;
each R^{z} is independently selected from the group consisting of -H, -R^{z10}, -C(O)R^{z10}, - SO₂R^{z10}, -Si(R^{z10})₃, -Si(OR^{z10})₃, -SiR^{z10}(OR^{z10})₂, and -C(O)NH(R^{z10});
each R^{z10} is independently an optionally substituted moiety selected from the group consisting of C₁₋₂₀ aliphatic, C₁₋₁₂ heteroaliphatic, 6- to 14-membered aryl, and 5- to 14-membered heteroaryl;
*a* is, on average in the composition, about 2 to about 50;
*b* is, on average in the composition, about 2 to about 50; and
*x* and *y* are each independently an integer from 0 to 6 inclusive, where the sum of *x* and *y* is between 2 and 6.

It will be appreciated that when a multivalent moiety is depicted by a chemical formula, the chemical bonds, atoms, and functional groups directly adjacent to 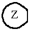 are also understood to be part of the multivalent moiety. Take the following polymer structure as an example: 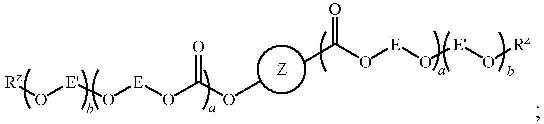 the multivalent moiety depicted immediately above comprises 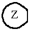 , the two chemical bonds drawn from 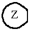 , the oxygen atom immediately left of 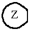 , and the carboxyl functionality immediately right of 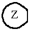 . Furthermore, such a multivalent moiety could be derived, for example, from a chain transfer agent of a structure,

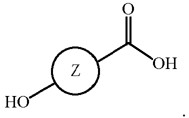

As used herein, a chain transfer agent includes any compound having two or more sites capable of initiating chain growth in the copolymerization of an epoxide and carbon dioxide. In some embodiments, such compounds do not have other functional groups that interfere with the polymerization. In general, the only requirement is that each molecule of the chain transfer agent be capable of initiating two or more polycarbonate chains. This can occur by several mechanisms including: by ring-opening an epoxide monomer, by reacting with carbon dioxide molecules to yield a moiety capable of sustaining polymer chain growth, or by a combination of these.

In some embodiments, a chain transfer agent may have two or more functional groups independently capable of reacting with carbon dioxide or an epoxide; examples of chain transfer agents include but are not limited to molecules such as diacids, glycols, diols, triols, hydroxyacids, amino acids, amino alcohols, dithiols, mercapto alcohols, saccharides, catechols, polyethers, etc. In some embodiments, a chain transfer agent may include a multiply active functional group that is itself able to react multiple times to initiate more than one polymer chain; examples of such chain transfer agents include but are not limited to functional groups having a single atom capable of reacting multiple times such as ammonia, primary amines and water, as well as functional groups having more than one nucleophilic atom such as amindines, guanidines, urea, boronic acids, phosphoric acids, etc.

In some embodiments, a chain transfer agent of the present disclosure has a structure: 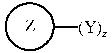 wherein:
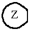 is a covalent bond or a central moiety;
-Y is each independently a functional group capable of reacting with carbon dioxide or an epoxide;
*z* is an integer between 2 and 6 inclusive.

In some embodiments, each -Y group is independently selected from the group consisting of: -OH, -C(O)OH, -CH(OR^{cta})OH, -OC(R^{cta})OH, -NHR^{cta}, -NHC(O)R^{cta}, - NHC=NR^{cta}, -NR^{cta}C=NH, -NR^{cta}C(NR^{cta}₂)=NH, -NHC(NR^{cta}₂)=NR^{cta}, -NHC(O)OR^{cta}, - NHC(O)NR^{cta}₂, -C(O)NHR^{cta}, -C(S)NHR^{cta}, -OC(O)NHR^{cta}, -OC(S)NHR^{cta}, -SH, -C(O)SH, - B(OR^{cta})OH, -P(O)*ₐ*(R^{cta})*_{b}*(OR^{cta})*_{c}*(O)*_{d}*H, -OP(O)*ₐ*(R^{cta})*_{b}*(OR^{cta})*_{c}*(O)*_{d}*H, -N(R^{cta})OH, -ON(R^{cta})H; =NOH, =NN(R^{cta})H, wherein:
each occurrence of R^{cta} is independently -H, or an optionally substituted radical selected from the group consisting of C₁₋₂₀ aliphatic, C₁₋₂₀ heteroaliphatic, 3- to 12-membered heterocyclic, and 6- to 12-membered aryl;
*a* and *b* are each independently 0 or 1, *c* is 0, 1 or 2, *d* is 0 or 1, and the sum of *a, b,* and *c* is 1 or 2.

In some embodiments, an acidic hydrogen atom bound in any of the above functional groups may be replaced by a metal atom or an organic cation without departing from the present invention (e.g. -C(O)OH may instead be -C(O)O⁻ Na⁺, -C(O)O⁻ N⁺(R)₄, -C(O)O⁻ (Ca²⁺)_{0.5}, -C(O)O⁻ PPN⁺, or -SH, may be -S⁻Na⁺, etc.). Such alternatives are included herein and alternate embodiments employing such salts are implicitly encompassed by the disclosure herein.

In some embodiments, 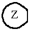 is derived from any of the chain transfer agents described or exemplified in International Patent Application No. WO 2010/028362.

In some embodiments, a multivalent moiety, 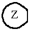 , may be derived from a chain transfer agent. In some embodiments, 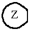 embedded within polycarbonate chains described herein is derived from a chain transfer agent having two or more sites from which epoxide-CO₂ copolymerization can occur. In some embodiments, 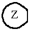 comprises one or more atoms selected from the group consisting of carbon, oxygen, nitrogen, phosphorous, sulfur, and boron. In some embodiments, 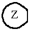 comprises one or more carbon atoms. In some embodiments, 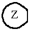 comprises a nitrogen atom. In some embodiments, 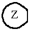 comprises a phosphorous atom. In some embodiments, 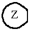 comprises a boron atom. In some embodiments, 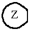 comprises a phosphorous atom. In some embodiments, 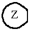 comprises a polymer chain.

In some embodiments, a chain transfer agent has a formula: 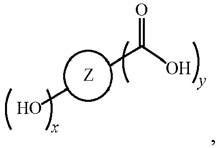 wherein 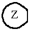 , *x*, and *y* are as defined above and described in classes and subclasses herein, both singly and in combination.

In some embodiments, *x* is 2 and *y* is 0. In some embodiments, 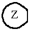 is derived from a polyhydric alcohol with two hydroxy groups. In some embodiments, a triblock copolymer composition comprises a structure of formula **P2:** 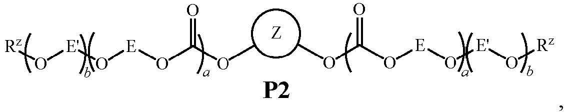 wherein 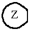 , -E-, -E'-, R^{z}, *a,* and *b* are as defined above and described in classes and subclasses herein, both singly and in combination.

As described herein, 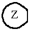 may be derived from a dihydric alcohol, such as a dihydric alcohol comprises a C₂₋₂₀ diol. Exemplary dihydric alcohol are: 1,2-ethanediol, 3-Oxa-1,5-pentanediol (i.e., diethylene glycol), 1,2-propanediol, 4-Oxa-2,6-hexandiol (i.e., dipropylene glycol), 1,3-propanediol, 1,2-butanediol, 1,3-butanediol, 1,4-butanediol, 1,5-pentanediol, 2,2-dimethylpropane-1,3-diol, 2-butyl-2-ethylpropane-1,3-diol, 1,5-hexanediol, 1,6-hexanediol, 1,8-octanediol, 1,10-decanediol, 1,12-dodecanediol, 2,2,4,4-tetramethylcyclobutane-1,3-diol, 1,3-cyclopentanediol, 1,2-cyclohexanediol, 1,3-cyclohexanediol, 1,4- cyclohexanediol, 1,2-cyclohexanedimethanol, 1,3-cyclohexanedimethanol, 1,4-cyclohexanedimethanol, 1,4-cyclohexanediethanol, and alkoxylated derivatives of any of these.

Also described herein is a dihydric alcohol comprising an alkoxylated derivative of a compound selected from the group consisting of: a diol, a diacid, or a hydroxy acid. The alkoxylated derivatives may comprise ethoxylated or propoxylated compounds.

In some embodiments, *x* is 3 and *y* is 0. In some embodiments, 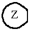 is derived from a polyhydric alcohol with three hydroxy groups. In some embodiments, a triblock copolymer composition comprises a structure of formula **P3:** 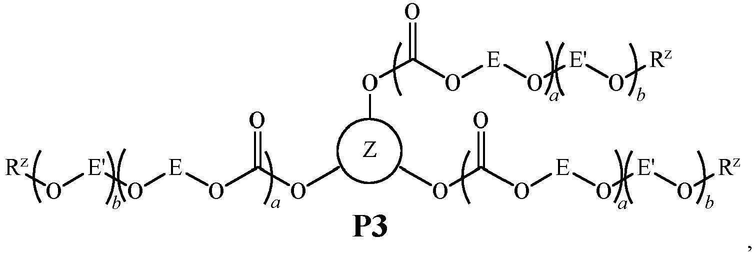 wherein 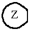 , -E-, -E'-, R^{z}, *a,* and *b* are as defined above and described in classes and subclasses herein, both singly and in combination.

In some embodiments, 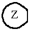 is derived from a triol. In some embodiments, a triol is selected from the group consisting of: aliphatic triols having a molecular weight less than 500, trimethylolethane, trimethylolpropane, glycerol, 1,2,4-butanetriol, 1,2,6-hexanetriol, tris(2-hydroxyethyl)isocyanurate, hexahydro-1,3,5-tris(hydroxyethyl)-s-triazine, 6-methylheptane-1,3,5-triol, and alkoxylated analogs of any of these.

In some embodiments, 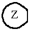 is derived from an alkoxylated derivative of a trifunctional carboxylic acid or trifunctional hydroxy acid. In some embodiments, alkoxylated polymeric derivatives comprise ethoxylated or propoxylated compounds.

In some embodiments, *x* is 4 and *y* is 0. In some embodiments, 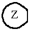 is derived from a polyhydric alcohol with four hydroxy groups. In some embodiments, a triblock copolymer composition comprises a structure of formula **P4:** 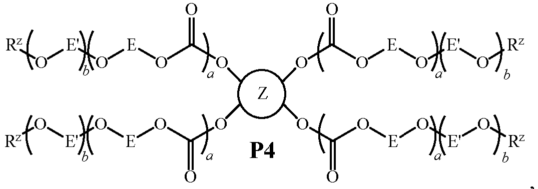 wherein 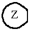 , -E-, -E'-, R^{z}, *a,* and *b* are as defined above and described in classes and subclasses herein, both singly and in combination.

In some embodiments, *x* is 5 and *y* is 0. In some embodiments, 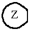 is derived from a polyhydric alcohol with five hydroxy groups. In some embodiments, a triblock copolymer composition comprises a structure of formula **P5:** 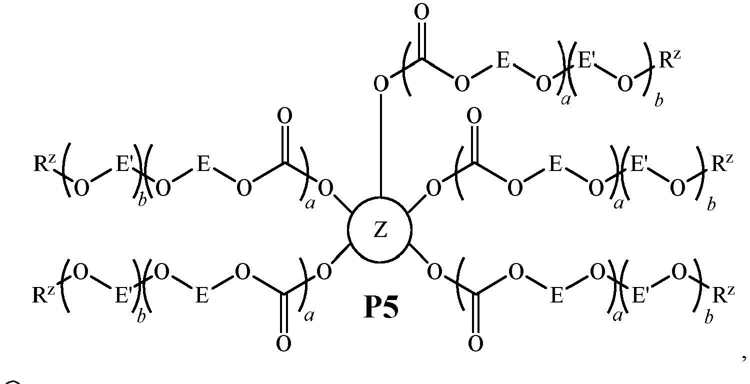 wherein 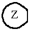 , -E-, -E'-, R^{z}, *a,* and *b* are as defined above and described in classes and subclasses herein, both singly and in combination.

In some embodiments, *x* is 6 and *y* is 0. In some embodiments, 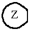 is derived from a polyhydric alcohol with six hydroxy groups. In some embodiments, a triblock copolymer composition comprises a structure of formula **P6:** 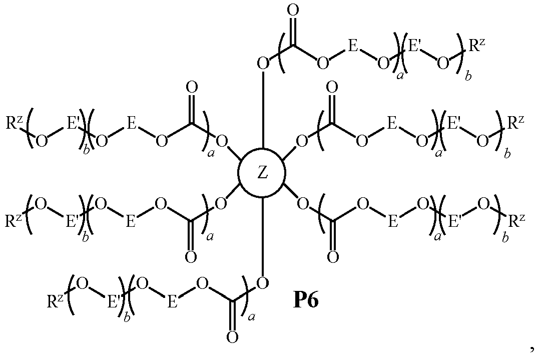 wherein 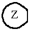 , -E-, -E'-, R^{z}, *a,* and *b* are as defined above and described in classes and subclasses herein, both singly and in combination.

In some embodiments, *x* is 1 and *y* is 1. In some embodiments, 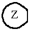 is derived from hydroxyacid In some embodiments, a triblock copolymer composition comprises a structure of formula **P7:** 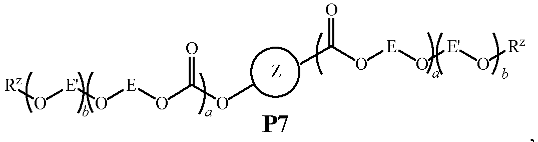 wherein 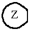 , -E-, -E'-, R^{z}, *a,* and *b* are as defined above and described in classes and subclasses herein, both singly and in combination.

In some embodiments, *x* is 0 and *y* is 2. In some embodiments, 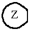 is derived from a dicarboxylic acid. In some embodiments, a triblock copolymer composition comprises a structure of formula **P8:** 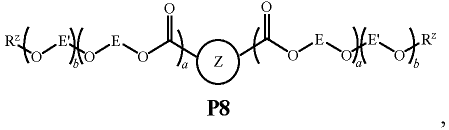 wherein 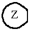 , -E-, -E'-, R^{z}, *a,* and *b* are as defined above and described in classes and subclasses herein, both singly and in combination.

In some embodiments, 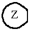 is derived from a molecule comprising phosphorous. In some embodiments, 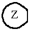 has a formula -P(O)(OR)ₖ-, wherein *k* is 0, 1, or 2; and each R is independently hydrogen, an optionally substituted C₁₋₂₀ aliphatic group, or an optionally substituted aryl group. In some embodiments, 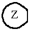 is derived from a molecule comprising phosphorous and selected from the group consisting of:

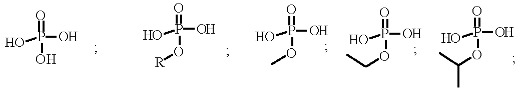

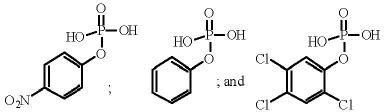

Disclosed herein is that 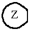 has a formula -P(O)(OR)*ⱼ*(R)*ₖ*-, wherein j is 1 or 2; *k* is 0; the sum of j and *k* is not more than 2; and each R is independently hydrogen, an optionally substituted C₁₋₂₀ aliphatic group, or an optionally substituted aryl group. Disclosed herein is that 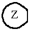 is derived from a molecule comprising phosphorous and selected from the group consisting of: 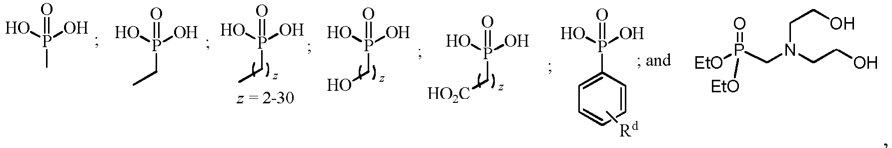 wherein:
R^{d} is selected from the group consisting of: halogen, -OR, -NR₂, -SR, -CN, -NO₂, - SO₂R, -SOR, -SO₂NR₂, -CNO, -NRSO₂R, -NCO, -N₃, -SiR₃, or an optionally substituted group selected from the group consisting of C₁₋₂₀ aliphatic, C₁₋₂₀ heteroaliphatic comprising 1-4 heteroatoms independently selected from the group consisting of nitrogen, oxygen, and sulfur, 6-10 membered aryl; 5-10 membered heteroaryl comprising 1-4 heteroatoms independently selected from nitrogen, oxygen, or sulfur; and 4-7 membered heterocyclic comprising 1-2 heteroatoms independently selected from the group consisting of nitrogen, oxygen, and sulfur.

In some embodiments, 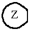 is derived from a molecule comprising boron. Disclosed herein is that 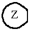 has a formula -B(R)-, and each R is independently hydrogen, an optionally substituted C₁₋₂₀ aliphatic group, or an optionally substituted aryl group. Also disclosed herein is that 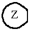 is derived from a molecule comprising boron and selected from the group consisting of: 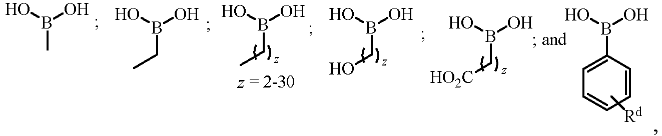 wherein R^{d} is as defined above and described in classes and subclasses herein.

In some embodiments, -E- is, independently at each position in the polymer chain, selected from the group consisting of: 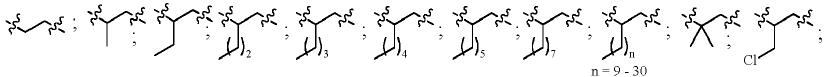 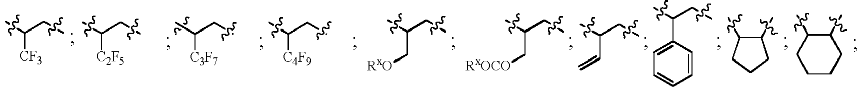 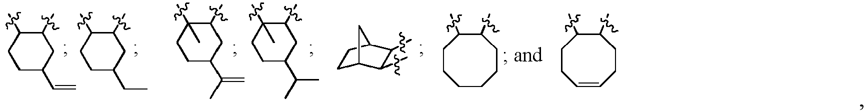 wherein each R^{x} is independently selected from the group consisting of: optionally substituted aliphatic, optionally substituted heteroaliphatic, optionally substituted aryl, and optionally substituted heteroaryl.

In some embodiments, -E- is, independently at each position in the polymer chain, selected from the group consisting of: 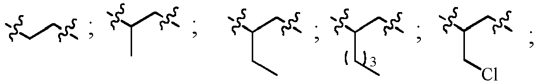 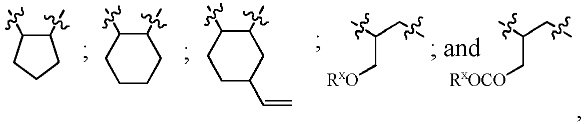 wherein each R^{x} is as defined above and described in classes and subclasses herein.

In some embodiments, -E'- is, independently at each position in the polymer chain, selected from the group consisting of: 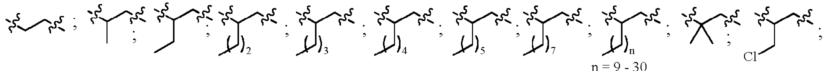 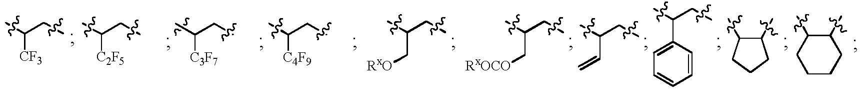 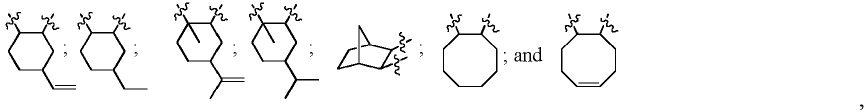 wherein each R^{x} is independently selected from the group consisting of: optionally substituted aliphatic, optionally substituted heteroaliphatic, optionally substituted aryl, and optionally substituted heteroaryl.

In some embodiments, -E'- is, independently at each position in the polymer chain, selected from the group consisting of: 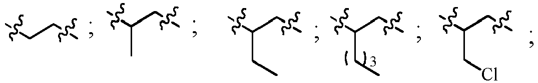 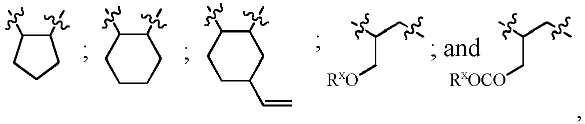 wherein each R^{x} is as defined above and described in classes and subclasses herein.

In some embodiments, -E- is, independently at each position in the polymer chain, derived from an epoxide selected from the group consisting of: ethylene oxide, propylene oxide, 1,2-butylene oxide, 1,2-hexylene oxide, oxides of higher alpha olefins (e.g. C₆₋₄₀ alpha olefins), butadiene monoepoxide, styrene oxide, epichlorohydrin, ethers or esters of glycidol, cyclopentene oxide, cyclohexene oxide, 3-vinyl cyclohexene oxide, 3-ethyl cyclohexene oxide, and combinations of any two or more of these.

In some embodiments, -E'- is, independently at each position in the polymer chain, derived from an epoxide selected from the group consisting of: ethylene oxide, propylene oxide, 1,2-butylene oxide, 1,2-hexylene oxide, oxides of higher alpha olefins (e.g. C₆₋₄₀ alpha olefins), butadiene monoepoxide, styrene oxide, epichlorohydrin, ethers or esters of glycidol, cyclopentene oxide, cyclohexene oxide, 3-vinyl cyclohexene oxide, 3-ethyl cyclohexene oxide, and combinations of any two or more of these.

In some embodiments, -E- is, independently at each position in the polymer chain, derived from ethylene oxide or propylene oxide. In some embodiments, -E- is derived predominantly from ethylene oxide (e.g., at each occurrence of -E-, R^{E1}, R^{E2}, R^{E3}, and R^{E4} are hydrogen). In some embodiments, -E- is derived predominantly from propylene oxide (e.g., at each occurrence of -E-, one of R^{E1}, R^{E2}, R^{E3}, and R^{E4} is methyl and the others are hydrogen).

In some embodiments, -E'- is, independently at each position in the polymer chain, derived from ethylene oxide or propylene oxide. In some embodiments, -E'- is derived predominantly from ethylene oxide (e.g., at each occurrence of -E'-, R^{E1'}, R^{E2'}, R^{E3'}, and R^{E4'} are hydrogen). In some embodiments, -E'- is derived predominantly from propylene oxide (e.g., at each occurrence of -E'-, one of R^{E1'}, R^{E2'}, R^{E3'}, and R^{E4'} is methyl and the others are hydrogen). In some embodiments, at least a portion of the -E'- moieties are derived from ethylene oxide. In some embodiments, at least a portion of the -E'- moieties are derived from propylene oxide.

In some embodiments, both -E- and -E'- are derived from substituted epoxides (i.e., other than ethylene oxide), such that a head-to-tail ratio of enchained epoxide monomers results in each block of the polymer. In some embodiments, a polymer composition is characterized in that on average in the composition, the head-to-tail ratio within the moieties, 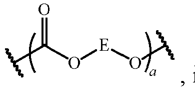 is higher than the head-to-tail ratio within the moieties, 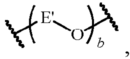 wherein the head-to-tail ratio is measured as viewed from the 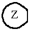 moiety toward the direction of the chain end.

In some embodiments, a polymer composition is characterized in that within the moiety, 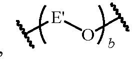 , the regiochemistry is predominantly tail-to-head.

In some embodiments, a polymer composition is characterized in that more than 20%, more than 30%, more than 40%, more than 50%, more than 55%, more than 60%, more than 65%, more than 70%, more than 75%, more than 80%, more than 85%, more than 90%, or more than 95% of the chain ends have the structure

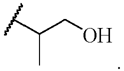

In some embodiments, where polymer compositions are derived from monosubstituted epoxides (e.g. such as propylene oxide, 1,2-butylene oxide, epichlorohydrin, or a glycidol derivative), the aliphatic polycarbonates are characterized in that they are regioregular. Regioregularity may be expressed as the percentage of adjacent monomer units that are oriented in a head-to-tail arrangement within the polymer chain.

In some embodiments, a provided polymer composition is characterized in that polycarbonate chains of the polymer composition have a head-to-tail content greater than about 80%, as determined by an appropriate analytical technique, for example, ¹H or ¹³C NMR spectroscopy. In some embodiments, a head-to-tail content is greater than about 85%. In some embodiments, a head-to-tail content is greater than about 90%. In some embodiments, a head-to-tail content is greater than about 91%. In some embodiments, a head-to-tail content is greater than about 92%. In some embodiments, a head-to-tail content is greater than about 93%. In some embodiments, a head-to-tail content is greater than about 94%. In some embodiments, a head-to-tail content is greater than about 95%. In some embodiments, a head-to-tail content is greater than about 97%. In some embodiments, a head-to-tail content is greater than about 99%.

In some embodiments, a provided polymer composition is characterized in that polyether chains of the polymer composition have a head-to-tail content greater than about 50%. In some embodiments, a head-to-tail content is greater than about 60%. In some embodiments, a head-to-tail content is greater than about 70%. In some embodiments, a head-to-tail content is greater than about 85%. In some embodiments, a head-to-tail content is greater than about 90%. In some embodiments, a head-to-tail content is greater than about 91%. In some embodiments, a head-to-tail content is greater than about 92%. In some embodiments, a head-to-tail content is greater than about 93%. In some embodiments, a head-to-tail content is greater than about 94%. In some embodiments, a head-to-tail content is greater than about 95%. In some embodiments, a head-to-tail content is greater than about 97%. In some embodiments, a head-to-tail content is greater than about 99%.

In some embodiments, a provided polymer composition is characterized in that polyether chains of the polymer composition have a head-to-tail content less than about 50%. In some embodiments, a head-to-tail content is less than about 40%. In some embodiments, a head-to-tail content is less than about 30%. In some embodiments, a head-to-tail content is less than about 15%. In some embodiments, a head-to-tail content is less than about 10%. In some embodiments, a head-to-tail content is less than about 9%. In some embodiments, a head-to-tail content is less than about 8%. In some embodiments, a head-to-tail content is less than about 7%. In some embodiments, a head-to-tail content is less than about 6%. In some embodiments, a head-to-tail content is less than about 5%. In some embodiments, a head-to-tail content is less than about 3%. In some embodiments, a head-to-tail content is less than about 1%.

In some embodiments, a provided polymer composition is characterized in that polyether chains of the polymer composition have a tail-to-head content greater than about 50%. In some embodiments, a tail-to-head content is greater than about 60%. In some embodiments, a tail-to-head content is greater than about 70%. In some embodiments, a tail-to-head content is greater than about 85%. In some embodiments, a tail-to-head content is greater than about 90%. In some embodiments, a tail-to-head content is greater than about 91%. In some embodiments, a tail-to-head content is greater than about 92%. In some embodiments, a tail-to-head content is greater than about 93%. In some embodiments, a tail-to-head content is greater than about 94%. In some embodiments, a tail-to-head content is greater than about 95%. In some embodiments, a tail-to-head content is greater than about 97%. In some embodiments, a tail-to-head content is greater than about 99%.

In some embodiments, a triblock copolymer composition is characterized in that it has an average molecular weight (M*ₙ*) in the range of about 500 g/mol to about 250,000 g/mol, as is determined by an appropriate analytical technique, for example, gel permeation chromatography (GPC). In some embodiments, a triblock copolymer composition has a M*ₙ* in the range of about 500 g/mol to about 200,000 g/mol. In some embodiments, a triblock copolymer composition has a M*ₙ* in the range of about 500 g/mol to about 150,000 g/mol. In some embodiments, a triblock copolymer composition has a M*ₙ* in the range of about 500 g/mol to about 100,000 g/mol. In some embodiments, a triblock copolymer composition has a M*ₙ* in the range of about 500 g/mol to about 75,000 g/mol. In some embodiments, a triblock copolymer composition has a M*ₙ* in the range of about 500 g/mol to about 50,000 g/mol. In some embodiments, a triblock copolymer composition has a M*ₙ* in the range of about 500 g/mol to about 25,000 g/mol. In some embodiments, a triblock copolymer composition has a M*ₙ* in the range of about 500 g/mol to about 10,000 g/mol. In some embodiments, a triblock copolymer composition has a M*ₙ* in the range of about 500 g/mol to about 5,000 g/mol. In some embodiments, a triblock copolymer composition has a M*ₙ* in the range of about 500 g/mol to about 4,000 g/mol. In some embodiments, a triblock copolymer composition has a M*ₙ* in the range of about 500 g/mol to about 3,000 g/mol. In some embodiments, a triblock copolymer composition has a M*ₙ* in the range of about 500 g/mol to about 2,000 g/mol.

In some embodiments, a triblock copolymer composition is characterized in that it has a M*ₙ* less than about 250,000 g/mol , as is determined by an appropriate analytical technique, for example, gel permeation chromatography (GPC). In some embodiments, a triblock copolymer composition has a M*ₙ* less than about 200,000 g/mol. In some embodiments, a triblock copolymer composition has a M*ₙ* less than about 150,000 g/mol. In some embodiments, a triblock copolymer composition has a M*ₙ* less than about 100,000 g/mol. In some embodiments, a triblock copolymer composition has a M*ₙ* less than about 75,000 g/mol. In some embodiments, a triblock copolymer composition has a M*ₙ* less than about 50,000 g/mol. In some embodiments, a triblock copolymer composition has a M*ₙ* less than about 25,000 g/mol. In some embodiments, a triblock copolymer composition has a M*ₙ* less than about 10,000 g/mol. In some embodiments, a triblock copolymer composition has a M*ₙ* less than about 5,000 g/mol. In some embodiments, a triblock copolymer composition has a M*ₙ* less than about 4,000 g/mol. In some embodiments, a triblock copolymer composition has a M*ₙ* less than about 3,000 g/mol. In some embodiments, a triblock copolymer composition has a M*ₙ* less than about 2,000 g/mol.

In some embodiments, a triblock copolymer composition is characterized in that it has a narrow molecular weight distribution. This can be indicated by the polydispersity index (PDI) of the triblock copolymer composition. In some embodiments, a triblock copolymer composition has a PDI less than 2. In some embodiments, a triblock copolymer composition has a PDI less than 1.8. In some embodiments, a triblock copolymer composition has a PDI less than 1.5. In some embodiments, a triblock copolymer composition has a PDI less than 1.4. In some embodiments, a triblock copolymer composition has a PDI between about 1.0 and 1.2. In some embodiments, a triblock copolymer composition has a PDI between about 1.0 and 1.1.

In some embodiments, a triblock copolymer composition is characterized in that it has a viscosity less than 20,000 centipoise at 50 °C. In some embodiments, a triblock copolymer composition has a viscosity less than 10,000 centipoise at 50 °C. In some embodiments, a triblock copolymer composition has a viscosity less than 7,500 centipoise at 50 °C. In some embodiments, a triblock copolymer composition has a viscosity less than 5,000 centipoise at 50 °C. In some embodiments, a triblock copolymer composition has a viscosity less than 4,000 centipoise at 50 °C. In some embodiments, a triblock copolymer composition has a viscosity less than 3,000 centipoise at 50 °C.

### Higher Polymers

The present disclosure further encompasses higher polymers derived from the triblock copolymers described herein. In certain embodiments, such higher polymers are formed by reacting the polyols with suitable cross-linking agents. Examples of higher polymers that may be made using the polyols of the present invention as well as suitable reagents, conditions, processing methods and formulations are disclosed in WO 2011/163250.

In certain embodiments, cross-linkers including functional groups reactive toward hydroxyl groups are selected, for example, from epoxy, melamine, and isocyanate groups. In certain embodiments, such cross-linking agents are polyisocyanates.

In some embodiments, a difunctional or higher-functionality isocyanate is selected from di-isocyanates, the biurets and cyanurates of diisocyanates, and the adducts of diisocyanates to polyols. Suitable diisocyanates have generally from 4 to 22 carbon atoms. The diisocyanates are typically selected from aliphatic, cycloaliphatic and aromatic diisocyanates, for example 1,4-diisocyanatobutane, 1,6-diisocyanatohexane, 1,6-diisocyanato-2,2,4-trimethylhexane, 1,6-diisocyanato-2,4,4-trimethylhexane, 1,2-, 1,3- and 1,4-diisocyanatocyclohexane, 2,4- and 2,6-diisocyanato-1-methylcyclohexane, 4,4'-bis(isocyanatocyclohexyl)methane, isophorone diisocyanate (=1-isocyanato-3,3,5-trimethyl-5-isocyanatomethylcyclohexane), 2,4- and 2,6-tolylene diisocyanate, tetramethylene-p-xylylene diisocyanate (=1,4-bis(2-isocyanatoprop-2-yl)benzene), 4,4'-diisocyanatodiphenylmethane, preferably 1,6-diisocyanatohexane diisocyanatohexane and isophorone diisocyanate, and mixtures thereof.

In certain embodiments, crosslinking compounds comprise the cyanurates and biurets of aliphatic diisocyanates. In certain embodiments, crosslinking compounds are the di-isocyanurate and the biuret of isophorone diisocyanate, and the isocyanate and the biuret of 1,6-diisocyanatohexane. Examples of adducts of diisocyanates to polyols are the adducts of the abovementioned diisocyanates to glycerol, trimethylolethane and trimethylolpropane, for example the adduct of tolylene diisocyanates to trimethylolpropane, or the adducts of 1,6-diisocyanatohexane or isophorone diisocyanate to trimethylpropane and/or glycerol.

In some embodiments, a polyisocyanate used, may, for example, be an aromatic polyisocyanate such as tolylene diisocyanate, diphenylmethane diisocyanate or polymethylene polyphenyl isocyanate, an aliphatic polyisocyanate such as hexamethylene diisocyanate, xylylene diisocyanate, dicyclohexylmethane diisocyanate, lysine diisocyanate or tetramethylxylylene diisocyanate, an alicyclic polyisocyanate such as isophorone diisocyanate, or a modified product thereof.

In some embodiments, a modified product of a polyisocyanate is a prepolymer modified product which is a reaction product of a low molecular weight diol with a low molecular weight triol, a buret product which is a reaction product with water, or a trimer having an isocyanurate skeleton.

The isocyanate group-terminated prepolymer can be produced by reacting a stoichiometrically excess amount of a polyisocyanate to the polyol composition. It can be produced by thermally reacting the polyol composition with the polyisocyanate at a temperature of from 60 to 100 °C for from 1 to 30 hours in a dry nitrogen stream in the presence or absence of a solvent and optionally in the presence of a urethane-forming catalyst. In some embodiments, a urethane-forming catalyst is an organometallic compound of tin, lead or titanium. In some embodiments a urethane-forming catalyst is an organic tin compound, such as dibutyltin dilaurate, dibutyltin dioctoate or stannous octoate.

An isocyanate group-terminated prepolymer can be used for uses known in the art and familiar to the skilled artisan, such as for a humidity curable composition which is cured by a reaction with moisture in air, a two-part curable composition to be reacted with a curing agent such as a polyamine, a polyol or a low molecular weight polyol, a casting polyurethane elastomer, or other applications.

### Examples

The following Examples are useful to confirm aspects of the disclosure described above and to exemplify certain embodiments of the disclosure.

Example 1: Effects of catalysts on triblock copolymer polymerization and polypropylene glycol end-blocking of a polycarbonate homopolymer starter.

### Preparation of polypropylene carbonate (PPC) polyol

PPC polyol was first prepared using neopentyl glycol (NPG) as a starter and a cobalt salen catalyst (see, e.g., catalysts and methods disclosed in WO 2010/022388 and WO 2010/028362) and the product was isolated as a highly viscous liquid. The number average molecular weight, M*ₙ*, calculated from ¹H-NMR spectra was 710 Da. The measured American Public Health Association (APHA) color value, a measurement of liquid color, was 84.2. A stock solution of the PPC homopolymer was prepared in dry toluene (0.53 g polyol/g solution).

### Preparation of B-A-B Polyol: PPG end-blocking of PPC core

4.1 g of the above-described PPC homopolymer stock solution was added to a dry 3-neck 250 mL round bottom flask, containing 12 mL dry toluene, equipped with stir bar and thermocouple probe, and immersed in an ice-cooled water bath (about 5-7 °C). 1.5 mL of propylene oxide (PO) was added using an Eldex pump at a flow rate of 1.5 mL/min. The resulting solution was stirred for 15 min to achieve homogeneity. Separately, a desired catalyst was weighed in a glovebox and dissolved in suitable solvent (or mixture of solvents). The catalyst solution was transferred to the reaction flask via cannula. The polymerization of PO was observed by a rise in reaction temperature. After the solution cooled down, the remaining PO was added at a desired rate. After about 20 h, the reaction was terminated by adding 100 µL hypophosphorous acid solution (50% w/v in H₂O) dissolved in 2 mL of acetone. The solution was passed through basic alumina and the solvent was removed under rotatory evaporation followed by high-vacuum Schlenk line at 70 °C and at 100 mTorr pressure for 30 min to 1 h to provide a colorless viscous oil.

### Calculating PPG end-blocking efficiency of PPC

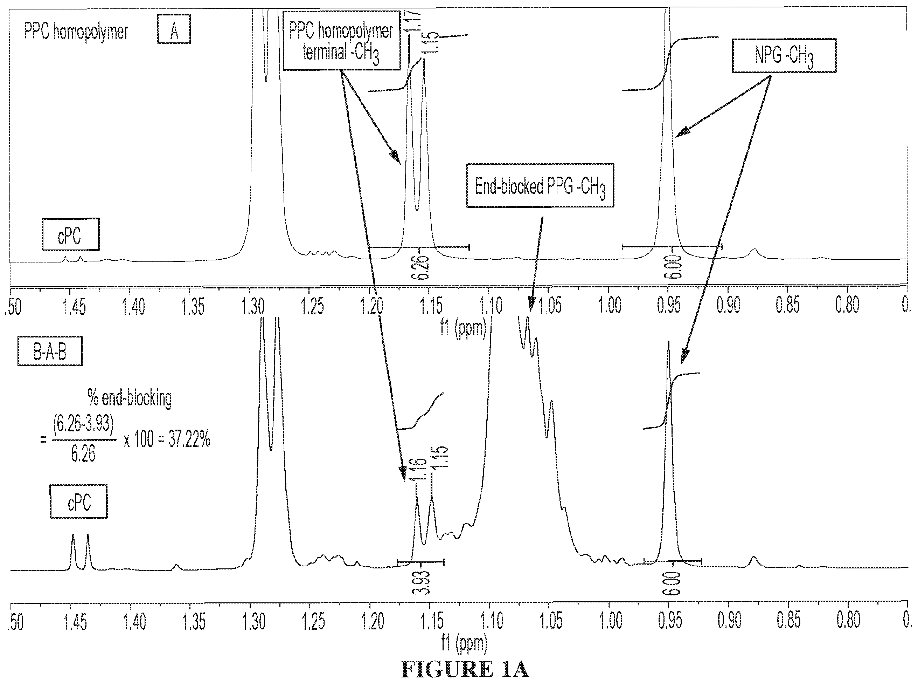

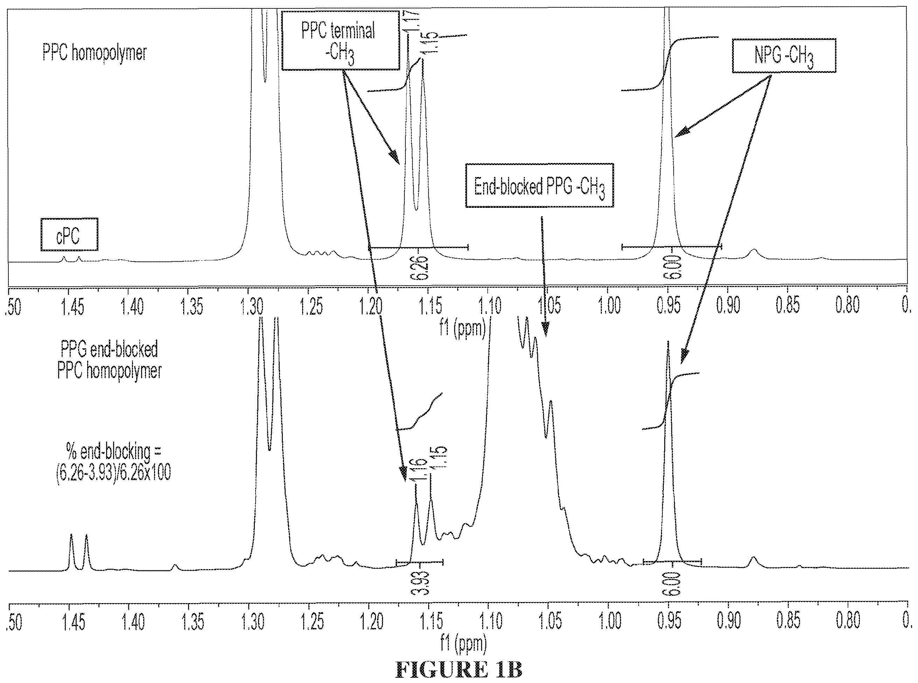

In ¹H-NMR spectra, terminal methyl protons of PPC appeared at 1.18 ppm as a doublet. Upon end-blocking with PPG the area under that peak was reduced proportionately. Therefore, end-blocking efficiency was calculated from the peak area reduction. Since NPG methyl protons appearing at 0.97 ppm did not change during the process of end-blocking, it was used as an internal standard (Figures 1A and 1B).

### End-blocking efficiency for different PPG polymerization catalysts

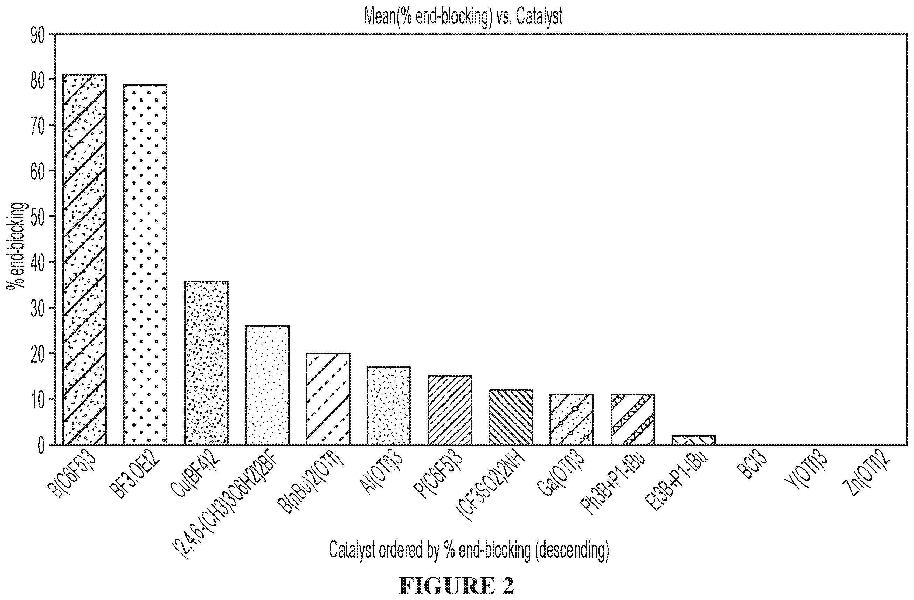

Below, Table 1 summarizes the use of different catalysts to obtain PPG end-blocked PPC under similar reaction conditions (see also Figure 2). Catalysts included in Table 1 were handled in a nitrogen filled glovebox or with air-free techniques. Borane catalysts BF₃·OEt₂ and B(C₆F₅)₃ demonstrated the ability to function as catalysts for PPG end-blocking of PPC. However, BF₃·OEt₂ exhibited a lower exotherm than B(C₆F₅)₃ - about 5 °C versus 15 °C, respectively. Additionally, for BF₃·OEt₂ the exotherm was observed immediately after catalyst addition. However, B(C₆F₅)₃ demonstrated about a 25 min induction period to initiate propylene oxide homopolymerization with higher catalytic activity (higher [PPC]:[Cat] ratio).

**Table 1.**

| **Catalyst** | **Solvent for Catalyst** | **[PO]:[PPC]:[Cat.]** | **PPG produced?** | **End-blocking Efficiency (%)** |
|---|---|---|---|---|
| Y(OTf)₃ | PhMe, MeCN | 757:53:1 | No | 0 |
| Zn(OTf)₂ | PhMe (dispersion) | 120:0:1 | No | 0 |
| Ga(OTf)₃ | PhMe (dispersion) | 258:10.1:1 | Yes | 11 |
| Al(OTf)₃ | Et₂O, MeCN | 299:10:1 | Yes | 17 |
| (*n*Bu)₂B(OTf) | Et₂O | 68:5:1 | Yes | 20 |
| BF₃·OEt₂ | Et₂O | 110:8:1 | Yes | 79 |
| BCl₃ | PhMe | 83:5.7:1 | No | 0 |
| P(C₆F₅)₃ | PhMe | 149:10:1 | Yes | 15 |
| Cu(BF₄)₂ | Et₂O, MeCN | 151:7.6:1 | Yes | 36 |
| [2,4,6-(CH₃)₃C₆H₂]₂BF | PhMe | 149:10:1 | Yes | 26 |
| (CF₃SO₂)₂NH | PhMe | 112:9.4:1 | Yes | 12 |
| Ph₃B + P₁-^{t}Bu | PhMe | 95:6.8:1 | Yes | 11 |
| Et₃B + P₁-^{t}Bu | Et₂O | 95:6.8:1 | Yes | 2 |
| B(C₆F₅)₃ | PhMe | 290:21:1 | Yes | 81 |

### Primary versus secondary hydroxyl end-group selectivity for different PPG polymerization catalysts

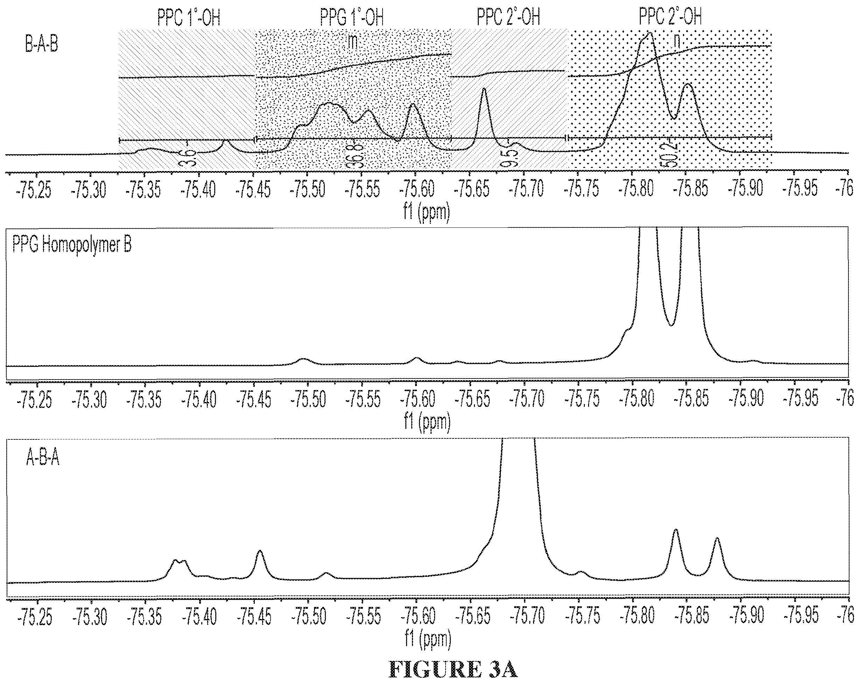

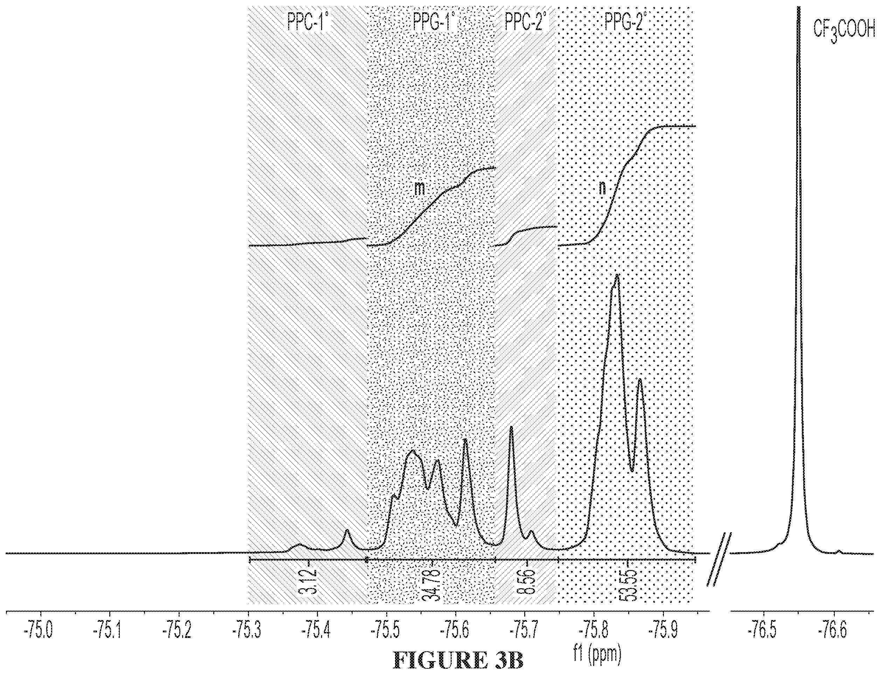

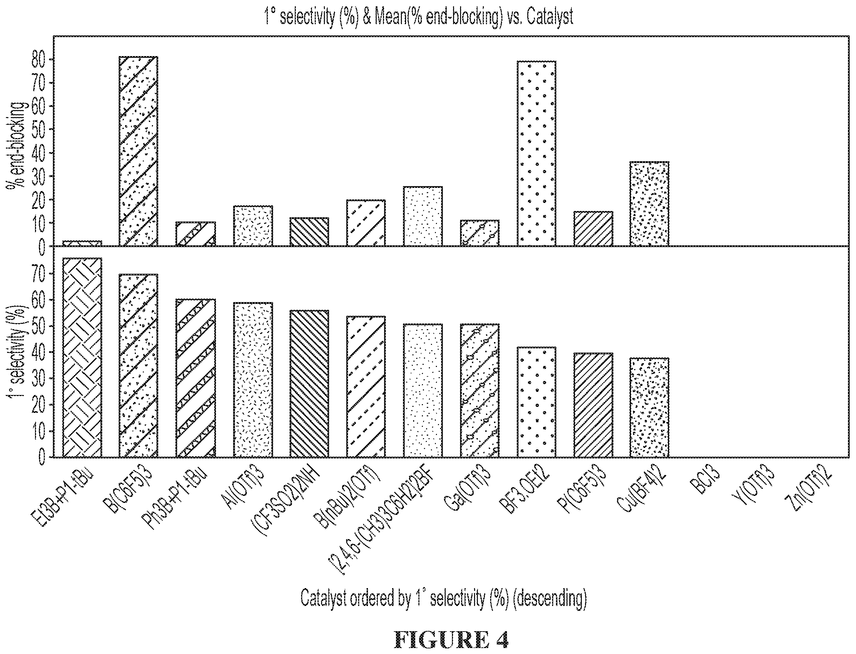

Primary versus secondary hydroxyl end-group (1°- vs. 2°-OH) selectivity was determined by reacting PPG end-blocked PPC with (CF₃CO)₂O and determining the 1° vs. 2°-OH amounts from ¹⁹F-NMR (Figures 3A and 3B). (CF₃CO)₂O derivatized 1°-OH exhibited ¹⁹F-NMR peaks downfield relative to (CF₃CO)₂O derivatized 2°-OH. Further, because of the electron withdrawing carbonate linkage, PPC 1°-OH exhibited downfield ¹⁹F-NMR peaks relative to PPG 1°-OH. Below, Table 2 summarizes the selectivity of different catalysts toward 1° versus 2°-OH (see also Figure 4).

**Table 2.**

| **Catalyst** | **1°-OH (m) (%)** | **2°-OH (n) (%)** | **Total 1°-OH (%)** | **Total 2°-OH (%)** | **1° selectivity m / (m+n) x 100** |
|---|---|---|---|---|---|
| Ga(OTf)₃ | 29.71 | 29.01 | 35.73 | 64.27 | 50.60 |
| Al(OTf)₃ | 22.72 | 15.72 | 31.28 | 68.72 | 59.10 |
| BF₃·OEt₂ | 36.76 | 50.38 | 40.65 | 59.35 | 42.18 |
| (*n*Bu)₂B(OTf) | 25.91 | 22.06 | 35.25 | 64.75 | 54.01 |
| P(C₆F₅)₃ | 5.44 | 8.16 | 18.75 | 81.25 | 40.0 |
| Cu(BF₄)₂ | 28.99 | 47.39 | 42.63 | 57.37 | 37.95 |
| [2,4,6-(CH₃)₃C₆H₂]₂BF | 27.52 | 26.37 | 37.82 | 62.18 | 51.07 |
| (CF₃SO₂)₂NH | 8.5 | 6.67 | 23.72 | 76.28 | 56.03 |
| Ph₃B + P₁-^{t}Bu | 7.97 | 5.21 | 24.07 | 75.93 | 60.47 |
| Et₃B + P₁-^{t}Bu | 13.14 | 4.13 | 31.7 | 68.3 | 76.08 |
| B(C₆F₅)₃ | 55.78 | 24.29 | 59.31 | 40.69 | 69.66 |

### Example 1b: Preparation of A-B-A block copolymer polyol

PPC block copolymer A-B-A was prepared as described in Example 1, but a 1,000 Da PPG diol was used as the starter instead of neopentyl glycol. See, for example, WO 2010/028362 and WO 2010/062703.

### Example 2: Preparation of polypropylene glycol end-blocked polypropylene carbonate (example B-A-B block copolymer) using B(C₆F₅)₃ and characterization of the same

### PPG end-blocking of PPC core using B(C₆F₅)₃.

PPC homopolymer was first prepared using neopentylglycol (NPG) as a starter and a cobalt salen catalyst (see, e.g., catalysts and methods disclosed in WO2010/022388 and WO2010/028362). The titrated OH# was calculated to be 117.5. The average molecular weight, Mₙ, was calculated from the OH# and determined to be 955 Da. A stock solution of PPC homopolymer was prepared in dry toluene (1.013 g/g of toluene).

PPC stock solution (40 g) was added to a dry 3-neck 250 mL round bottom flask containing 18 mL dry toluene, equipped with a stir bar and thermocouple probe, and immersed in ice-cooled water bath (10 °C). Propylene oxide (PO, 9 mL), corresponding to about 25-30% of the total amount eventually added, was added using an Eldex pump at a flow rate of 1.5 mL/min. The solution was stirred for 15 min to achieve homogeneity. Separately, B(C₆F₅)₃ was weighed in a glovebox and dissolved in 2.5-3.0 mL dry toluene in a dry 1-neck 15 mL round-bottomed flask. The catalyst solution was then transferred to the reaction flask via cannula. The reaction mixture was stirred until a rise in reaction temperature was observed, indicating that the PO polymerization had started.

After the solution cooled back down to 10 °C, the remaining PO was added (at a rate of 0.4 mL/min). The reaction was stirred for 30 min then quenched by adding 75 µL hypophosphorous acid solution (50% w/v in H₂O) dissolved in 2 mL of acetone. Kyowaad 600 (360 mg) was added to the reaction mixture and stirred at 65 °C for 1 hr. The solution was filtered through 1 µm nylon filter. The solvent was evaporated under reduced pressure followed by high-vacuum Schlenk line at 90 °C and at 100 mTorr pressure for 4 h. The final polyol was obtained as a colorless oil.

### End-blocking efficiency and primary hydroxyl end-group selectivity using B(C₆F₅)₃

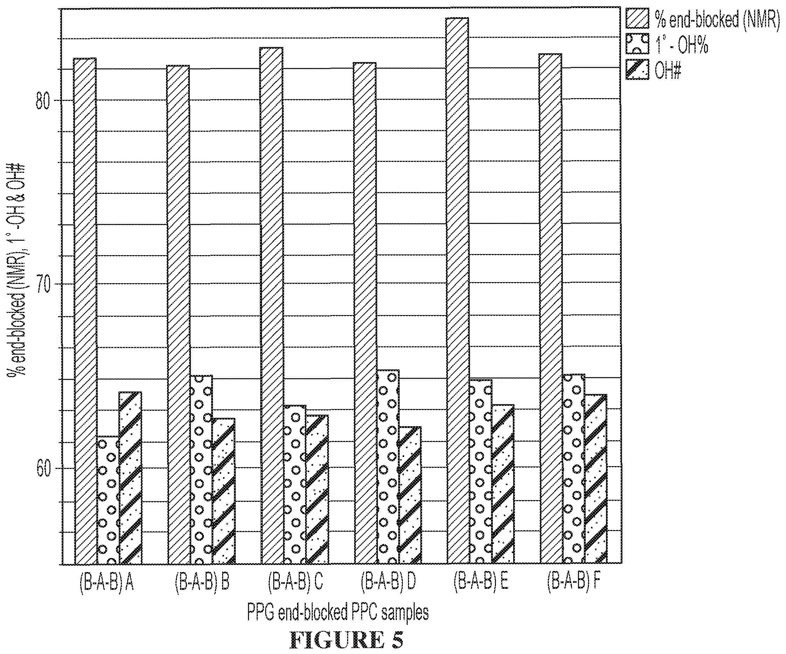

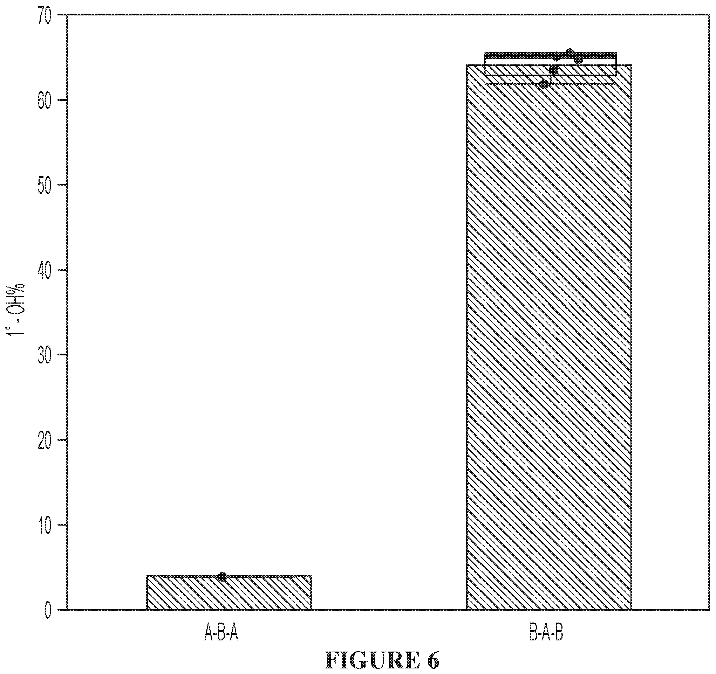

Six different batches of B-A-B polyols **A-F**) were synthesized and end-blocking efficiency was determined using ¹H-NMR as described in Example 1. Figure 5 and Table 3 depict the relation between end-blocking efficiency, primary hydroxyl content 1°-OH, and OH# for the six different batches. For all samples at least ~82% of PPC chains are end-blocked with PPG. Figure 6 demonstrates that all B-A-B batches have 1°-OH content greater than 63%; this is different than the reference A-B-A copolymer where the end-blocks are PPC and the core is PPG and which only has about 4% 1°-OH content.

**Table 3.**

| **Copolymer** | **% End-blocked¹** | **% 1° End-groups²** | **OH# (mg KOH/g)³** |
|---|---|---|---|
| B-A-B **A** | 82.3 | 61.9 | 64 |
| B-A-B **B** | 81.8 | 65.1 | 63 |
| B-A-B **C** | 82.8 | 63.5 | 62 |
| B-A-B **D** | 82 | 65.4 | 62 |
| B-A-B **E** | 84.4 | 64.8 | 64 |
| B-A-B **F** | 82.5 | 65.1 | 64 |
| A-B-A | 0 | 5.1 | 58 |

| | | | |
|---|---|---|---|
| **1 Determined by ¹H NMR** **2 Determined by ¹⁹F NMR** **3 Determined by titration.** | | | |

### Gel-permeation chromatography (GPC) characterization of B A-B copolymers

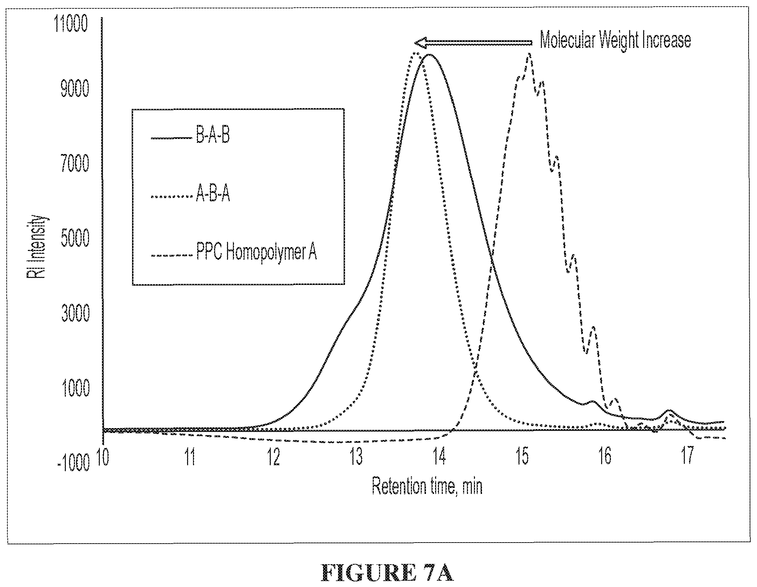

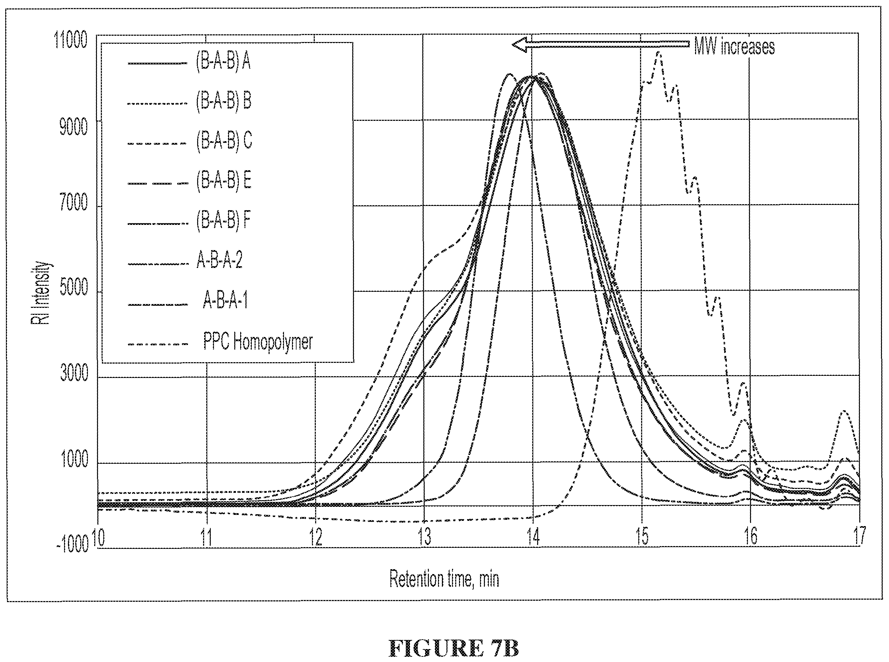

Figures 7A and B depict an example gel permeation chromatogram of starter PPC homopolymer (PPC Homopolymer A), a PPG end-capped PPC sample (B-A-B), and PPC end-blocked PPG (A-B-A). The peak for homopolymer PPC (PPC Homopolymer A) shifted to lower retention time after PPG end-blocking of PPC (B-A-B), evidencing an increase in molecular weight. Furthermore, the peak molecular weight of the B-A-B polyol is comparable to the A-B-A polyol, indicating that the molecular weight of the PPC homopolymer increased during the PPG formation. Polydispersity of B-A-B samples were slightly broader versus the A-B-A (1.25 versus 1.1, respectively).

### Viscosity characterization of B-A-B triblock copolymers

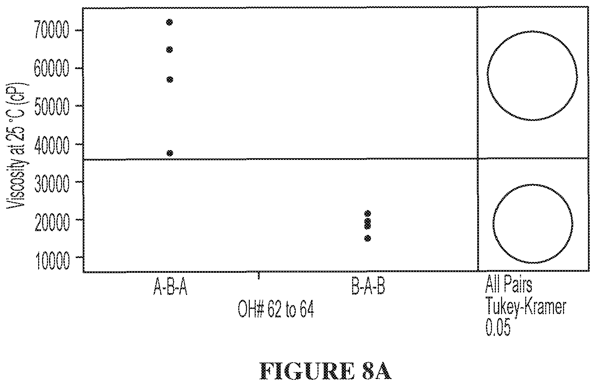

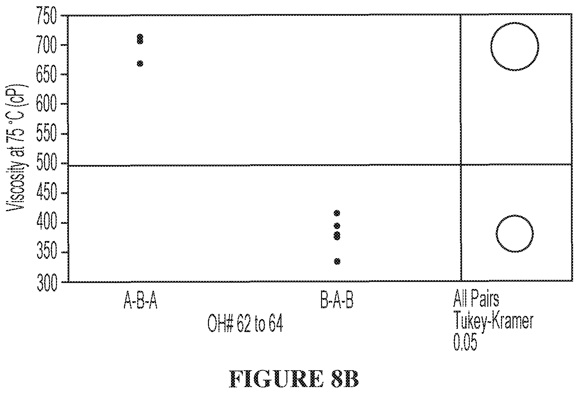

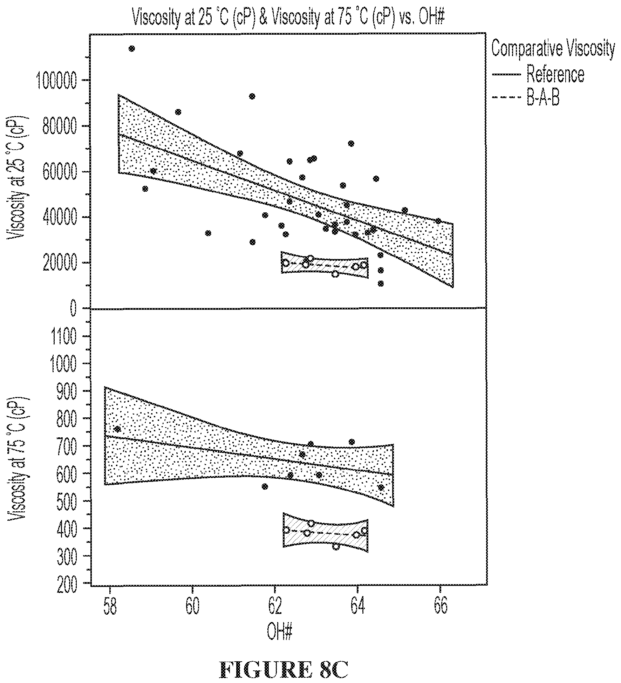

Figures 8A-C depict the viscosity, *η*, profiles of A-B-A and B-A-B polyols. On average, the viscosities of the B-A-B polyols are unexpectedly lower than the A-B-A polyols of comparable molecular weight at both 25 and 75 °C.

### Thermal Stability characterization of B-A-B triblock copolymers

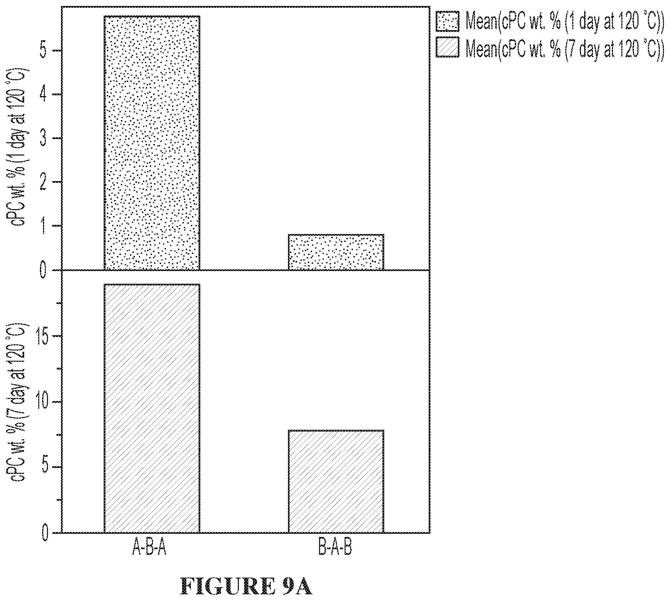

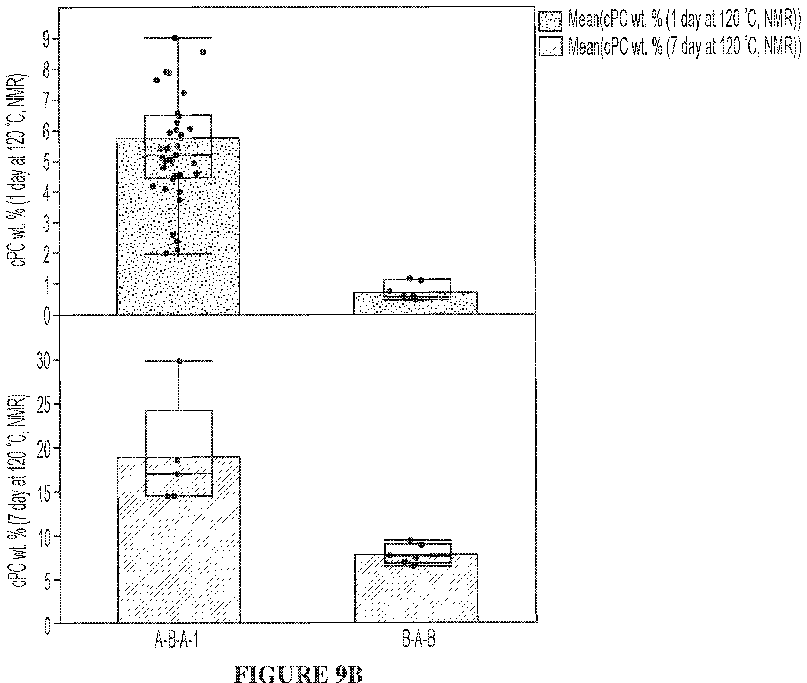

Figures 9A-B illustrate the results of thermal stability testing of different polyols at 120 °C after 1 and 7 days. PPC is known to degrade via a back-biting pathway that decreases polyol molecular weight and generates propylene carbonate. Samples subjected to the thermal stability test are analyzed by ¹H NMR and the amount of propylene carbonate is determined. The more stable the polyol, the less propylene carbonate is generated in this test. As illustrated by Figure 9, B-A-B polyols degrade less compared to A-B-A polyols.

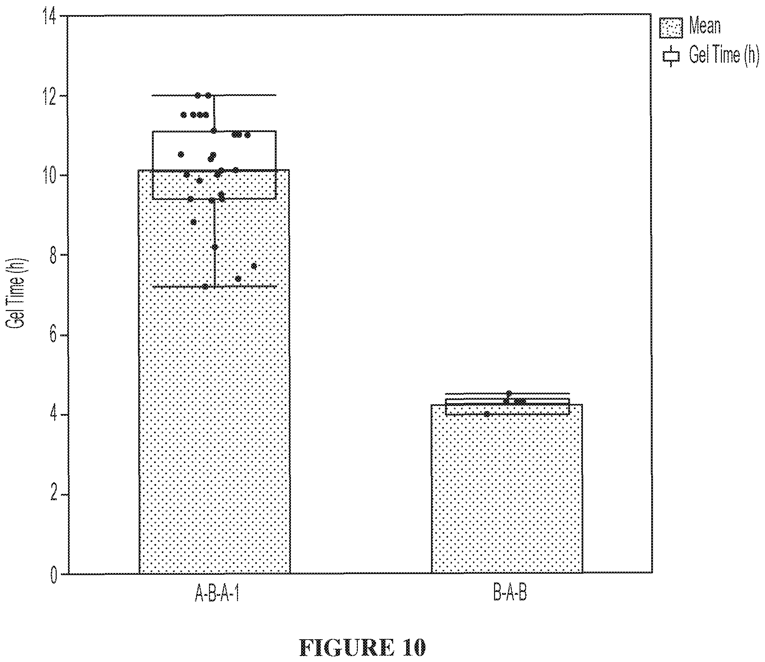

Figure 10 demonstrates the gel time of different B-A-B triblock copolymer samples with MDI. B-A-B triblock copolymer samples exhibit much faster gel time with MDI (less than 5 hours) when compared to A-B-A copolymer

### Example 3: B-A-B synthesis_using B(C₆F₅)₃ in an unquenched integrated process

A PPC homopolymer was prepared as described in Example 1 using neopentyl glycol as the starter, but at the end of the reaction the polymerization mixture was not terminated (i.e., quenched) with acid and the polyol was not isolated. Instead, the reaction mixture was diluted with dimethyl succinate and the residual propylene oxide was removed via vacuum distillation and nitrogen sparge. The final concentration of the reaction mixture was 0.42 g polyol/g solution and the molecular weight of the polyol was determined to 800 Da (determined by ¹H NMR spectroscopy).

10.6 g of the PPC homopolymer unquenched stock solution was added to a dry 3-neck 250 mL round bottom flask, containing 10 mL dry DBE-4, equipped with stir bar and thermocouple probe, and immersed in a water bath (at 19 °C). 2 mL of propylene oxide (PO) was added using an Eldex pump at a flow rate of 2 mL/min. The resulting solution was stirred for 15 min to achieve homogeneity. Separately, 44 mg of B(C₆F₅)₃ was dissolved in 2 mL dimethyl succinate. The catalyst solution was transferred to the reaction flask via cannula. The polymerization of PO was observed by a rise in reaction temperature to 35.9 °C after 7.5 minutes. After the solution cooled down, the remaining PO was added at 0.75 mL/min for 5 minutes. The reaction was then stirred for 30 minutes. The reaction was terminated by adding 150 µL hypophosphorous acid solution (50% w/v in H2O) dissolved in 2 mL of acetone. A portion of the solution was passed through a 2 cm Kyowaad 600 column. The filtrate was removed via rotatory evaporation, followed by high-vacuum Schlenk line at 100 °C and at 50 mTorr pressure for 4 h. The B-A-B polyol was obtained as a colorless viscous oil. The molecular weight was determined by ¹H NMR spectroscopy to be 1218 Da. The end-blocking efficacy was calculated to be 44%.

### Example 4: B-A-B synthesis using B(C₆F₅)₃ in a quenched integrated process

The method of Example 3 was followed, but dipropylene glycol was used as the starter instead of neopentyl glycol, and after the dimethyl succinate was added at the end of the PPC homopolymer reaction, 100 µL of hypophosphorous acid solution (50% w/v in water) was added.

The final B-A-B polyol was obtained as a colorless oil and had a molecular weight of 1720 Da (determined by GPC).

### Example 5: B-A-B synthesis using BF₃ in an unquenched integrated process

The method of Example 3 was followed, but the catalyst used was a solution of BF₃-ethyl ether complex (150 µL) dissolved in dimethyl succinate (2 mL). The final molecular weight of the B-A-B polyol was 1310 Da as determined by GPC. The end-blocking efficiency of this polyol was 60% and the primary hydroxyl content was 41%.

### Example 6: One-pot synthesis of B-A-B

PPC homopolymer is first prepared using propylene oxide in excess in the presence of a cobalt salen catalyst (see, e.g., catalysts and methods disclosed in WO 2010/022388 and WO 2010/028362) and CO₂, and the reaction stirred. CO₂ pressure and/or the amount of polypropylene carbonate polymer formed is monitored. Once the CO₂ pressure is sufficiently diminished, or a suitable amount of polypropylene carbonate is provided, the remaining CO₂ is removed and B(C₆F₅)₃ is dissolved in 2 mL dimethyl succinate then transferred to the reaction flask via cannula. The reaction stirs for 30 minutes and is terminated by adding 150 µL hypophosphorous acid solution (50% w/v in H₂O) dissolved in 2 mL of acetone. A portion of the solution is passed through a 2 cm Kyowaad 600 column. The filtrate is removed via rotatory evaporation, followed by high-vacuum Schlenk line at 100 °C and at 50 mTorr pressure for 4 h.

## Claims

1. A method of making a block copolymer composition of the formula **B-A-B,** comprising the steps of:
i) copolymerizing epoxide and carbon dioxide in the presence of a chain transfer agent and a first catalyst to provide a first polymer **A;** and
ii) homopolymerizing epoxide on the chain ends of the first polymer **A** by addition of a second catalyst to provide a second polymer, **B-A-B;**
wherein the second catalyst is a boron compound, an anionic reagent, a cationic reagent, an activated monomer reagent, an imidazole or a phosphazene reagent, a metal alkoxide, or a metallosalenate that catalyzes homopolymerization of epoxides.

2. The method of claim 1, wherein **A** is an oligomer selected from a polycarbonate and polyethercarbonate chain and/or
wherein the epoxide homopolymerized in step ii) is residual epoxide from step i).

3. The method of any one of claims 1-2, wherein step i) is not quenched until the addition of the second catalyst, or
wherein the reaction is quenched prior to step ii).

4. The method of any one of claims 1-3, wherein steps i) and ii) are accomplished in the same reactor, and/or
wherein the first catalyst is a transition metal complex, and/or
wherein the first catalyst is a metal salen complex, and/or
wherein a first catalyst has a structure: 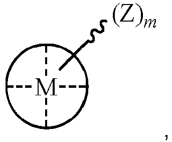
wherein: 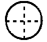
comprises a multidentate ligand;
M is a metal atom; and 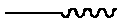
(Z)*ₘ* represents one or more activating moieties covalently tethered to the multidentate ligand, where 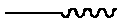 represents a linker moiety, each Z is an activating functional group, and *m* represents the number of Z groups present on a linker moiety and is an integer between 1 and 4 inclusive, and/or
wherein the first catalyst is a metal complex having a structure:

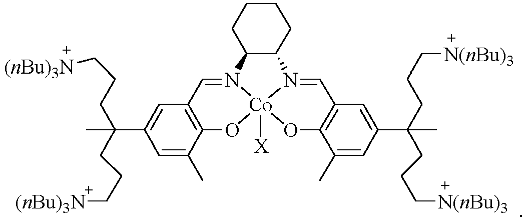

5. The method of any one of claims 1-4, wherein (i) a second catalyst is selected from the group consisting of: 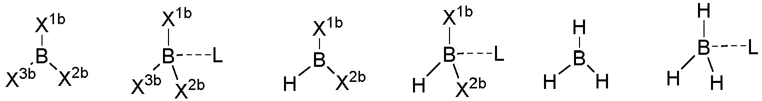 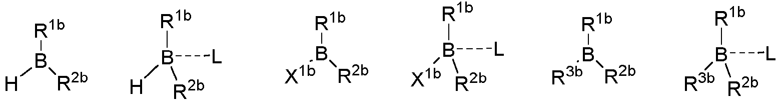 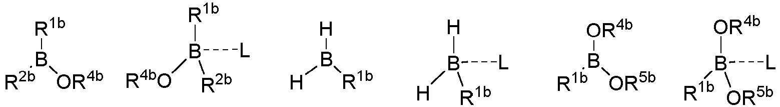 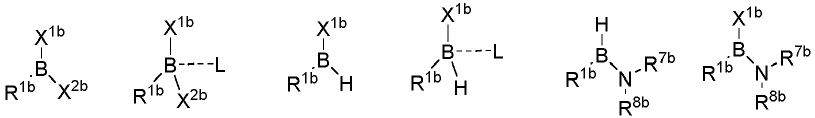 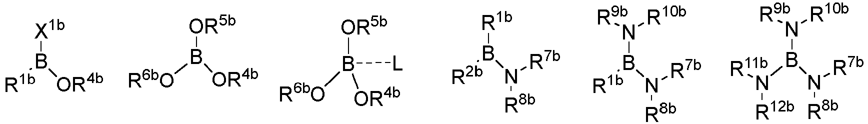 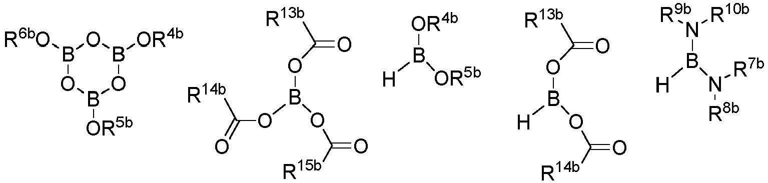 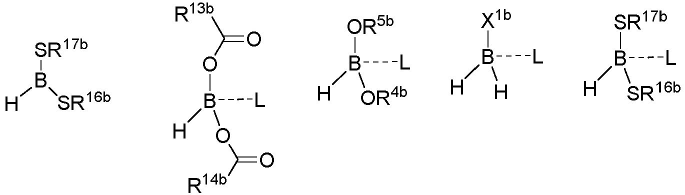 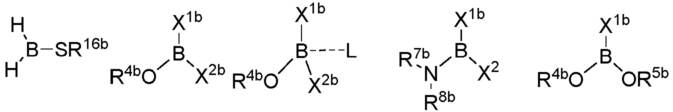 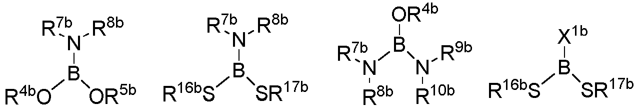 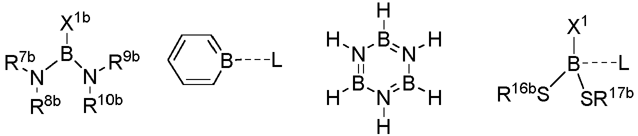 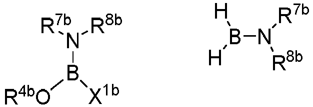 wherein:
each occurrence of X^{1b}, X^{2b}, and X^{3b} is independently Cl, Br, I, or F;
each occurrence of R^{1b}, R^{2b}, and R^{3b} is independently an optionally substituted group selected from the group consisting of C₁₋₂₀ aliphatic; C₁₋₂₀ heteroaliphatic having 1-4 heteroatoms independently selected from the group consisting of nitrogen, oxygen, and sulfur; 6-10-membered aryl; 5-10-membered heteroaryl having 1-4 heteroatoms independently selected from nitrogen, oxygen, or sulfur; and 4-7-membered heterocyclic having 1-2 heteroatoms independently selected from the group consisting of nitrogen, oxygen, and sulfur; wherein any of R^{1b} and R^{2b} can be taken together with their intervening atoms to form one or more rings selected from the group consisting of: optionally substituted C₃-C₁₄ carbocycle, optionally substituted C₃-C₁₄ heterocycle, optionally substituted C₆-C₁₀ aryl, and optionally substituted C₅-C₁₀ heteroaryl;
each occurrence of R^{4b}, R^{5b}, R^{6b}, R^{7b}, R^{8b}, R^{9b}, R^{10b}, R^{11b}, R^{12b}, R^{13b}, R^{14b}, R^{15b}, R^{16b}, and R^{17b} is independently hydrogen or an optionally substituted group selected from the group consisting of C₁₋₂₀ aliphatic; C₁₋₂₀ heteroaliphatic having 1-4 heteroatoms independently selected from the group consisting of nitrogen, oxygen, and sulfur; 6-10-membered aryl; 5-10-membered heteroaryl having 1-4 heteroatoms independently selected from nitrogen, oxygen, or sulfur; and 4-7-membered heterocyclic having 1-2 heteroatoms independently selected from the group consisting of nitrogen, oxygen, and sulfur; wherein (R^{4b} and R^{5b}), (R^{7b} and R^{8b}), (R^{9b} and R^{10b}), (R^{11b} and R^{12b}), (R^{7b} and R^{9b}), and (R^{16b} and R^{17b}) can independently be taken together with their intervening atoms to form one or more rings selected from the group consisting of: optionally substituted C₃-C₁₄ carbocycle, optionally substituted C₃-C₁₄ heterocycle, optionally substituted C₆-C₁₀ aryl, and optionally substituted C₅-C₁₀ heteroaryl;
and L is a ligand, or
(ii) a second catalyst is selected from the group consisting of: Y(OTf)₃, Zn(OTf)₂, Ga(OTf)₃, Al(OTf)₃, (*n*Bu)₂B(OTf), BF₃·OEt₂, BCl₃, P(C₆F₅)₃, Cu(BF₄)₂, [2,4,6-(CH₃)₃C₆H₂]₂BF, (CF₃SO₂)₂NH, Ph₃B+P₁-^{t}Bu, Et₃B+P₁-^{t}Bu, and B(C₆F₅)₃, Yb(OTf)₃, Ce(OTf)₃, Sc(OTf)₃, Lu(OTf)₃, Fe(OTf)₃, Zr(OTf)₄, Hf(OTf)₄. Et₃B+P₄-^{t}Bu and Ph₃B+P₄-^{t}Bu, or a combination thereof, or
(iii) a second catalyst is selected from the group consisting of: BF₃·OEt₂, Cu(BF₄)₂, and B(C₆F₅)₃, preferablywherein a second catalyst is B(C₆F₅)₃.

6. The method of any one of claims 1-5, wherein **A** is **characterized in that** it comprises greater than 80%, 90%, 95%, 98%, or 99% carbonate linkages relative to the total number of monomer linkages formed during copolymerization of **A** (i.e., exclusive of a chain transfer agent), and/or
wherein **A** is **characterized in that** it comprises essentially no ether linkages.

7. A block copolymer composition prepared according to any one of claims 1-6, wherein the composition comprises a structure of formula **P1**: 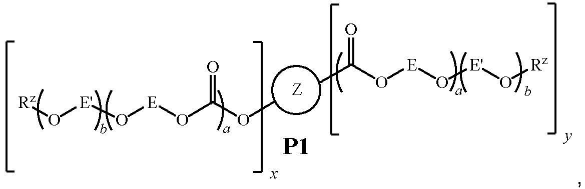 wherein: 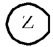
is a multivalent moiety selected from the group consisting of trivalent and tetravalent moieties;
-E- is, independently at each position in the polymer chain, 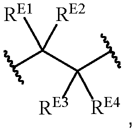
-E'- is, independently at each position in the polymer chain, 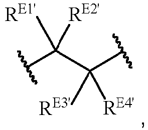
R^{E1}, R^{E2}, R^{E3}, and R^{E4} are at each occurrence in the polymer chain independently selected from the group consisting of hydrogen, fluorine, an optionally substituted C₁₋₄₀ aliphatic group, an optionally substituted C₁₋₂₀ heteroaliphatic group, and an optionally substituted aryl group, where any two or more of R^{E1}, R^{E2}, R^{E3}, and R^{E4} may optionally be taken together with intervening atoms to form one or more optionally substituted rings optionally containing one or more heteroatoms;
R^{E1'}, R^{E2'}, R^{E3'} and R^{E4'} are at each occurrence in the polymer chain independently selected from the group consisting of hydrogen, fluorine, an optionally substituted C₁₋₄₀ aliphatic group, an optionally substituted C₁₋₂₀ heteroaliphatic group, and an optionally substituted aryl group, where any two or more of R^{E1'}, R^{E2'}, R^{E3'} and R^{E4'} may optionally be taken together with intervening atoms to form one or more optionally substituted rings optionally containing one or more heteroatoms;
each R^{z} is independently selected from the group consisting of -H, -R^{z10}, -C(O)R^{z10}, -SO₂R^{z10}, -Si(R^{z10})₃, -Si(OR^{z10})₃, -SiR^{z10}(OR^{z10})₂, and -C(O)NH(R^{z10});
each R^{z10} is independently an optionally substituted moiety selected from the group consisting of C₁₋₂₀ aliphatic, C₁₋₁₂ heteroaliphatic, 6- to 14-membered aryl, and 5-to 14-membered heteroaryl;
a is, on average in the composition, about 2 to about 50;
*b* is*,* on average in the composition, about 2 to about 50; and
*x* and *y* are each independently an integer from 0 to 6 inclusive, where the sum of *x* and *y* is between 2 and 6, wherein *x* is preferably 2 and *y* is 0.

8. The block copolymer composition of claim 7, wherein the polymer composition comprises polymer chains of formula **P2:**

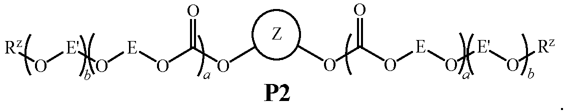

9. The block copolymer composition of claim 7 or 8, wherein -E- moieties are derived predominantly from propylene oxide (e.g., at each occurrence of -E-, one of R^{E1}, R^{E2}, R^{E3}, and R^{E4} is methyl and the others are hydrogen), or
wherein -E- moieties are derived predominantly from ethylene oxide (e.g., at each occurrence of -E-, R^{E1}, R^{E2}, R^{E3}, and R^{E4} are hydrogen).

10. The block copolymer composition of any one of claims 7-9, wherein at least a portion of -E'- moieties are derived from ethylene oxide or wherein at least a portion of -E'-moieties are derived from propylene oxide.

11. The block copolymer composition of any one of claims 7-10, **characterized in that** on average in the composition, the head-to-tail ratio within the moieties, 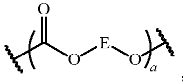 is higher than the head-to-tail ratio within the moieties, 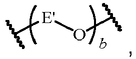 wherein the head-to-tail ratio is measured as viewed from the 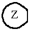 moiety toward the direction of the chain end.

12. The block copolymer composition of any one of claims 7-11, **characterized in that** within the moiety, 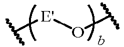 , the regiochemistry is predominantly tail-to-head.

13. The block copolymer composition of any one of claims 7-12, **characterized in that** more than 50%, more than 55%, more than 60%, more than 65%, more than 70%, or more than 75% of the chain ends have the structure

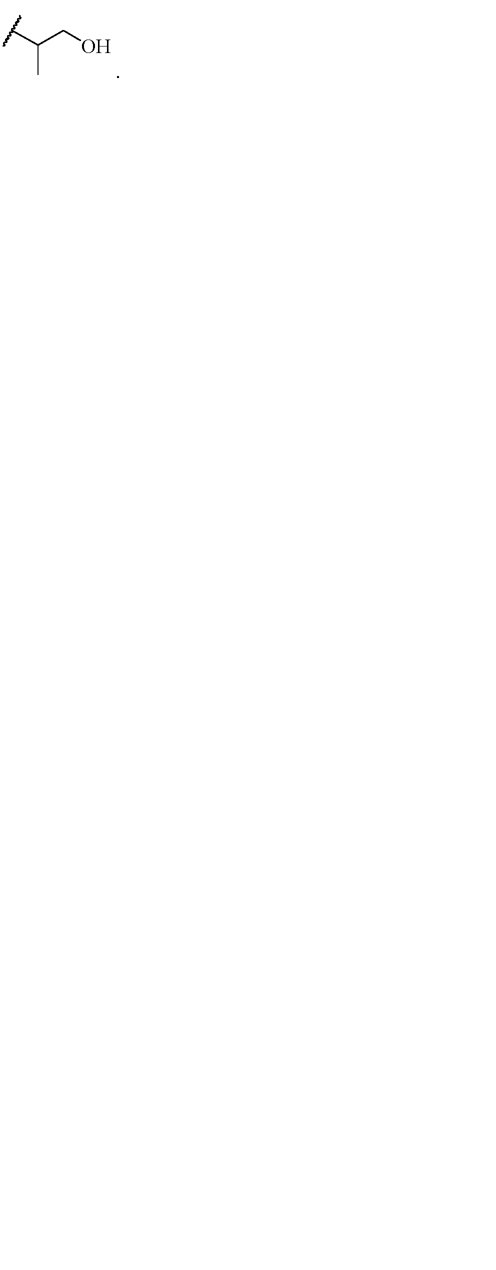

## Patentansprüche

1. Ein Verfahren zur Herstellung einer Blockcopolymerzusammensetzung der Formel **B-AB,** die folgenden Schritte umfassend:
i) Copolymerisieren von Epoxid und Kohlendioxid in Gegenwart eines Kettenübertragungsmittels und eines ersten Katalysators, um ein erstes Polymer **A** bereitzustellen; und
ii) Homopolymerisieren von Epoxid an den Kettenenden des ersten Polymers **A** durch Zugabe eines zweiten Katalysators, um ein zweites Polymer **B-A-B** bereitzustellen;
wobei der zweite Katalysator eine Borverbindung, ein anionisches Reagenz, ein kationisches Reagenz, ein Reagenz mit aktiviertem Monomer, ein Imidazol- oder ein Phosphazenreagenz, ein Metallalkoxid oder ein Metallosalenat ist, das die Homopolymerisation von Epoxiden katalysiert.

2. Verfahren nach Anspruch 1, wobei **A** ein Oligomer ist, das aus einer Polycarbonat- und einer Polyethercarbonat-Kette ausgewählt ist, und/oder
wobei das homopolymerisierte Epoxid in Schritt ii) restliches Epoxid aus Schritt i) ist.

3. Verfahren nach einem der Ansprüche 1-2, wobei Schritt i) bis zur Zugabe des zweiten Katalysators nicht abgestoppt wird, oder wobei die Reaktion vor Schritt ii) abgestoppt wird.

4. Verfahren nach einem der Ansprüche 1-3, wobei die Schritte i) und ii) im selben Reaktor durchgeführt werden, und/oder
wobei der erste Katalysator ein Übergangsmetallkomplex ist, und/oder
wobei der erste Katalysator ein Metall-Salen-Komplex ist, und/oder
wobei der erste Katalysator folgende Struktur aufweist: 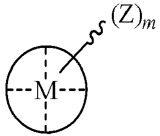
wobei: 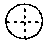
einen mehrzähnigen Liganden umfasst;
M ein Metallatom ist; und
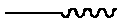 (Z)*ₘ* eine oder mehrere aktivierende Einheiten darstellt, die kovalent an den mehrzähnigen Liganden gebunden sind, wobei 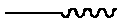 eine Linkereinheit darstellt, jedes Z eine aktivierende funktionelle Gruppe ist und *m* die Anzahl der an einer Linkereinheit vorhandenen Z-Gruppen darstellt und eine ganze Zahl zwischen 1 und 4 einschließlich ist, und/oder
wobei der erste Katalysator ein Metallkomplex mit folgender Struktur ist:

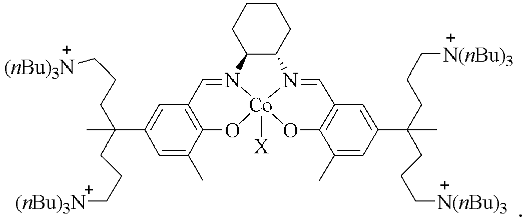

5. Verfahren nach einem der Ansprüche 1-4, wobei (i) der zweiter Katalysator ausgewählt ist aus der Gruppe bestehend aus: 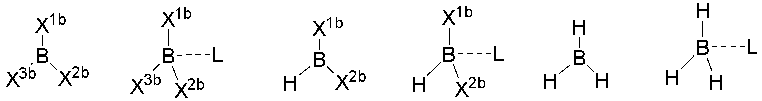 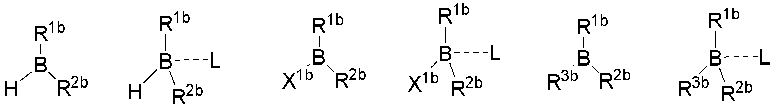 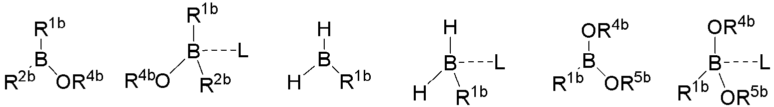 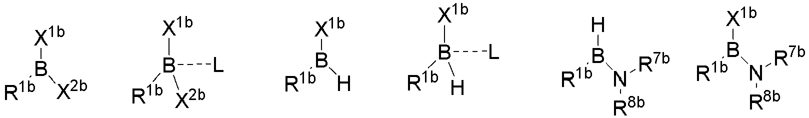 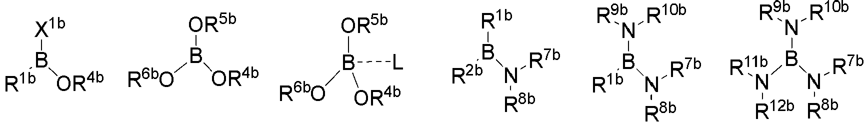 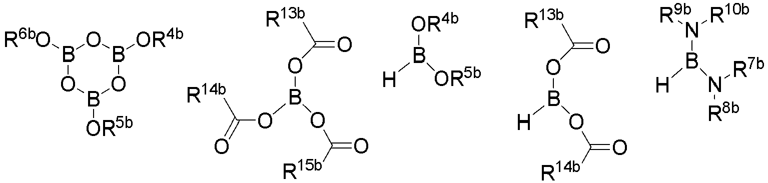 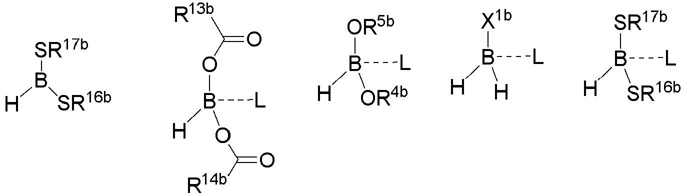 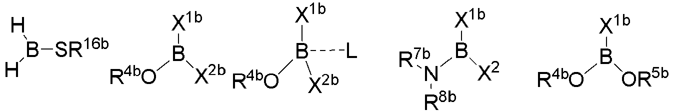 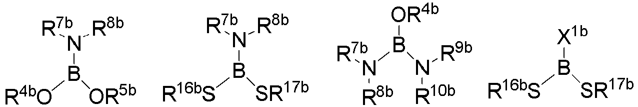 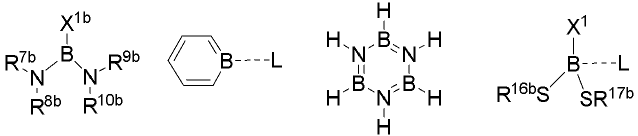 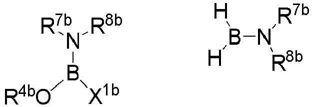 wobei:
jedes Vorkommen von X^{1b}, X^{2b} und X^{3b} unabhängig voneinander Cl, Br, I oder F ist;
jedes Vorkommen von R^{1b}, R^{2b} und R^{3b} unabhängig voneinander eine gegebenenfalls substituierte Gruppe ist, ausgewählt aus der Gruppe bestehend aus C₁₋₂₀-aliphatisch; C₁₋₂₀-heteroaliphatisch mit 1-4 Heteroatomen unabhängig voneinander ausgewählt aus der Gruppe bestehend aus Stickstoff, Sauerstoff und Schwefel; 6- bis 10-gliedrigem Aryl; 5- bis 10-gliedrigem Heteroaryl mit 1 bis 4 Heteroatomen unabhängig voneinander ausgewählt aus Stickstoff, Sauerstoff oder Schwefel; und 4- bis 7-gliedrigem heterocyclischen Rest mit 1 bis 2 Heteroatomen unabhängig voneinander ausgewählt aus der Gruppe bestehend aus aus Stickstoff, Sauerstoff und Schwefel; wobei jeweils R^{1b} und R^{2b} zusammen mit den dazwischenliegenden Atomen einen oder mehrere Ringe bilden können, ausgewählt aus der Gruppe bestehend aus: gegebenfalls substituiertem C₃-C₁₄-Carbocyclus, gegebenenfalls substituiertem C₃-C₁₄-Heterocyclus, gegebenenfalls substituiertem C₆-C₁₀-Aryl und gegebenenfalls substituiertem C₅-C₁₀-Heteroaryl;
Jedes Vorkommen von R^{4b}, R^{5b}, R^{6b}, R^{7b}, R^{8b}, R^{9b}, R^{10b}, R^{11b}, R^{12b}, R^{13b}, R^{14b}, R^{15b}, R^{16b}, und R^{17b} ist unabhängig voneinander Wasserstoff oder eine gegebenenfalls substituierte Gruppe, ausgewählt aus der Gruppe bestehend aus aliphatischem C₁₋₂₀; heteroaliphatischem C₁₋₂₀ mit 1-4 Heteroatomen unabhängig voneinander ausgewählt aus der Gruppe bestehend aus Stickstoff, Sauerstoff und Schwefel; 6- bis 10-gliedrigem Aryl; 5- bis 10-gliedrigem Heteroaryl mit 1-4 Heteroatomen unabhängig voneinander ausgewählt aus Stickstoff, Sauerstoff oder Schwefel; und 4- bis 7-gliedrigem heterocyclischen Rest mit 1 bis 2 Heteroatomen unabhängig voneinander ausgewählt aus der Gruppe bestehend aus Stickstoff, Sauerstoff und Schwefel; wobei (R^{4b} und R^{5b}), (R^{7b} und R^{8b}), (R^{9b} und R^{10b}), (R^{11b} und R^{12b}), (R^{7b} und R^{9b}) sowie (R^{16b} und R^{17b}) unabhängig voneinander zusammen mit den dazwischenliegenden Atomen einen oder mehrere Ringe bilden können, ausgewählt aus der Gruppe bestehend aus: gegebenenfalls substituiertem C₃-C₁₄-Carbocyclus, gegebenenfalls substituiertem C₃-C₁₄-Heterocyclus, gegebenenfalls substituiertem C₆-C₁₀-Aryl und gegebenenfalls substituiertem C₅-C₁₀-Heteroaryl;
und L ein ligand ist, oder
(ii) ein zweiter Katalysator ausgewählt is aus der Gruppe bestehend aus: Y(OTf)₃, Zn(OTf)₂, Ga(OTf)₃, Al(OTf)₃, (*n*Bu)₂B(OTf), BF₃·OEt₂, BCl₃, P(C₆F₅)₃, Cu(BF₄)₂, [2,4,6-(CH₃)₃C₆H₂]₂BF, (CF₃SO₂)₂NH, Ph₃B+P₁-^{t}Bu, Et₃B+P₁-^{t}Bu und B(C₆F₅)₃, Yb(OTf)₃, Ce(OTf)₃, Sc(OTf)₃, Lu(OTf)₃, Fe(OTf)₃, Zr(OTf)₄, Hf(OTf)₄. Et₃B+P₄-^{t}Bu und Ph₃B+P₄-^{t}Bu oder eine Kombination davon, oder
(iii) ein zweiter Katalysator ausgewählt ist aus der Gruppe bestehend aus: BF₃·OEt₂, Cu(BF₄)₂ und B(C₆F₅)₃, wobei der zweite Katalysator vorzugsweise B(C₆F₅)₃ ist.

6. Verfahren nach einem der Ansprüche 1-5, wobei **A dadurch gekennzeichnet ist, dass** es mehr als 80 %, 90 %, 95 %, 98 % oder 99 % Carbonatbindungen umfasst, bezogen auf die Gesamtzahl der während der Copolymerisation von **A** gebildeten Monomerbindungen (d. h. ohne Kettenübertragungsmittels), und/oder
wobei **A dadurch gekennzeichnet ist, dass** es im Wesentlichen keine Etherbindungen umfasst.

7. Eine Blockcopolymer-Zusammensetzung, hergestellt gemäß einem der Ansprüche 1-6, wobei die Zusammensetzung eine Struktur der Formel **P1** umfasst: 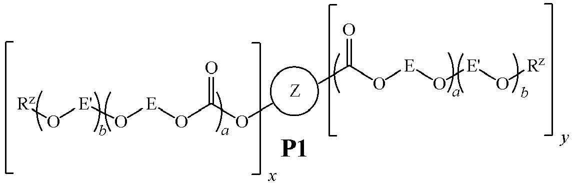 wobei: 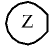
eine mehrwertige Einheit ist, ausgewählt aus der Gruppe bestehend aus dreiwertigen und vierwertigen Einheiten;
-E- unabhängig an jeder Position in der Polymerkette 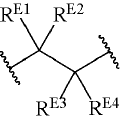 ist,
-E'- unabhängig an jeder Position in der Polymerkette, 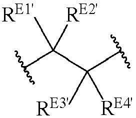 ist,
R^{E1}, R^{E2}, R^{E3} und R^{E4} sind bei jedem Vorkommen in der Polymerkette unabhängig voneinander ausgewählt aus der Gruppe bestehend aus Wasserstoff, Fluor, einer gegebenenfalls substituierten C₁₋₄₀ aliphatischen Gruppe, einer gegebenenfalls substituierten C₁₋₂₀ heteroaliphatischen Gruppe und einer gegebenenfalls substituierten Arylgruppe, wobei jeweils zwei oder mehr von R^{E1}, R^{E2}, R^{E3} und R^{E4} gegebenenfalls zusammen mit dazwischenliegenden Atomen einen oder mehrere gegebenenfalls substituierte Ringe bilden können, die gegebenenfalls ein oder mehrere Heteroatome enthalten;
R^{E1'}, R^{E2'}, R^{E3'} und R^{E4'} sind bei jedem Vorkommen in der Polymerkette unabhängig voneinander ausgewählt aus der Gruppe bestehend aus Wasserstoff, Fluor, einer gegebenenfalls substituierten C₁₋₄₀ aliphatischen Gruppe, einer gegebenenfalls substituierten C₁₋₂ heteroaliphatischen Gruppe und einer gegebenenfalls substituierten Arylgruppe, wobei jeweils zwei oder mehr von R^{E1'}, R^{E2'}, R^{E3'} und R^{E4'} gegebenenfalls zusammen mit dazwischenliegenden Atomen einen oder mehrere gegebenenfalls substituierte Ringe bilden können, die gegebenenfalls ein oder mehrere Heteroatome enthalten;
jedes R^{z} unabhängig voneinander ausgewählt ist aus der Gruppe bestehend aus -H, - R^{z10}, -C(O)R^{z10}, -SO₂R^{z10}, -Si(R^{z10})₃, -Si(OR^{z10})₃, -SiR^{z10}(OR^{z10})₂ und -C(O)NH(R^{z10});
jedes R^{z10} unabhängig voneinander eine gegebenenfalls substituierte Einheit ist, ausgewählt aus der Gruppe bestehend aus aliphatischem C₁₋₂₀, heteroaliphatischem C₁₋₁₂, 6- bis 14-gliedrigem Aryl und 5- bis 14-gliedrigem Heteroaryl;
*a* im Durchschnitt in der Zusammensetzung etwa 2 bis etwa 50 beträgt;
*b* im Durchschnitt in der Zusammensetzung etwa 2 bis etwa 50 beträgt; und
*x* und *y* jeweils unabhängig voneinander eine ganze Zahl von 0 bis einschließlich 6 sind, wobei die Summe aus *x* und *y* zwischen 2 und 6 liegt, wobei *x* vorzugsweise 2 ist und y ist 0.

8. Die Blockcopolymerzusammensetzung nach Anspruch 7, wobei die Polymerzusammensetzung Polymerketten der Formel **P2** umfasst:

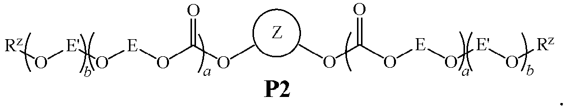

9. Die Blockcopolymerzusammensetzung nach Anspruch 7 oder 8, wobei die -E-Einheiten überwiegend von Propylenoxid abgeleitet sind (z. B. ist bei jedem Vorkommen von - E- einer von R^{E1}, R^{E2}, R^{E3} und R^{E4} Methyl und die anderen sind Wasserstoff), oder
wobei die -E--Einheiten überwiegend von Ethylenoxid abgeleitet sind (z. B. sind bei jedem Vorkommen von -E- R^{E1}, R^{E2}, R^{E3} und R^{E4} jeweils Wasserstoffatome).

10. Die Blockcopolymerzusammensetzung nach einem der Ansprüche 7-9, wobei mindestens ein Teil der -E'-Einheiten von Ethylenoxid abgeleitet ist oder wobei mindestens ein Teil der -E'-Einheiten von Propylenoxid abgeleitet ist.

11. Die Blockcopolymerzusammensetzung nach einem der Ansprüche 7-10, **dadurch gekennzeichnet, dass** in der Zusammensetzung im Durchschnitt das Kopf-Schwanz-Verhältnis innerhalb der Molekülteile 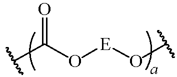 größer ist als das Kopf-Schwanz-Verhältnis innerhalb der Molekülteile 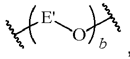 , wobei das Kopf-Schwanz-Verhältnis von der 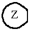 Einheit in Richtung des Kettenendes gemessen wird.

12. Die Blockcopolymerzusammensetzung nach einem der Ansprüche 7-11, **dadurch gekennzeichnet, dass** innerhalb der Einheit 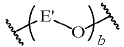 die Regiochemie überwiegend Schwanz-Kopf ist.

13. Die Blockcopolymerzusammensetzung nach einem der Ansprüche 7-12, **dadurch gekennzeichnet, dass** mehr als 50 %, mehr als 55 %, mehr als 60 %, mehr als 65 %, mehr als 70 % oder mehr als 75 % der Kettenenden die Struktur 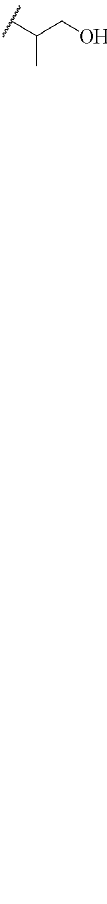 aufweisen.

## Revendications

1. Procédé de fabrication d'une composition de copolymère à blocs de formule **B-A-B,** comprenant les étapes consistant à :
i) la copolymérisation d'époxyde et de dioxyde de carbone en présence d'un agent de transfert de chaîne et d'un premier catalyseur afin de fournir un premier polymère **A ;** et
ii) l'homopolymérisation d'époxyde sur les extrémités de chaîne du premier polymère **A** par ajout d'un deuxième catalyseur afin de fournir un deuxième polymère, **B-A-B** ;
dans lequel le deuxième catalyseur est un composé du bore, un réactif anionique, un réactif cationique, un réactif monomère activé, un réactif de type imidazole ou phosphazène, un alcoxyde métallique ou un métallo-salenate qui catalyse l'homopolymérisation d'époxydes.

2. Procédé selon la revendication 1, dans lequel **A** est un oligomère choisi parmi une chaîne polycarbonate et une chaîne polyéthercarbonate et/ou
dans lequel l'époxyde homopolymérisé à l'étape ii) est un époxyde résiduel de l'étape i).

3. Procédé selon l'une quelconque des revendications 1 à 2, dans lequel l'étape i) n'est pas stoppée avant l'ajout du deuxième catalyseur, ou
dans lequel la réaction est stoppée avant l'étape ii).

4. Procédé selon l'une quelconque des revendications 1 à 3, dans lequel les étapes i) et ii) sont réalisées dans le même réacteur, et/ou
dans lequel le premier catalyseur est un complexe de métal de transition, et/ou
dans lequel le premier catalyseur est un complexe métal-salen, et/ou
dans lequel un premier catalyseur a une structure de type : 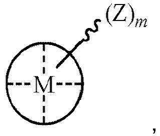
dans laquelle : 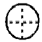
comprend un ligand polydenté ;
M est un atome de métal ; et
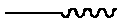 (Z)*ₘ* représente un ou plusieurs groupements d'activation liés de manière covalente au ligand polydenté, où 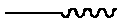 représente un groupement de liaison, chaque Z est un groupe fonctionnel d'activation, et *m* représente le nombre de groupes Z présents sur un groupement de liaison et est un nombre entier compris entre 1 et 4, bornes incluses, et/ou
dans lequel le premier catalyseur est un complexe métallique ayant une structure de type :

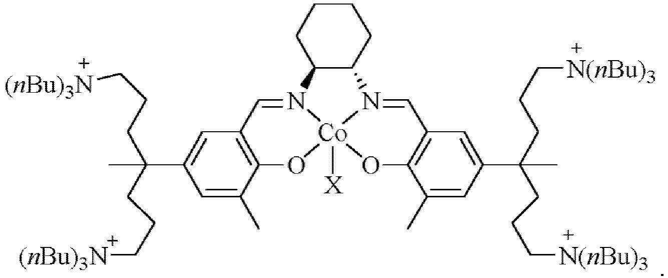

5. Procédé selon l'une quelconque des revendications 1 à 4, dans lequel (i) un deuxième catalyseur est choisi parmi le groupe constitué de : 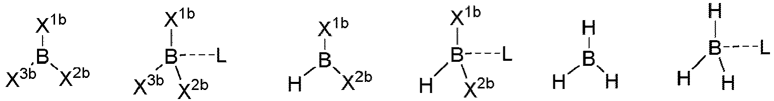 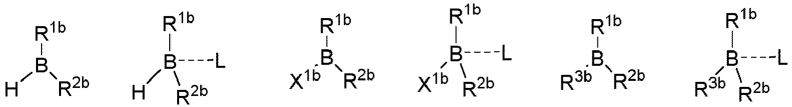 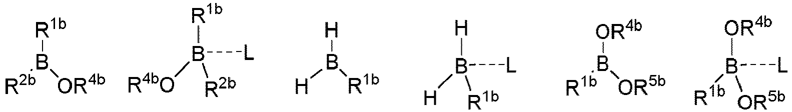 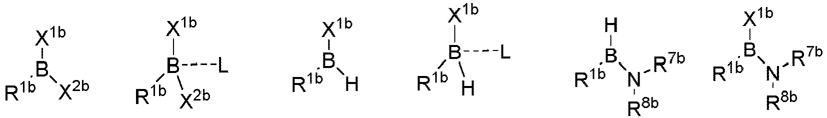 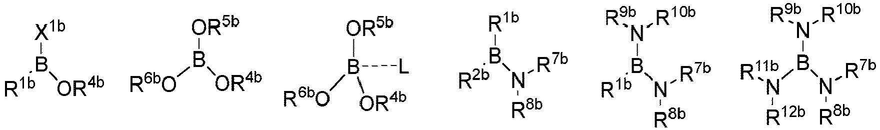 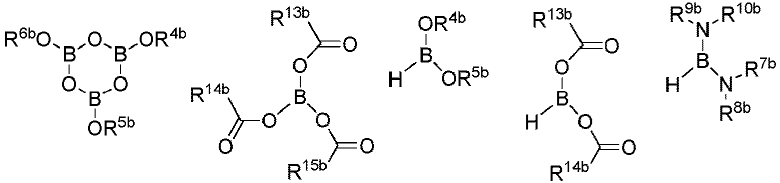 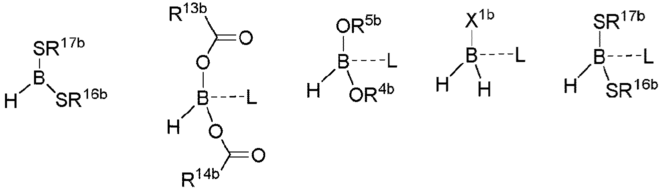 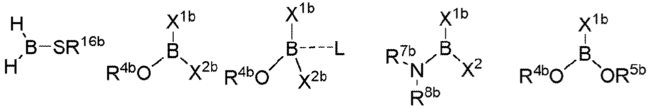 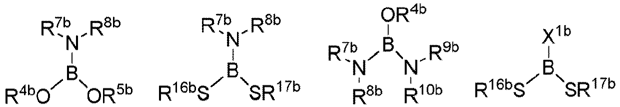 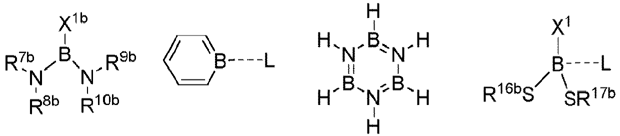 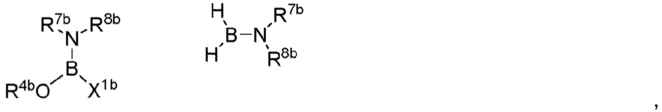 dans lequel :
chaque occurrence de X^{1b}, X^{2b} et X^{3b} est indépendamment Cl, Br, I ou F ;
chaque occurrence de R^{1b}, R^{2b} et R^{3b} est indépendamment un groupe éventuellement substitué choisi parmi le groupe constitué d'un aliphatique en C₁ à C₂₀ ; d'un hétéroaliphatique en C₁ à C₂₀ ayant 1 à 4 hétéroatomes indépendamment choisis parmi le groupe constitué d'azote, d'oxygène et de soufre ; d'un aryle de 6 à 10 chaînons ; d'un hétéroaryle de 5 à 10 chaînons ayant 1 à 4 hétéroatomes indépendamment choisis parmi l'azote, l'oxygène et le soufre ; et d'un groupe hétérocyclique de 4 à 7 chaînons ayant 1 à 2 hétéroatomes indépendamment choisis parmi le groupe constitué d'azote, d'oxygène et de soufre ; dans lequel les groupes quelconques parmi R^{1b} et R^{2b} peuvent être pris conjointement avec leurs atomes intermédiaires pour former un ou plusieurs cycles choisis parmi le groupe constitué de :
un carbocycle en C₃ à C₁₄ éventuellement substitué, un hétérocycle en C₃ à C₁₄ éventuellement substitué, un aryle en C₆ à C₁₀ éventuellement substitué et un hétéroaryle en C₅ à C₁₀ éventuellement substitué ;
chaque occurrence de R^{4b}, R^{5b}, R^{6b}, R^{7b}, R^{8b}, R^{9b}, R^{10b}, R^{11b}, R^{12b}, R^{13b}, R^{14b}, R^{15b}, R^{16b} et R^{17b} est indépendamment un hydrogène ou un groupe éventuellement substitué choisi parmi le groupe constitué d'un aliphatique en C₁ à C₂₀ ; d'un hétéroaliphatique en C₁ à C₂₀ ayant 1 à 4 hétéroatomes indépendamment choisis parmi le groupe constitué d'azote, d'oxygène et de soufre ; d'un aryle de 6 à 10 chaînons ; d'un hétéroaryle de 5 à 10 chaînons ayant 1 à 4 hétéroatomes indépendamment choisis parmi l'azote, l'oxygène et le soufre ; et d'un groupe hétérocyclique de 4 à 7 chaînons ayant 1 à 2 hétéroatomes indépendamment choisis parmi le groupe constitué d'azote, d'oxygène et de soufre ; dans lequel (R^{4b} et R^{5b}), (R^{7b} et R^{8b}), (R^{9b} et R^{10b}), (R^{11b} et R^{12b}), (R^{7b} et R^{9b}) et (R^{16b} et R^{17b}) peuvent, de manière indépendante, être pris conjointement avec leurs atomes intermédiaires pour former un ou plusieurs cycles choisis parmi le groupe constitué de : un carbocycle en C₃ à C₁₄ éventuellement substitué, un hétérocycle en C₃ à C₁₄ éventuellement substitué, un aryle en C₆ à C₁₀ éventuellement substitué et un hétéroaryle en C₅ à C₁₀ éventuellement substitué ;
et L est un ligand, ou
(ii) un deuxième catalyseur est choisi parmi le groupe constitué de : Y(OTf)₃, Zn(OTf)₂, Ga(OTf)₃, Al(OTf)₃, (*n*Bu)₂B(OTf), BF₃·OEt₂, BCl3, P(C₆F₅)₃, Cu(BF₄)₂, [2,4,6-(CH₃)₃C₆H₂]₂BF, (CF₃SO₂)₂NH, Ph₃B+P₁-^{t}Bu, Et₃B+P₁-^{t}Bu et B(C₆F₅)₃, Yb(OTf)₃, Ce(OTf)₃, Sc(OTf)₃, Lu(OTf)₃, Fe(OTf)₃, Zr(OTf)₄, Hf(OTf)₄.Et₃B+P₄-^{t}Bu et Ph₃B+P₄-^{t}Bu, ou une combinaison de ceux-ci, ou
(iii) un deuxième catalyseur est choisi parmi le groupe constitué de : BF₃·OEt₂, Cu(BF₄)₂ et B(C₆F₅)₃, préférentiellement dans lequel un deuxième catalyseur est B(C₆F₅)₃.

6. Procédé selon l'une quelconque des revendications 1 à 5, dans lequel **A** est **caractérisé en ce qu'**il comprend plus de 80 %, 90 %, 95 %, 98 % ou 99 % de liaisons carbonate par rapport au nombre total de liaisons monomériques formées pendant la copolymérisation de **A** (c'est-à-dire, hors agent de transfert de chaîne), et/ou dans lequel **A** est **caractérisé en ce qu'**il ne comprend essentiellement aucune liaison éther.

7. Composition de copolymère à blocs préparée selon l'une quelconque des revendications 1 à 6, la composition comprenant une structure de formule **P1 :** 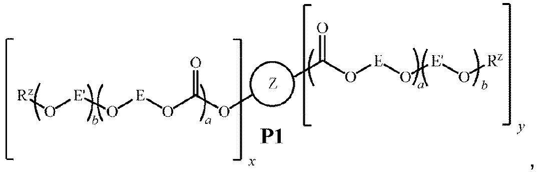 dans laquelle : 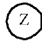 est un groupement multivalent, choisi parmi le groupe constitué de groupements trivalents et tétravalents ;
-E-est, indépendamment au niveau de chaque position dans la chaîne polymère, 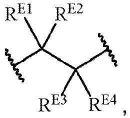
-E'- est, indépendamment au niveau de chaque position dans la chaîne polymère, 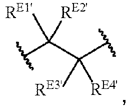
R^{E1}, R^{E2}, R^{E3} et R^{E4} sont, à chaque occurrence dans la chaîne polymère, indépendamment choisis parmi le groupe constitué d'hydrogène, de fluor, d'un groupe aliphatique en C₁ à C₄₀ éventuellement substitué, d'un groupe hétéroaliphatique en C₁ à C₂₀ éventuellement substitué et d'un groupe aryle éventuellement substitué, où deux quelconques ou plus parmi R^{E1}, R^{E2}, R^{E3} et R^{E4} peuvent être éventuellement pris conjointement avec leurs atomes intermédiaires pour former un ou plusieurs cycles éventuellement substitués contenant éventuellement un ou plusieurs hétéroatomes ;
R^{E1'}, R^{E2'}, R^{E3'} et R^{E4'} sont, à chaque occurrence dans la chaîne polymère, indépendamment choisis parmi le groupe constitué d'hydrogène, de fluor, d'un groupe aliphatique en C₁ à C₄₀ éventuellement substitué, d'un groupe hétéroaliphatique en C₁ à C₂₀ éventuellement substitué et d'un groupe aryle éventuellement substitué, où deux quelconques ou plus parmi R^{E1'}, R^{E2'}, R^{E3'} et R^{E4'} peuvent être éventuellement pris conjointement avec leurs atomes intermédiaires pour former un ou plusieurs cycles éventuellement substitués contenant éventuellement un ou plusieurs hétéroatomes ;
chaque R^{z} est indépendamment choisi parmi le groupe constitué de -H, -R^{z10}, - C(O)R^{z10},
-SO₂R^{z10}, -Si(R^{z10})₃, -Si(OR^{z10})₃, -SiR^{z10}(OR^{z10})₂ et -C(O)NH(R^{z10}) ;
chaque R^{z10} est indépendamment un groupement éventuellement substitué choisi parmi le groupe constitué d'un aliphatique en C₁ à C₂₀, d'un hétéroaliphatique en C₁ à C₁₂, d'un aryle de 6 à 14 chaînons et d'un hétéroaryle de 5 à 14 chaînons ;
*a* est, en moyenne dans la composition, compris entre environ 2 et environ 50 ;
*b* est, en moyenne dans la composition, compris entre environ 2 et environ 50 ; et

8. Composition de copolymère à blocs selon la revendication 7, dans laquelle la composition polymère comprend des chaînes polymères de formule **P2** :

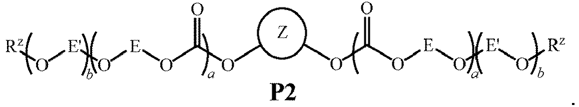

9. Composition de copolymère à blocs selon la revendication 7 ou 8, dans laquelle les groupements -E- sont dérivés principalement d'oxyde de propylène (par exemple, à chaque occurrence de -E -, l'un parmi R^{E1}, R^{E2}, R^{E3} et R^{E4} est un méthyle et les autres sont un atome d'hydrogène), ou
dans laquelle les groupements -E- sont dérivés principalement d'oxyde d'éthylène (par exemple, à chaque occurrence de -E -, R^{E1}, R^{E2}, R^{E3} et R^{E4} sont un atome d'hydrogène).

10. Composition de copolymère à blocs selon l'une quelconque des revendications 7 à 9, dans laquelle au moins une partie des groupements -E'- sont dérivés d'oxyde d'éthylène ou dans laquelle au moins une partie des groupements -E'- sont dérivés d'oxyde de propylène.

11. Composition de copolymère à blocs selon l'une quelconque des revendications 7 à 10, **caractérisée en ce que**, en moyenne dans la composition, le rapport tête à queue au sein des groupements 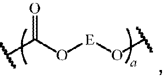 est supérieur au rapport tête à queue au sein des groupements 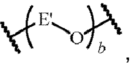 dans laquelle le rapport tête à queue est mesuré tel qu'observé depuis le groupement 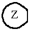 en direction de l'extrémité de chaîne.

12. Composition de copolymère à blocs selon l'une quelconque des revendications 7 à 11, **caractérisée en ce que**, au sein du groupement 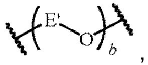 la régiochimie est principalement queue-à-tête.

13. Composition de copolymère à blocs selon l'une quelconque des revendications 7 à 12, **caractérisée en ce que** plus de 50 %, plus de 55 %, plus de 60 %, plus de 65 %, plus de 70 % ou plus de 75 % des extrémités de chaîne ont la structure
